# EUROPEAN PATENT APPLICATION

(11) **EP 4 428 752 A1**
(43) Date of publication of application: **11.09.2024**
(21) Application number: 22906430.8
(22) Date of filing: 09.12.2022
(51) Int. Cl.: G06K 19/077

(54) **MEMORY CARD**

(30) Priority: 15.12.2021 CN 202111538645; 31.03.2022 CN 202210334207
(71) Applicant: Huawei Technologies Co., Ltd., Shenzhen, Guangdong 518129 (CN)
(72) Inventor: FAN, Shunan, Shenzhen, Guangdong 518129 (CN); YANG, Jiangtao, Shenzhen, Guangdong 518129 (CN); ZHOU, Lei, Shenzhen, Guangdong 518129 (CN); ZHANG, Shihao, Shenzhen, Guangdong 518129 (CN)
(74) Representative: Gill Jennings & Every LLP
(86) International application number: PCT/CN2022/137987
(87) International publication number: WO 2023/109682

(57) **Abstract**

This application discloses a memory card. The memory card includes a card body and a card interface, the card interface is fastened to the card body and is exposed on a side of the card body, and a dimension of the card body is the same as a dimension of a card body of a nano-SIM card. The card interface includes 10 gold fingers arranged in an array, and the 10 gold fingers are arranged in two columns and five rows. The memory card can be installed in a card holder assembly that is compatible with the nano-SIM card, so that an electronic device does not need to be additionally provided with a card holder assembly that separately matches the memory card, to help lighten and thin the electronic device.

## Description

This application claims priority to Chinese Patent Application No. 202111538645.7, filed with the China National Intellectual Property Administration on December 15, 2021 and entitled "TERMINAL, CARD CONNECTOR, CARD HOLDER, CARD HOLDER ASSEMBLY, AND MEMORY CARD", which is incorporated herein by reference in its entirety. This application further claims priority to Chinese Patent Application No. 202210334207.7, filed with the China National Intellectual Property Administration on March 31, 2022 and entitled "MEMORY CARD", which is incorporated herein by reference in its entirety.

### TECHNICAL FIELD

This application relates to the field of communication technologies, and in particular, to a memory card.

### BACKGROUND

With development of electronic device products, a plurality of information cards need to be disposed in an electronic device, to meet functional requirements of the electronic device. A mobile phone is used as an example. Usually, a subscriber identification module (Subscriber Identification Module, SIM) card, a memory card, and the like need to be disposed in the mobile phone. Each type of information card needs to match a corresponding card holder assembly. Therefore, a plurality of card holder assemblies usually need to be disposed in the electronic device. Consequently, the card holder assembly needs to occupy a larger board area, and occupy space inside the electronic device. This seriously restricts development of the electronic device in terms of lightness and thinness.

### SUMMARY

This application provides a memory card. The memory card can be installed in a card holder assembly that is compatible with the nano-SIM card, so that an electronic device does not need to be additionally provided with a card holder assembly that separately matches the memory card, to help lighten and thin the electronic device.

According to a first aspect, this application provides a memory card, including a card body and a card interface. The card interface is fastened to the card body and is exposed on a side of the card body, and a dimension of the card body of the memory card is the same as a dimension of a card body of a nano-SIM card. The card body of the memory card includes a first edge, a second edge, a third edge, and a fourth edge, the first edge and the third edge are disposed opposite to each other and extend in a length direction of the memory card, the second edge and the fourth edge are disposed opposite to each other and extend in a width direction of the memory card, a spacing between the second edge and the fourth edge is greater than a spacing between the first edge and the third edge, a corner of the card body of the memory card is a beveled edge, and the beveled edge is disposed between the first edge and the second edge. The first edge and the third edge may be disposed in parallel or approximately in parallel, and the second edge and the fourth edge may be disposed in parallel or approximately in parallel.

The card interface includes 10 gold fingers arranged in an array, the 10 gold fingers are arranged in a first column of gold fingers and a second column of gold fingers in the length direction of the memory card, the first column of gold fingers is located between the second edge and the second column of gold fingers, the first column of gold fingers includes a first gold finger, a third gold finger, a fifth gold finger, a seventh gold finger, and a ninth gold finger that are sequentially arranged in the width direction of the memory card, and the second column of gold fingers includes a second gold finger, a fourth gold finger, a sixth gold finger, an eighth gold finger, and a tenth gold finger that are sequentially arranged in the width direction of the memory card; and the first gold finger is located between the first edge and the third gold finger, and the second gold finger is located between the first edge and the fourth gold finger.

In this application, all the gold fingers of the card interface of the memory card are disposed on a surface of a side of the card body, the dimension of the card body of the memory card is the same as the dimension of the card body of the nano-SIM card, and an arrangement of the gold fingers of the memory card is partially similar to an arrangement manner of the nano-SIM card, so that the memory card is compatible with the nano-SIM card on a same card holder assembly, to reduce a quantity of card holder assemblies of the electronic device, and help lighten and thin the electronic device.

In some possible implementations, the 10 gold fingers are arranged in a first row of gold fingers to a fifth row of gold fingers in the width direction of the memory card; a center spacing between a second row of gold fingers and a third row of gold fingers and a center spacing between the third row of gold fingers and a fourth row of gold fingers are greater than a center spacing between the first row of gold fingers and the second row of gold fingers, and is greater than a center spacing between the fourth row of gold fingers and the fifth row of gold fingers; and a center spacing between the third row of gold fingers and the fourth row of gold fingers is greater than the center spacing between the first row of gold fingers and the second row of gold fingers, and is greater than the center spacing between the fourth row of gold fingers and the fifth row of gold fingers.

In this implementation, an arrangement manner and a center spacing of the 10 gold fingers of the memory card are set, to insert the memory card into the card holder assembly that is compatible with the nano-SIM card, reduce the quantity of card holder assemblies of the electronic device, and help lighten and thin the electronic device.

In some possible implementations, the center spacing between the second row of gold fingers and the third row of gold fingers falls within a range of 1.5 mm to 2.8 mm, the center spacing between the third row of gold fingers and the fourth row of gold fingers falls within the range of 1.5 mm to 2.8 mm, and the center spacing between the first row of gold fingers and the second row of gold fingers falls within a range of 1.0 mm to 1.7 mm, and the center spacing between the fourth row of gold fingers and the fifth row of gold fingers falls within the range of 1.0 mm to 1.7 mm.

In this implementation, when the memory card is inserted into the card holder assembly that is compatible with the nano-SIM card, a risk of a short circuit between the 10 gold fingers of the memory card is low, and an electrical connection relationship between the memory card and the card holder assembly is reliable.

In some possible implementations, a location of the third gold finger corresponds to a location of a first gold finger of the nano-SIM card; a location of the fourth gold finger corresponds to a location of a second gold finger of the nano-SIM card; a location of the fifth gold finger corresponds to a location of a third gold finger of the nano-SIM card; a location of the sixth gold finger corresponds to a location of a fourth gold finger of the nano-SIM card; a location of the seventh gold finger corresponds to a location of a fifth gold finger of the nano-SIM card; and a location of the eighth gold finger corresponds to a location of a sixth gold finger of the nano-SIM card.

In this implementation, the locations of the third gold finger to the eighth gold finger of the memory card correspond to the locations of the first gold finger to the sixth gold finger of the nano-SIM card in a one-to-one correspondence, so that the memory card can be well inserted into the card holder assembly that is compatible with the nano-SIM card.

In some possible implementations, the memory card and the nano-SIM card are able to be installed in a same card holder assembly, and a card connector of the card holder assembly includes a first spring plate to a tenth spring plate that are arranged in an array;
when the memory card is installed in the card holder assembly, the third gold finger is electrically connected to a third spring plate of the card connector, the fourth gold finger is electrically connected to a fourth spring plate of the card connector, the fifth gold finger is electrically connected to a fifth spring plate of the card connector, the sixth gold finger is electrically connected to a sixth spring plate of the card connector, the seventh gold finger is electrically connected to a seventh spring plate of the card connector, and the eighth gold finger is electrically connected to an eighth spring plate of the card connector; and
when the nano-SIM card is installed in the card holder assembly, the first gold finger of the nano-SIM card is electrically connected to the third spring plate of the card connector, the second gold finger of the nano-SIM card is electrically connected to the fourth spring plate of the card connector, the third gold finger of the nano-SIM card is electrically connected to the fifth spring plate of the card connector, the fourth gold finger of the nano-SIM card is electrically connected to the sixth spring plate of the card connector, the fifth gold finger of the nano-SIM card is electrically connected to the seventh spring plate of the card connector, and the sixth gold finger of the nano-SIM card is electrically connected to the eighth spring plate of the card connector.

In some possible implementations, the memory card supports a UFS interface protocol; and four of the 10 gold fingers of the memory card are configured to transmit data signals, one gold finger is configured to transmit a reference clock signal, one gold finger is configured to transmit a first power signal, one gold finger is configured to transmit a ground signal, and one gold finger is configured to transmit a second power signal. In this case, the memory card can support the UFS protocol, to implement basic performance of a high-speed card.

In the first gold finger to the tenth gold finger, the two remaining gold fingers may be suspended; or one of the two remaining gold fingers is suspended, and the other gold finger is configured to transmit a detection signal; or one of the two remaining gold fingers is configured to transmit a detection signal, and the other gold finger is configured to transmit another signal; or the two remaining gold fingers are configured to transmit detection signals. The detection signal may be a special data signal. When an information card is electrically connected to the card connector and communicates with the electronic device, the electronic device may identify, based on the detection signal, whether the inserted information card is a memory card. In some embodiments, the electronic device may further identify a version of an inserted memory card based on the detection signal, or identify an interface protocol of an inserted memory card. The memory card transmits the detection signal through at least one gold finger, to reduce difficulty in identifying the memory card by the electronic device. In some other embodiments, in the first gold finger to the tenth gold finger, one or two of the two remaining gold fingers may alternatively be configured to transmit another signal.

In some possible implementations, the memory card supports a UFS interface protocol; and the first gold finger, the third gold finger, the ninth gold finger, and the tenth gold finger are configured to transmit data signals, the second gold finger is configured to transmit a second power signal, the fourth gold finger is configured to transmit a reference clock signal, the seventh gold finger is configured to transmit a ground signal, and the eighth gold finger is configured to transmit a first power signal.

In some possible implementations, the fifth gold finger and the sixth gold finger are suspended; or at least one of the fifth gold finger or the sixth gold finger is configured to transmit a detection signal.

In some possible implementations, the memory card supports a UFS interface protocol; and the first gold finger, the fifth gold finger, the ninth gold finger, and the tenth gold finger are configured to transmit data signals, the second gold finger is configured to transmit a second power signal, the fourth gold finger is configured to transmit a reference clock signal, the seventh gold finger is configured to transmit a ground signal, and the eighth gold finger is configured to transmit a first power signal.

In some possible implementations, the third gold finger and the sixth gold finger are suspended; or at least one of the third gold finger or the sixth gold finger is configured to transmit a detection signal.

In some possible implementations, the memory card supports a UFS interface protocol; and the first gold finger, the fifth gold finger, the ninth gold finger, and the tenth gold finger are configured to transmit data signals, the second gold finger is configured to transmit a second power signal, the sixth gold finger is configured to transmit a reference clock signal, the seventh gold finger is configured to transmit a ground signal, and the eighth gold finger is configured to transmit a first power signal.

In some possible implementations, the third gold finger and the fourth gold finger are suspended; or at least one of the third gold finger or the fourth gold finger is configured to transmit a detection signal.

In some possible implementations, the memory card is further provided with a high-voltage resistant circuit or a protection switch, and the high-voltage resistant circuit or the protection switch is electrically connected to the fourth gold finger and the tenth gold finger. The high-voltage resistant circuit or the protection switch is configured to prevent a circuit from being burnt when the card interface of the memory card is short-circuited.

In some possible implementations, the memory card supports a PCIe interface protocol or an SD interface protocol; and in the 10 gold fingers of the memory card, four gold fingers are configured to transmit data signals, two gold fingers are configured to transmit clock signals, one gold finger is configured to transmit a first power signal, one gold finger is configured to transmit a ground signal, and one gold finger is configured to transmit a second power signal. In this case, the memory card can support the PCIe interface protocol or the SD interface protocol, to implement the basic performance of the high-speed card.

One of the 10 gold fingers may be suspended. In some other embodiments, in the first gold finger to the tenth gold finger, one of the gold fingers is not suspended, and is configured to transmit a detection signal. The detection signal may be a special data signal. When the information card is electrically connected to the card connector and communicates with the electronic device, the electronic device may identify, based on the detection signal, whether the inserted information card is a memory card. In some embodiments, the electronic device may further identify a version of an inserted memory card based on the detection signal, or identify an interface protocol of an inserted memory card. The memory card transmits the detection signal through one gold finger, to reduce difficulty in identifying the memory card by the electronic device.

In some possible implementations, the memory card supports a PCIe interface protocol or an SD interface protocol; the third gold finger, the sixth gold finger, the ninth gold finger, and the tenth gold finger are configured to transmit data signals, the first gold finger is configured to transmit a second power signal, the seventh gold finger is configured to transmit a ground signal, and the eighth gold finger is configured to transmit a first power signal; and the fifth gold finger is configured to transmit a clock signal, and one of the second gold finger and the fourth gold finger is configured to transmit a clock signal.

In some possible implementations, the other one of the second gold finger and the fourth gold finger is suspended or is configured to transmit a detection signal.

In some possible implementations, the memory card is further provided with a high-voltage resistant circuit or a protection switch, and the high-voltage resistant circuit or the protection switch is electrically connected to the third gold finger and the tenth gold finger. The high-voltage resistant circuit or the protection switch is configured to prevent a circuit from being burnt when the card interface of the memory card is short-circuited.

In some possible implementations, the memory card supports a PCIe interface protocol or an SD interface protocol; the third gold finger, the sixth gold finger, the ninth gold finger, and the tenth gold finger are configured to transmit data signals, the second gold finger is configured to transmit a second power signal, the seventh gold finger is configured to transmit a ground signal, and the eighth gold finger is configured to transmit a first power signal; and the fifth gold finger is configured to transmit a clock signal, and one of the first gold finger and the fourth gold finger is configured to transmit a clock signal.

In some possible implementations, the other one of the first gold finger and the fourth gold finger is suspended or is configured to transmit a detection signal.

In some possible implementations, the memory card supports a PCIe interface protocol or an SD interface protocol; the sixth gold finger, the ninth gold finger, and the tenth gold finger are configured to transmit data signals, one of the first gold finger and the second gold finger is configured to transmit a second power signal, and the other one is configured to transmit a data signal; the seventh gold finger is configured to transmit a ground signal, and the eighth gold finger is configured to transmit a first power signal; and the fifth gold finger is configured to transmit a clock signal, and one of the third gold finger and the fourth gold finger is configured to transmit a clock signal.

In some possible implementations, the other one of the third gold finger and the fourth gold finger is suspended or is configured to transmit a detection signal.

In some possible implementations, the spacing between the first edge and the third edge is 8.8 millimeters, and the spacing between the second edge and the fourth edge is 12.3 millimeters.

According to a second aspect, this application further provides another memory card, including a card body and a card interface. The card interface is fastened to the card body and is exposed on a side of the card body, and a dimension of the card body is the same as a dimension of a card body of a nano-SIM card. The card body of the memory card includes a first edge, a second edge, a third edge, and a fourth edge, the first edge and the third edge are disposed opposite to each other and extend in a length direction of the memory card, the second edge and the fourth edge are disposed opposite to each other and extend in a width direction of the memory card, a spacing between the second edge and the fourth edge is greater than a spacing between the first edge and the third edge, a corner of the card body of the memory card is a beveled edge, and the beveled edge is disposed between the first edge and the second edge.

The card interface includes eight gold fingers arranged in an array, the eight gold fingers are arranged in a first column of gold fingers and a second column of gold fingers in the length direction of the memory card, the first column of gold fingers is located between the second edge and the second column of gold fingers, the first column of gold fingers includes a first gold finger, a third gold finger, a fifth gold finger, and a seventh gold finger that are arranged in the width direction of the memory card, and the second column of gold fingers includes a second gold finger, a fourth gold finger, a sixth gold finger, and an eighth gold finger that are arranged in the width direction of the memory card; and the first gold finger is located between the first edge and the third gold finger, and the second gold finger is located between the first edge and the fourth gold finger.

Locations of the first gold finger to the sixth gold finger correspond to locations of six gold fingers of the nano-SIM card in a one-to-one correspondence. To be specific, a location of the first gold finger corresponds to a location of a first gold finger of the nano-SIM card; a location of the second gold finger corresponds to a location of a second gold finger of the nano-SIM card; a location of the third gold finger corresponds to a location of a third gold finger of the nano-SIM card; a location of the fourth gold finger corresponds to a location of a fourth gold finger of the nano-SIM card; a location of the fifth gold finger corresponds to a location of a fifth gold finger of the nano-SIM card; and a location of the sixth gold finger corresponds to a location of a sixth gold finger of the nano-SIM card.

The memory card supports a UFS interface protocol; and the first gold finger, the fourth gold finger, the seventh gold finger, and the eighth gold finger are configured to transmit data signals, the second gold finger is configured to transmit a reference clock signal, the third gold finger is configured to transmit a second power signal, the fifth gold finger is configured to transmit a ground signal, and the sixth gold finger is configured to transmit a first power signal.

In this application, all the gold fingers of the card interface of the memory card are disposed on a surface of a side of the card body, the dimension of the card body of the memory card is the same as the dimension of the card body of the nano-SIM card, and an arrangement of the gold fingers of the memory card is partially similar to an arrangement manner of the nano-SIM card, so that the memory card is compatible with the nano-SIM card on a same card holder assembly, to reduce a quantity of card holder assemblies of the electronic device, and help lighten and thin the electronic device. In addition, the memory card can support the UFS interface protocol, to implement high-speed transmission.

In some possible implementations, the spacing between the first edge and the third edge is 8.8 millimeters, and the spacing between the second edge and the fourth edge is 12.3 millimeters.

### BRIEF DESCRIPTION OF DRAWINGS

FIG. 1 is a diagram of a structure of an electronic device according to an embodiment of this application;
FIG. 2 is a diagram of a structure of a card holder assembly shown in FIG. 1 in some use states;
FIG. 3 is a diagram of an exploded structure of a card holder shown in FIG. 2;
FIG. 4 is a diagram of a structure of a card tray shown in FIG. 2 from another perspective;
FIG. 5 is a diagram of a structure of a card connector according to an embodiment of this application;
FIG. 6 is a diagram 1 of a structure of the card connector shown in FIG. 5 from another perspective;
FIG. 7 is a diagram of a structure of a conductive body of the card connector shown in FIG. 6;
FIG. 8 is a diagram of an internal structure of a structure of a location A of the card connector shown in FIG. 6;
FIG. 9 is a diagram 2 of a structure of the card connector shown in FIG. 5 from another perspective;
FIG. 10 is a schematic block diagram of a nano-SIM card according to an embodiment of this application;
FIG. 11 is a diagram of a structure of the nano-SIM card shown in FIG. 10 in some embodiments;
FIG. 12 is a diagram of a structure when the nano-SIM card shown in FIG. 11 is connected to the card connector shown in FIG. 5;
FIG. 13 is a schematic block diagram of a first NM card according to an embodiment of this application;
FIG. 14 is a diagram of a structure of the first NM card shown in FIG. 13 in some embodiments;
FIG. 15 is a diagram of a structure when the first NM card shown in FIG. 14 is connected to the card connector shown in FIG. 5;
FIG. 16 is a schematic block diagram of a second NM card according to an embodiment of this application;
FIG. 17 is a diagram of a structure of the second NM card shown in FIG. 16 in some embodiments;
FIG. 18 is a diagram of a structure when the second NM card shown in FIG. 17 is connected to the card connector shown in FIG. 5;
FIG. 19 is a schematic block diagram of a partial circuit of the electronic device shown in FIG. 1 in some embodiments;
FIG. 20 is a diagram of dimensions of the second NM card shown in FIG. 17 in some embodiments;
FIG. 21A is a diagram of dimensions of the second NM card shown in FIG. 16 in some other embodiments;
FIG. 21B is a diagram of another dimension of the second NM card shown in FIG. 21A;
FIG. 22 is a diagram of dimensions of the second NM card shown in FIG. 16 in some other embodiments;
FIG. 23 is a diagram of dimensions of the second NM card shown in FIG. 16 in some other embodiments;
FIG. 24 is a diagram of the second NM card shown in FIG. 17 in some embodiments;
FIG. 25 is a schematic of a partial circuit of the electronic device shown in FIG. 1 in some embodiments;
FIG. 26 is a schematic of a partial circuit of the electronic device shown in FIG. 1 in some other embodiments;
FIG. 27 is a diagram of the second NM card shown in FIG. 17 in some other embodiments;
FIG. 28 is a schematic of a partial circuit of the electronic device shown in FIG. 1 in some other embodiments;
FIG. 29 is a schematic of a partial circuit of the electronic device shown in FIG. 1 in some other embodiments;
FIG. 30 is a diagram of the second NM card shown in FIG. 17 in some other embodiments;
FIG. 31 is a schematic of a partial circuit of the electronic device shown in FIG. 1 in some other embodiments;
FIG. 32 is a schematic of a partial circuit of the electronic device shown in FIG. 1 in some other embodiments;
FIG. 33 is a diagram of the second NM card shown in FIG. 17 in some other embodiments;
FIG. 34 is a schematic of a partial circuit of the electronic device shown in FIG. 1 in some other embodiments;
FIG. 35 is a schematic of a partial circuit of the electronic device shown in FIG. 1 in some other embodiments;
FIG. 36 is a diagram of the second NM card shown in FIG. 17 in some other embodiments;
FIG. 37 is a schematic of a partial circuit of the electronic device shown in FIG. 1 in some other embodiments;
FIG. 38 is a schematic of a partial circuit of the electronic device shown in FIG. 1 in some other embodiments;
FIG. 39 is a diagram of the second NM card shown in FIG. 17 in some other embodiments;
FIG. 40 is a schematic of a partial circuit of the electronic device shown in FIG. 1 in some other embodiments;
FIG. 41 is a schematic of a partial circuit of the electronic device shown in FIG. 1 in some other embodiments;
FIG. 42 is a diagram of the second NM card shown in FIG. 17 in some other embodiments;
FIG. 43 is a schematic of a partial circuit of the electronic device shown in FIG. 1 in some other embodiments;
FIG. 44 is a schematic of a partial circuit of the electronic device shown in FIG. 1 in some other embodiments;
FIG. 45 is a diagram of a structure of a second NM card in another embodiment according to an embodiment of this application;
FIG. 46 is a schematic of a partial circuit of an electronic device in some embodiments according to an embodiment of this application;
FIG. 47 is a schematic of a partial circuit of an electronic device in some embodiments according to an embodiment of this application;
FIG. 48 is a diagram of a connection structure between the second NM card shown in FIG. 45 and the card connector shown in FIG. 5;
FIG. 49 is a schematic of a partial circuit of the electronic device shown in FIG. 1 in some other embodiments; and
FIG. 50 is a schematic of a partial circuit of the electronic device shown in FIG. 1 in some other embodiments.

### DESCRIPTION OF EMBODIMENTS

The following describes the technical solutions in embodiments of this application with reference to the accompanying drawings. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In this specification, "at least partially" includes two cases: "partially" and "all". In this specification, "plurality of" means two or more, and "plurality of pieces of" means two or more pieces.

In the following, terms such as "first" and "second" are used only for description purposes, and cannot be understood as implying or implying relative importance or implicitly indicating a quantity of indicated technical features. Therefore, a feature limited by "first" or "second" may explicitly or implicitly include one or more features.

Orientation terms mentioned in embodiments of this application, for example, "up", "down", "front", "back", "left", "right", "inside", "outside", "side face", "top", and "bottom", are merely directions in the accompanying drawings. Therefore, the orientation terms are used to better and more clearly describe and understand embodiments of this application, instead of indicating or implying that a specified apparatus or element needs to have a specific orientation, and be constructed and operated in the specific orientation. Therefore, this cannot be understood as a limitation on embodiments of this application.

In the description of embodiments of this application, it should be noted that, unless otherwise specified and limited, terms "installation", "connecting", "connection", and "disposed on..." should be understood in a broad sense. For example, "connection" may be a detachable connection, or may be an undetachable connection, or may be a direct connection, or may be an indirect connection by using an intermediate medium.

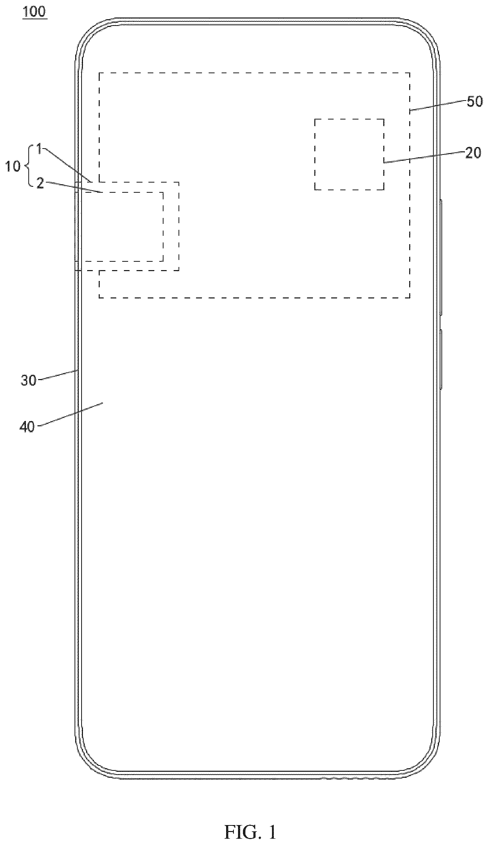

FIG. 1 is a diagram of a structure of an electronic device 100 according to an embodiment of this application. The electronic device 100 may be an electronic product such as a mobile phone, a tablet, or an intelligent wearable device. In this embodiment of this application, that the electronic device 100 is a mobile phone is used as an example for illustration.

In some embodiments, the electronic device 100 may include a card holder assembly 10, a processor 20, a housing 30, a display 40, and a printed circuit board 50. The display 40 may be installed in the housing 30, and the display 40 is configured to display an image, a video, or the like. The printed circuit board 50 is installed on an inner side of the housing 30, and the processor 20 may be fastened to the printed circuit board 50, and is electrically connected to the printed circuit board 50. The card holder assembly 10 includes a card holder 1 and a card tray 2. The card holder 1 may be installed on the inner side of the housing 30, and the card holder 1 may be further fastened to the printed circuit board 50, and is electrically connected to the printed circuit board 50. The processor 20 may be electrically connected to the card holder 1 through the printed circuit board 50. The card tray 2 is detachably inserted into the card holder 1. The card tray 2 is configured to install one or more information cards. The card tray 2 may carry the information card and is inserted into the card holder 1, so that the information card is inserted into the card holder assembly 10, and the information card communicates with the electronic device 100.

For example, the information card may be a nano-SIM (subscriber identification module, subscriber identification module) card, a nano memory card, or a nano two-in-one card. The nano-SIM card is also referred to as a 4FF card, for example, a SIM card with a card body whose dimension is that a length is 12.30 mm, a width is 8.80 mm, and a thickness is 0.67 mm in the specification ETSI TS 102 221 V11.0.0. A user may insert the nano-SIM card into the card holder assembly 10, the nano-SIM card communicates with the processor 20, and the electronic device 100 interacts with a network through the nano-SIM card, to implement functions such as a call function and a data communication function. The nano memory card may also be briefly referred to as an NM (nano memory, nano) card. The user may alternatively insert the NM card into the card holder assembly 10, and the NM card communicates with the processor 20, to implement a data storage function. For example, files such as music and a video may be stored in the NM card. The nano two-in-one card may include a SIM card circuit and a memory card circuit. The SIM card circuit is configured to support the functions such as the call function and the data communication function, and the memory card circuit is configured to support the data storage function. The user may alternatively insert the nano two-in-one card into the card holder assembly 10, and the nano two-in-one card communicates with the processor 20, to implement functions such as the call function, the data communication function, and the data storage function.

In some embodiments, the electronic device 100 may further include one or more of an internal memory, a universal serial bus (universal serial bus, USB) port, a charging management module, a power management module, a battery, an antenna, a mobile communication module, a wireless communication module, an audio module, a speaker, a receiver, a microphone, a headset jack, a sensor module, a button, a motor, an indicator, a camera, and the like. In some other embodiments, the electronic device 100 may have more or fewer components than those in the foregoing solutions, may combine two or more components, or may have different component configurations. The various components may be implemented in hardware, software, or a combination of hardware and software including one or more signal processing and/or application-specific integrated circuits.

In some embodiments, the processor 20 may include one or more processing units. For example, the processor 20 may include one or more of an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and the like. This is not strictly limited in embodiments of this application. Different processing units may be independent devices, or may be integrated into one or more processors 20. The processor 20 may further include one or more interfaces, and the processor 20 may communicate with another component of the electronic device 100 through one or more interfaces.

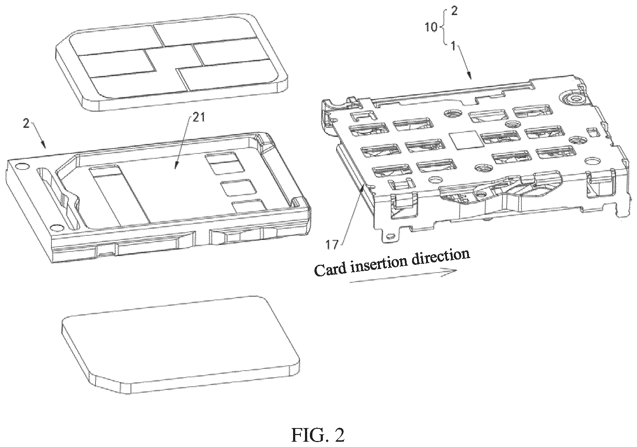

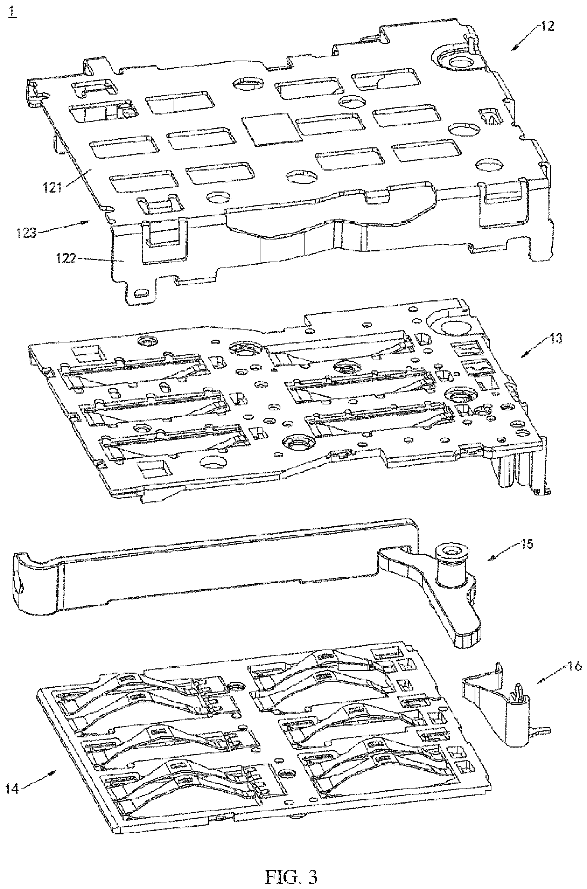

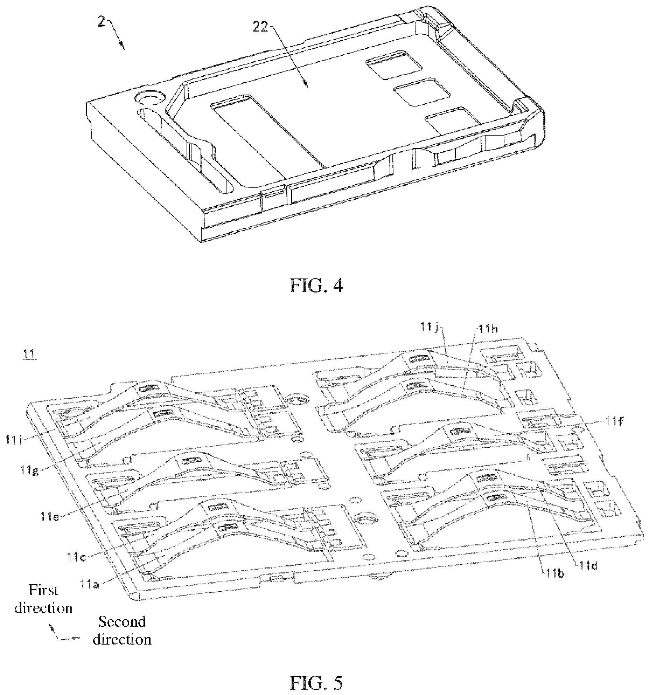

Refer to FIG. 2 to FIG. 4 together. FIG. 2 is a diagram of a structure of a card holder assembly 10 shown in FIG. 1 in some use states. FIG. 3 is a diagram of an exploded structure of a card holder 1 shown in FIG. 2. FIG. 4 is a diagram of a structure of a card tray 2 shown in FIG. 2 from another perspective.

In some embodiments, the card holder 1 may include a holder body 12, a first card connector 13, a second card connector 14, an ejection component 15, and an insertion detection spring plate 16. The holder body 12 is usually in a cover shape, and the holder body 12 includes a top plate 121 and a plurality of side plates 122 connected to the top plate 121. The top plate 121 and the plurality of side plates 122 jointly enclose inner space 123 of the holder body 12. The first card connector 13 is located in the inner space 123 of the holder body 12, and is fastened to the holder body 12. The first card connector 13 and the top plate 121 are disposed opposite to each other. A structure of the second card connector 14 may be the same as or different from a structure of the first card connector 13. The second card connector 14 is located in the inner space 123 of the holder body 12, the second card connector 14 is located on a side that is of the first card connector 13 and that is opposite to the top plate 121, the second card connector 14 and the first card connector 13 are disposed opposite to each other, and a gap is formed between the second card connector 14 and the first card connector 13. The first card connector 13, the second card connector 14, and the side plate 122 of the holder body 12 jointly enclose a card slot 17 of the card holder 1. One end of the card slot 17 is open and forms an opening, and the other end of the card slot 17 forms a bottom of the card slot 17.

When the card holder 1 is installed in an electronic device 100, end portions that are of the plurality of side plates 122 and that are away from the top plate 121 are fastened to a printed circuit board 50 of the electronic device 100. A plurality of legs of the first card connector 13 are fastened to and are electrically connected to the printed circuit board 50, so that the first card connector 13 can be electrically connected to a processor 20 of the electronic device 100. The second card connector 14 may be fastened to the printed circuit board 50, to be fastened to the holder body 12 through the printed circuit board 50. Alternatively, the second card connector 14 may be directly and fastened to the holder body 12. A plurality of legs of the second card connector 14 are fastened to and are electrically connected to the printed circuit board 50, so that the second card connector 14 can be electrically connected to the processor 20 of the electronic device 100.

The card tray 2 may have a first installation slot 21 and a second installation slot 22 that are disposed opposite to each other, and an opening of the first installation slot 21 and an opening of the second installation slot 22 are respectively located on surfaces of two sides of the card tray 2. The first installation slot 21 and the second installation slot 22 each are configured to install an information card. For example, in FIG. 2 and FIG. 4, two information cards may be respectively installed in the first installation slot 21 and the second installation slot 22. Slot dimensions of the first installation slot 21 and the second installation slot 22 may be the same or similar, and card bodies of the two information cards installed in the first installation slot 21 and the second installation slot 22 have a same dimension. In some other embodiments, slot dimensions of the first installation slot 21 and the second installation slot 22 may alternatively be different, and card bodies of the two information cards installed in the first installation slot 21 and the second installation slot 22 have different dimensions.

The slot dimensions of the first installation slot 21 and the second installation slot 22 match the dimensions of card bodies of the corresponding information cards. For example, the slot dimensions of the first installation slot 21 and the second installation slot 22 may be slightly larger than the dimensions of the card bodies of the corresponding information cards, but a dimension difference is not large, so that the information card can be smoothly installed in the first installation slot 21 and the second installation slot 22, and installation locations are stable.

The card tray 2 may separately inserted into the card slot 17 through the opening of the card slot 17, or carry an information card and is inserted into the card slot 17 through the opening of the card slot 17. A direction (that is, a card insertion direction) in which the card tray 2 and/or the information card are/is inserted into the card slot 17 is a direction from the opening of the card slot 17 to the bottom of the card slot 17. A dimension of the card slot 17 matches a dimension of the card tray 2. For example, the dimension of the card slot 17 may be slightly greater than the dimension of the card tray 2, but a difference between the dimension of the card slot 17 and the dimension of the card tray 2 is not large. There is a specific matching gap between the card tray 2 and a slot wall of the card slot 17, so that the card tray 2 can be smoothly inserted into the card slot 17, and can be stably installed in the card slot 17. When the card tray 2 carries the information card and is inserted into the card slot 17, the information card installed in the card tray 2 is electrically connected to the first card connector 13 or the second card connector 14, to be electrically connected to the electronic device 100.

The ejection component 15 may be installed in the holder body 12 and/or the first card connector 13. When the card tray 2 is inserted into the card slot 17, a user may control the ejection component 15, so that the ejection component 15 ejects a part of the card tray 2 out of the card slot 17, to help the user remove the card tray 2. For example, the insertion detection spring plate 16 may be installed in the first card connector 13, and is electrically connected to the printed circuit board 50. The insertion detection spring plate 16 may be at least partially located at the bottom of the card slot 17. The insertion detection spring plate 16 may be configured to detect whether the card tray 2 is inserted into the card slot 17.

In some other embodiments, the card holder 1 may alternatively be provided with one card connector, the card holder assembly 10 is configured to install an information card, and a structure of the card tray 2 is adaptively adjusted. In some other embodiments, the card holder 1 may alternatively be provided with three or more card connectors, so that the card holder assembly 10 can be configured to install at least three information cards. The structure of the card tray 2 is adaptively adjusted. A quantity of card connectors of the card holder 1, a location, a specific structure of the card tray 2, and the like are not strictly limited in embodiments of this application.

In some other embodiments, the card holder 1 may alternatively be provided with an ejection component 15 and/or an insertion detection spring plate 16 that have/has a structure different from the structure shown in the figure. In some other embodiments, the card holder assembly 10 may include more or fewer components than those in the foregoing embodiments. This is not strictly limited in embodiments of this application.

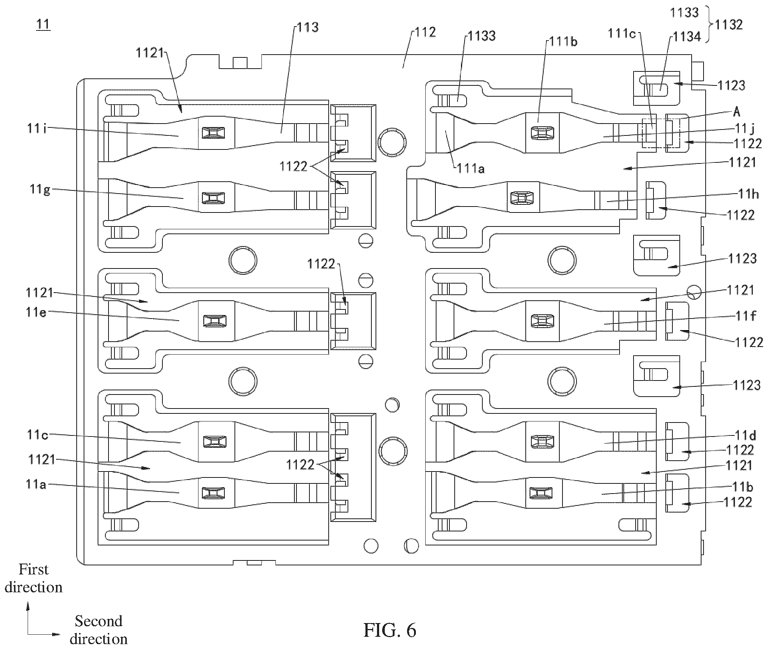

Refer to FIG. 5 and FIG. 6 together. FIG. 5 is a diagram of a structure of a card connector 11 according to an embodiment of this application. FIG. 6 is a diagram 1 of a structure of the card connector 11 shown in FIG. 5 from another perspective. For example, the card connector 11 shown in FIG. 5 may be used in the card holder 1 shown in FIG. 3, and is used as the first card connector 13 and/or the second card connector 14.

This embodiment of this application provides a card connector 11. The card connector 11 may be used in a card holder 1 of an electronic device 100, and the card connector 11 is configured to be connected to an information card. The card connector 11 includes a plurality of spring plates. When the card connector 11 is connected to the information card, the spring plate abuts against the information card.

In some embodiments, the card connector 11 includes 10 spring plates arranged in an array, and the 10 spring plates are separated from each other. The 10 spring plates may be roughly arranged in an array structure of 2 x 5. For example, the 10 spring plates are arranged in a first row of spring plates to a fifth row of spring plates in a first direction, and are arranged in a first column of spring plates and a second column of spring plates in a second direction. The first column of spring plates includes a first spring plate 11a, a third spring plate 11c, a fifth spring plate 11e, a seventh spring plate 11g, and a ninth spring plate 11i that are arranged in the first direction, and the second column of spring plates includes a second spring plate 11b, a fourth spring plate 11d, a sixth spring plate 11f, an eighth spring plate 11h, and a tenth spring plate 11j that are arranged in the first direction. The first spring plate 11a and the second spring plate 11b are located in the first row of spring plates, the third spring plate 11c and the fourth spring plate 11d are located in a second row of spring plates, the fifth spring plate 11e and the sixth spring plate 11f are located in a third row of spring plates, the seventh spring plate 11g and the eighth spring plate 11h are located in a fourth row of spring plates, and the ninth spring plate 11i and the tenth spring plate 11j are located in the fifth row of spring plates.

When the plurality of spring plates are arranged in a column in the first direction, points of center of the plurality of spring plates in a same column (that is, points of center of parts that are of the spring plates and that are used to abut against the information card) may be aligned in the first direction, or may not be aligned and slightly staggered. This is not strictly limited in embodiments of this application. When the plurality of spring plates are arranged in a row in the second direction, points of center of two spring plates in a same row (that is, points of center of parts that are of the spring plates and that are used to abut against the information card) may be aligned in the second direction, or may not be aligned and slightly staggered. This is not strictly limited in embodiments of this application.

Refer to FIG. 2, FIG. 3, FIG. 5, and FIG. 6 together. When the card connector 11 is used in a card holder assembly 10, a card insertion direction in which the information card is inserted into a card slot 17 of the card holder assembly 10 is parallel to the second direction. In other words, an insertion direction in which the information card is connected to the card connector 11 is parallel to the second direction. In a process of inserting the information card, the information card contacts a structure that is of the card connector 11 and that is arranged on a front side, and then contacts a structure that is of the card connector 11 and that is arranged on a back side. When the card connector 11 is installed in the card holder 1, the structure that is of the card connector 11 and that is arranged on the front side is close to an opening of the card slot 17, and the structure that is of the card connector 11 and that is arranged on the back side is away from the opening of the card slot 17. For example, the second column of spring plates of the card connector 11 may be located on a back side of the first column of spring plates, and the second column of spring plates is located away from the opening of the card slot 17 of the card holder assembly 10 relative to the first column of spring plates. In some other embodiments, the second column of spring plates of the card connector 11 is located close to the opening of the card slot 17 of the card holder assembly 10 relative to the first column of spring plates. This solution is not described in this embodiment of this application.

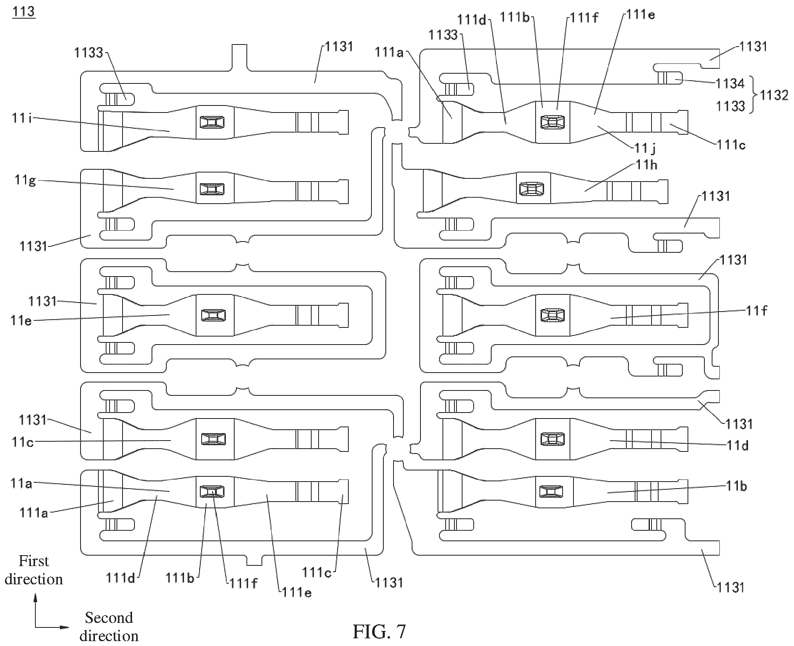

Refer to FIG. 6 and FIG. 7 together. FIG. 7 is a diagram of a structure of a conductive body 113 of the card connector 11 shown in FIG. 6.

In some embodiments, the card connector 11 includes an insulation body 112 and the conductive body 113. The insulation body 112 may be approximately in a plate shape, and the insulation body 112 is further provided with a plurality of hollow regions separated from each other. For example, the insulation body 112 may include six first hollow regions 1121, a plurality of second hollow regions 1122, and a plurality of third hollow regions 1123. The six first hollow regions 1121 may be arranged in two columns and three rows, and include a first column of first hollow regions 1121 and a second column of first hollow regions 1121 that are located on a back side of the first column of first hollow regions 1121. The second hollow regions 1122 may be arranged in two columns, and the two columns of second hollow regions 1122 are respectively located on back sides of the two columns of first hollow regions 1121. The third hollow regions 1123 may be arranged in one row, and are located on a back side of the second column of first hollow regions 1121.

For example, the conductive body 113 is built into the insulation body 112. The conductive body 113 may be formed by stamping an integral metal plate member. The conductive body 113 includes 10 spring plates and 10 fastening members 1131, the 10 spring plates may include the first spring plate 11a to the tenth spring plate 11j, the 10 fastening members 1131 are connected to the 10 spring plates in a one-to-one correspondence, and the fastening member 1131 and the spring plate are conductive materials. The conductive body 113 includes 10 conductive blocks, a fastening member 1131 and a spring plate that correspond to each other are located in a same conductive block, and the 10 conductive blocks are separated from each other. The 10 fastening members 1131 are built into the insulation body 112, to be fastened to the insulation body 112, and the 10 spring plates are respectively fastened to the insulation body 112 through the 10 fastening members 1131.

For example, each spring plate (for brevity of the accompanying drawings, one spring plate (for example, 11j) is marked) includes a fastening end 111a, an abutment end 111b, and a movable end 111c. The fastening end 111a, the abutment end 111b, and the movable end 111c are sequentially arranged in an extension direction of the spring plate, and the extension direction of the spring plate is perpendicular to the first direction, in other words, parallel to the second direction. The fastening end 111a is connected to the fastening member 1131, and the fastening end 111a is fastened to the insulation body 112 through the fastening member 1131. The abutment end 111b protrudes relative to a surface of a side of the insulation body 112, to elastically abut against an information card when the card connector 11 is connected to the information card. The movable end 111c is movably installed on the insulation body 112, and the movable end 111c can move in the second direction relative to the insulation body 112.

In this embodiment, when the card connector 11 is connected to the information card, the abutment end 111b abuts against the information card, the abutment end 111b moves toward the insulation body 112, the movable end 111c is displaced relative to the insulation body 112, the spring plate is smoothly deformed, and an elastic force of the spring plate abutting against the information card is moderate, so that the information card can be smoothly connected to the card connector 11, a risk of damage to the information card due to an excessive elastic force of the spring plate can be reduced, and reliability is improved.

The spring plate further includes a first connecting segment 111d and a second connecting segment 111e, the first connecting segment 111d is connected to the fastening end 111a and the abutment end 111b, the second connecting segment 111e is connected to the abutment end 111b and the movable end 111c, and the abutment end 111b protrudes relative to the first connecting segment 111d and the second connecting segment 111e. In other words, in a thickness direction (perpendicular to the first direction and the second direction) of the card connector 11, the abutment end 111b, the first connecting segment 111d and the second connecting segment 111e, and the fastening end 111a and the movable end 111c are located from top to bottom. When the spring plate is connected to the information card, the abutment end 111b abuts against the spring plate, the spring plate is electrically connected to the information card, and the first connecting segment 111d, the fastening end 111a, the second connecting segment 111e, and the movable end 111c are not in contact with the information card, and have a gap with the information card.

The abutment end 111b may include an abutment contact 111f that protrudes, and the abutment contact 111f has a specific contact area. When the card connector 11 is connected to the information card, the abutment contact 111f abuts against a gold finger of the information card, so that the card connector 11 is electrically connected to the information card.

For example, the third spring plate 11c to the eighth spring plate 11h may be respectively located in the six first hollow regions 1121, the first spring plate 11a and the third spring plate 11c may be located in a same first hollow region 1121, the second spring plate 11b and the fourth spring plate 11d may be located in a same first hollow region 1121, the seventh spring plate 11g and the ninth spring plate 11i may be located in a same first hollow region 1121, and the eighth spring plate 11h and the tenth spring plate 11j may be located in a same first hollow region 1121.

Each fastening member 1131 encloses or semi-encloses a corresponding spring plate. A fastening member 1131 corresponding to a spring plate separately located in a first hollow region 1121 completely encloses the spring plate. For example, the fifth spring plate 11e is separately located in a first hollow region 1121, and a fastening member 1131 connected to the fifth spring plate 11e encloses the fifth spring plate 11e. The sixth spring plate 11f is separately located in a first hollow region 1121, and a fastening member 1131 connected to the sixth spring plate 11f encloses the sixth spring plate 11f.

Two fastening members 1131 corresponding to two spring plates that share a same first hollow region 1121 tend to converge, jointly include the two spring plates, and respectively semi-enclose corresponding spring plates. For example, the first spring plate 11a and the third spring plate 11c are located in a same first hollow region 1121. A fastening member 1131 connected to the first spring plate 11a and a fastening member 1131 connected to the third spring plate 11c jointly enclose the first spring plate 11a and the third spring plate 11c. The fastening member 1131 connected to the first spring plate 11a semi-encloses the first spring plate 11a, and the fastening member 1131 connected to the third spring plate 11c semi-encloses the third spring plate 11c. The seventh spring plate 11g and the ninth spring plate 11i are located in a same first hollow region 1121. A fastening member 1131 connected to the seventh spring plate 11g and a fastening member 1131 connected to the ninth spring plate 11i jointly enclose the seventh spring plate 11g and the ninth spring plate 11i. The fastening member 1131 connected to the seventh spring plate 11g semi-encloses the seventh spring plate 11g, and the fastening member 1131 connected to the ninth spring plate 11i semi-encloses the ninth spring plate 11i. For a relationship between a combination of the second spring plate 11b and the fourth spring plate 11d and fastening members 1131 corresponding to the second spring plate 11b and the fourth spring plate 11d and a relationship between a combination of the eighth spring plate 11h and the tenth spring plate 11j and fastening members 1131 corresponding to the eighth spring plate 11h and the tenth spring plate 11j, refer to the foregoing descriptions. Details are not described herein again.

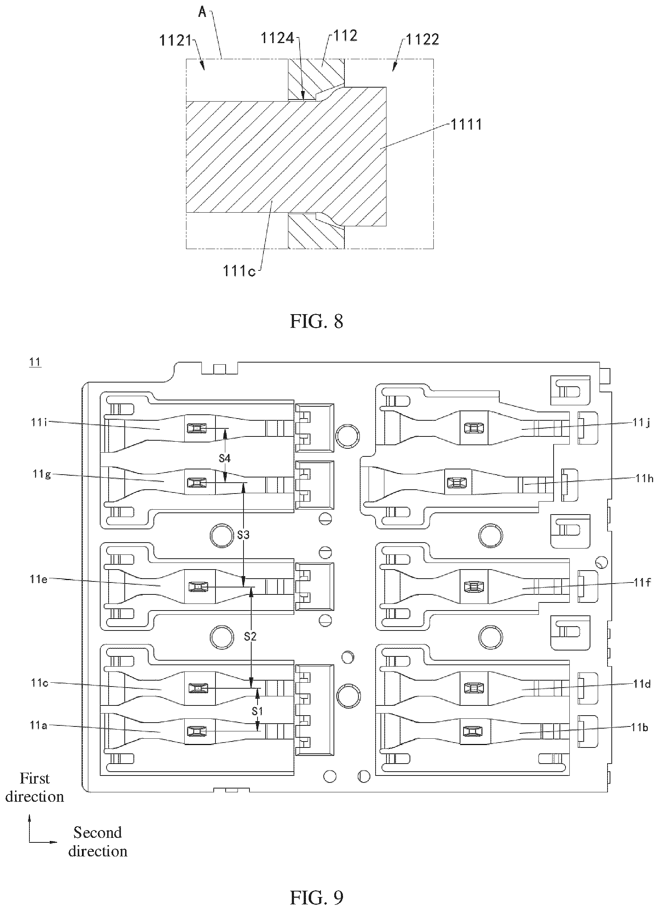

Refer to FIG. 6 and FIG. 8 together. FIG. 8 is a diagram of an internal structure of a structure of a location A of the card connector 11 shown in FIG. 6. FIG. 8 shows a connection structure between a movable end 111c of a spring plate and an insulation body 112. The tenth spring plate 11j in FIG. 6 is used as an example for marking. In some embodiments, the insulation body 112 further includes a communicating hole 1124, and the communicating hole 1124 communicates a first hollow region 1121 and a second hollow region 1122 that are adjacent to the communicating hole 1124. The movable end 111c of the spring plate is inserted into the communicating hole 1124, and an end of the movable end 111c includes a stop block 1111. The stop block 1111 and the insulation body 112 form an anti-detachment structure through matching. In this embodiment, the anti-detachment structure can effectively prevent the movable end 111c of the spring plate from being detached from the insulation body 112, so that reliability of connecting the spring plate and the insulation body 112 is improved, and reliability of the card connector 11 is high.

For example, a fastening end 111a and an abutment end 111b of the spring plate are located in the first hollow region 1121, the movable end 111c of the spring plate is inserted into the communicating hole 1124, and extends to the second hollow region 1122 through the communicating hole 1124, and the stop block 1111 is at least partially located in the second hollow region 1122. A width of the communicating hole 1124 in a card location direction is less than a width of the stop block 1111 in the card location direction, and the card location direction may be any direction. Provided that a dimension of the communicating hole 1124 in a direction is less than a dimension of the stop block 1111 in the same direction, the stop block 1111 and the insulation body 112 may form the anti-detachment structure through matching, to prevent the movable end 111c of the spring plate from being detached from the insulation body 112 when the stop block 1111 passes through the communicating hole 1124. For example, in a direction perpendicular to an extension direction of the spring plate, namely, in the first direction, a width of the stop block 1111 is greater than a width of the communicating hole 1124. It may be understood that a shape and a dimension of the communicating hole 1124 and a shape and a dimension of the stop block 1111 are not strictly limited in embodiments of this application.

Refer to FIG. 6 and FIG. 7 again. In some embodiments, each conductive block of the conductive body 113 further includes a leg 1132 (for brevity of the accompanying drawings, some legs 1132 are marked), the leg 1132 is fastened to the fastening member 1131, and the leg 1132 is configured to be soldered to a printed circuit board 50 (refer to FIG. 1), so that the card connector 11 is fastened to the printed circuit board 50 and the spring plate is electrically connected to the printed circuit board 50. There is at least one leg 1132 in each conductive block.

For example, at least one leg 1132 of each conductive block includes a first leg 1133, and the first leg 1133 is disposed close to the fastening end 111a of the spring plate. In other words, the first leg 1133 is connected to an end portion that is of the fastening member 1131 and that is close to the fastening end 111a of the spring plate. In a card insertion process of the information card, a force of friction is generated between the information card and the abutment end 111b of the spring plate. The force of friction enables the spring plate to tend to move in the card insertion direction (namely, the second direction), and the fastening end 111a of the spring plate is subject to a pulling force. The conductive block is provided with the first leg 1133 close to the fastening end 111a of the spring plate, and the first leg 1133 is soldered to the printed circuit board 50, so that a force exerted on the spring plate is transferred from the first leg 1133 to the printed circuit board 50. The fastening member 1131 of the conductive block is not prone to be deformed, and a connection relationship between the fastening member 1131 and the insulation body 112 is stable, to help improve reliability of the card connector 11 and the card holder assembly 10. It may be understood that, in a card removal process of the information card, the first leg 1133 can also transfer a stress.

At least one leg 1132 of some conductive blocks may further include a second leg 1134, and the second leg 1134 is disposed close to the movable end 111c of the spring plate. In other words, the second leg 1134 is connected to an end portion that is of the fastening member 1131 and that is close to the movable end 111c of the spring plate. In the card removal process of the information card, a force of friction is generated between the information card and the abutment end 111b of the spring plate. The force of friction enables the spring plate to tend to move in the card removal direction (namely, a reverse direction of the second direction). The movable end 111c of the spring plate generates a pulling force on the insulation body 112 by using the anti-detachment structure. The conductive block is provided with the second leg 1134 close to the movable end 111c of the spring plate, and the second leg 1134 is soldered to the printed circuit board 50, so that a force exerted on the insulation body 112 is transferred from the second leg 1134 to the printed circuit board 50. The fastening member 1131 of the conductive block is not prone to be deformed, and a connection relationship between the fastening member 1131 and the insulation body 112 is stable, to help improve reliability of the card connector 11 and the card holder assembly 10. It may be understood that, in the card removal process of the information card, the first leg 1133 can also transfer a stress. In the card insertion process of the information card, both the first leg 1133 and the second leg 1134 can transfer a stress.

In some other embodiments, the leg 1132 of the conductive block may also be connected to another location of the fastening member 1131, for example, a middle part of the fastening member 1131. This is not strictly limited in embodiments of this application.

For example, some of a plurality of leg 1132 of the conductive body 113 may be located in the first hollow region 1121, and some legs 1132 may be located in a third hollow region 1123. For an arrangement location, refer to FIG. 6. In some other embodiments, the plurality of legs 1132 of the conductive body 113 may also have another arrangement manner. For example, if the plurality of legs 1132 of the conductive body 113 are all located in the first hollow region 1121, the insulation body 112 may not be provided with the third hollow region 1123. This is not strictly limited in embodiments of this application.

FIG. 9 is a diagram 2 of a structure of the card connector shown 11 in FIG. 5 from another perspective.

In some embodiments, a center spacing S2 between a second row of spring plates (11c and 11d) and a third row of spring plates (11e and 11f) is greater than a center spacing S1 between a first row of spring plates (11a and 11b) and the second row of spring plates (11c and 11d), and is greater than a center spacing S4 between a fourth row of spring plates (11g and 11h) and a fifth row of spring plates (11i and 11j). A center spacing S3 between the third row of spring plates (11e and 11f) and the fourth row of spring plates (11g and 11h) is greater than the center spacing S1 between the first row of spring plates (11a and 11b) and the second row of spring plates (11c and 11d), and is greater than the center spacing S4 between the fourth row of spring plates (11g and 11h) and the fifth row of spring plates (11i and 11j).

In other words, the center spacing S2 between the second row of spring plates (11c and 11d) and the third row of spring plates (11e and 11f) and the center spacing S3 between the third row of spring plates (11e and 11f) and the fourth row of spring plates (11g and 11h) are large, and the center spacing S1 between the first row of spring plates (11a and 11b) and the second row of spring plates (11c and 11d) and the center spacing S4 between the fourth row of spring plates (11g and 11h) and the fifth row of spring plates (11i and 11j) are small.

When two spring plates in a same row are aligned, a center spacing between two rows of spring plates is a center spacing between two spring plates located in a same column. The center spacing between the two spring plates is a spacing, in a first direction, between points of center of parts (for example, an abutment contact 111f) that are of the two spring plates and that are used to abut against the information card. When two spring plates in a same row are slightly staggered in a second direction, a center spacing between two rows of spring plates is an average value of a center spacing between two spring plates in a first column of spring plates and a center spacing between two spring plates in a second column of spring plates.

As shown in FIG. 9, a center spacing between the third spring plate 11c and the fifth spring plate 11e is greater than a center spacing between the first spring plate 11a and the third spring plate 11c and a center spacing between the seventh spring plate 11g and the ninth spring plate 11i; a center spacing between the fifth spring plate 11e and the seventh spring plate 11g is greater than the center spacing between the first spring plate 11a and the third spring plate 11c and the center spacing between the seventh spring plate 11g and the ninth spring plate 11i; a center spacing between the fourth spring plate 11d and the sixth spring plate 11f is greater than a center spacing between the second spring plate 11b and the fourth spring plate 11d and a center spacing between the eighth spring plate 11h and the tenth spring plate 11j; and a center spacing between the sixth spring plate 11f and the eighth spring plate 11h is greater than a center spacing between the second spring plate 11b and the fourth spring plate 11d and a center spacing between the eighth spring plate 11h and the tenth spring plate 11j.

For example, the center spacing S2 between the second row of spring plates (11c and 11d) and the third row of spring plates (11e and 11f) may fall within a range of 1.0 mm to 3.0 mm, for example, may fall within a range of 1.5 mm to 2.8 mm, for example, may be 2.48 mm, 2.54 mm, 2.59 mm, or 2.63 mm; and/or the center spacing S3 between the third row of spring plates (11e and 11f) and the fourth row of spring plates (11g and 11b) may fall within a range of 1.0 mm to 3.0 mm, for example, may fall within the range of 1.5 mm to 2.8 mm, for example, may be 2.48 mm, 2.54 mm, 2.59 mm, or 2.63 mm; and/or the center spacing S1 between the first row of spring plates (11a and 11b) and the second row of spring plates (11c and 11d) may fall within a range of 1.0 mm to 1.7 mm, for example, may be 1.03 mm, 1.07 mm, or 1.12 mm; and/or the center spacing S4 between the fourth row of spring plates (11g and 11h) and the fifth row of spring plates (11i and 11j) may fall within the range of 1.0 mm to 1.7 mm, for example, may be 1.32 mm, 1.37 mm, or 1.41 mm.

The center spacing S2 between the second row of spring plates (11c and 11d) and the third row of spring plates (11e and 11f) and the center spacing S3 between the third row of spring plates (11e and 11f) and the fourth row of spring plates (11g and 11h) may be equal or may be unequal. This is not strictly limited in embodiments of this application. A center spacing between two corresponding groups of spring plates in two adjacent rows of spring plates may be equal or may be unequal. This is not strictly limited in embodiments of this application. For example, in the first row of spring plates (11a and 11b) and the second row of spring plates (11c and 11d), the center spacing between the first spring plate 11a and the third spring plate 11c and the center spacing between the second spring plate 11b and the fourth spring plate 11d may be equal or may be unequal.

In this embodiment of this application, an arrangement manner and a center spacing of a plurality of spring plates are set, so that the plurality of spring plates can form a plurality of combinations. A quantity and locations of spring plates in the plurality of combinations can match a quantity and locations of gold fingers of a plurality of types of information cards, so that the card connector 11 can communicate with different types of information cards, to implement multi-card compatibility and good expandability. Therefore, when the card connector 11 is used in a card holder assembly 10 of an electronic device 100, the electronic device 100 can match a plurality of types of information cards by using a same card holder assembly 10, to reduce a quantity of card holder assemblies 10, reduce occupation of internal space of the electronic device 100, and help lighten and thin the electronic device 100.

In some embodiments, the card connector 11 may communicate with a nano-SIM card having six gold fingers (which may also be referred to as terminals, ports, metal contacts), or may communicate with a second NM card having 10 gold fingers, eight gold fingers, or another quantity of gold fingers, to be compatible with the nano-SIM card and the second NM card. A dimension of a card body of the second NM card is the same as a dimension of a card body of the nano-SIM card. In this application, that dimensions of card bodies of two information cards are the same may mean that the dimensions of the card bodies of the two information cards are consistent, or may be that the dimensions of the card bodies of the two information cards are close, and the two information cards can be both stably placed in a same installation slot of a card tray 2 of the card holder assembly 10.

In some other embodiments, the card connector 11 may communicate with a nano-SIM card having six gold fingers, or may communicate with a second NM card having 10 gold fingers, eight gold fingers, or another quantity of gold fingers, or may communicate with a first NM card having eight gold fingers, to be compatible with the nano-SIM card, the second NM card, and the first NM card. The first NM card is a first-generation NM card, the second NM card is a second-generation NM card, and a transmission rate of the second NM card is greater than a transmission rate of the first NM card. A dimension of a card body of the first NM card may be the same as a dimension of a card body of the nano-SIM card.

In some other embodiments, the card connector 11 may communicate with a nano-SIM card having six gold fingers, or may communicate with a two-in-one card having at least 10 gold fingers, to be compatible with the nano-SIM card and the two-in-one card. A dimension of a card body of the two-in-one card is the same as a dimension of a card body of the nano-SIM card.

In some other embodiments, the card connector 11 may be further compatible with a first NM card and/or a second NM card when being compatible with a nano-SIM card and a two-in-one card. This is not strictly limited in embodiments of this application.

This application provides a nano-SIM card. The nano-SIM card can match the card connector 11. The following uses an example to describe a structure of the nano-SIM card and a connection structure of the nano-SIM card and the card connector 11.

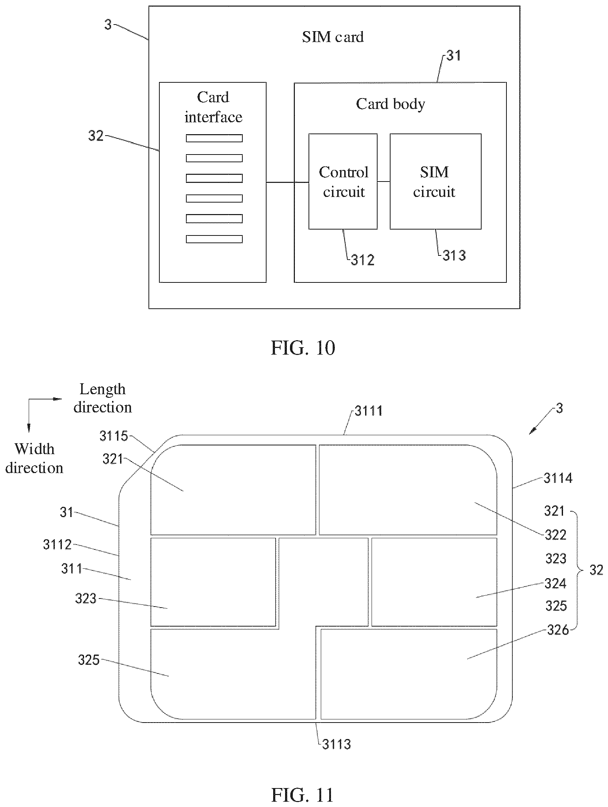

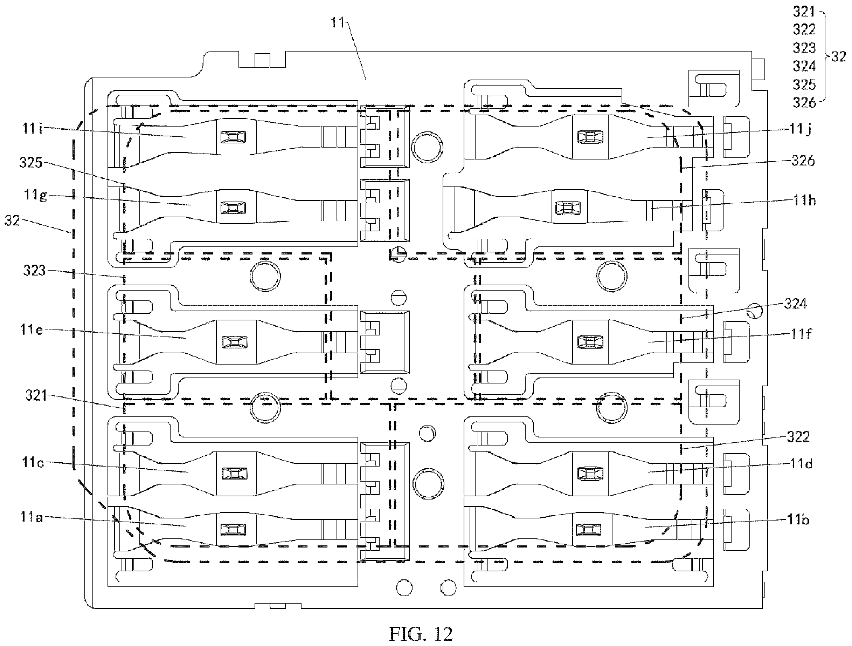

Refer to FIG. 10 to FIG. 12 together. FIG. 10 is a schematic block diagram of a nano-SIM card 3 according to an embodiment of this application. FIG. 11 is a diagram of a structure of the nano-SIM card 3 shown in FIG. 10 in some embodiments. FIG. 12 is a diagram of a structure when the nano-SIM card 3 shown in FIG. 11 is connected to the card connector 11 shown in FIG. 5.

In some embodiments, as shown in FIG. 10 and FIG. 11, the nano-SIM card 3 may include a card body 31 and a card interface 32. The card body 31 includes a package 311, a control circuit 312 and a SIM card circuit 313 that are disposed in the package 311. The card interface 32 is fastened to the card body 31, and is exposed relative to the card body 31. The card interface 32 is electrically connected to the control circuit 312. The package 311 is configured to package the control circuit 312, the SIM card circuit 313, and an electrical connection line between the card interface 32 and each of the control circuit 312 and the SIM card circuit 313, to perform protection. The package 311 is of a dielectric material, and the dielectric material includes but is not limited to materials such as ethylene-vinyl acetate (ethylene-vinyl acetate, EVA), polyvinyl butyral (polyvinyl butyral, PVB), an ionomer, a polyolefin (polyolefin, PO), silicon, and a thermoplastic polyurethane.

The nano-SIM card 3 has a length direction, a width direction, and a thickness direction of which every two are perpendicular to each other. A maximum dimension of the card body 31 of the nano-SIM card 3 in the length direction is a length of the card body 31, a maximum dimension of the card body 31 in the width direction is a width of the card body 31, and a maximum dimension of the card body 31 in the thickness direction is a thickness of the card body 31. Dimensions of the card body 31 of the nano-SIM card 3 may be that the length is 12.30 mm, the width is 8.80 mm, and the thickness is 0.67 mm. In this embodiment of this application, a dimension of a card body of an information card is a dimension of an outer contour of a package of the card body.

The card interface 32 of the nano-SIM card 3 in FIG. 11 is disposed to face upward. A perspective of the nano-SIM card 3 in FIG. 12 is obtained by turning upside down a perspective of the nano-SIM card 3 in FIG. 11. The card interface 32 of the nano-SIM card 3 in FIG. 12 is disposed to face downward, and the card connector 11 is located below the nano-SIM card 3.

In some embodiments, the card body 31 of the nano-SIM card 3 includes a first edge 3111, a second edge 3112, a third edge 3113, and a fourth edge 3114. The first edge 3111 and the third edge 3113 are disposed opposite to each other and extend in the length direction of the nano-SIM card 3, and the second edge 3112 and the fourth edge 3114 are disposed opposite to each other and extend in the width direction of the nano-SIM card 3. A spacing between the second edge 3112 and the fourth edge 3114 is greater than a spacing between the first edge 3111 and the third edge 3113. In other words, the first edge 3111 and the third edge 3113 are long edges, and the second edge 3112 and the fourth edge 3114 are short edges. The first edge 3111 and the third edge 3113 may be disposed in parallel or approximately in parallel, and the second edge 3112 and the fourth edge 3114 may be disposed in parallel or approximately in parallel.

A corner of the card body 31 of the nano-SIM card 3 is a beveled edge, and the beveled edge is disposed between the first edge 3111 and the second edge 3112. The beveled edge forms a cut edge 3115, an obtuse angle is formed between the cut edge 3115 and the first edge 3111, and an obtuse angle is formed between the cut edge 3115 and the second edge 3112. An arc transition structure or a chamfered transition structure may be disposed between adjacent edges (including the first edge 3111, the second edge 3112, the third edge 3113, the fourth edge 3114, and the cut edge 3115) of the card body 31 of the nano-SIM card 3. In some other embodiments, the card body 31 of the nano-SIM card 3 may not be provided with the beveled edge. This is not strictly limited in this application.

For example, the card interface 32 of the nano-SIM card 3 includes at least six gold fingers, for example, includes a first gold finger 321, a second gold finger 322, a third gold finger 323, a fourth gold finger 324, a fifth gold finger 325, and a sixth gold finger 326 that are arranged in an array. The first gold finger 321 is closer to the cut edge 3115 of the card body 31 of the nano-SIM card 3 than the other gold fingers.

When a card tray 2 is installed with the nano-SIM card 3, the nano-SIM card 3 is inserted into a card holder assembly 10, and the nano-SIM card 3 is connected to the card connector 11, 10 spring plates of the card connector 11 all abut against the nano-SIM card 3. A third spring plate 11c to an eighth spring plate 11h (namely, a second row of spring plates to a fourth row of spring plates) of the card connector 11 abut against and are electrically connected to the first gold finger 321 to the sixth gold finger 326 of the nano-SIM card 3 in one-to-one correspondence, to be electrically connected to the nano-SIM card 3. In this embodiment of this application, when the spring plate of the card connector 11 abuts against a gold finger of the information card, the spring plate of the card connector 11 and the gold finger of the information card are electrically connected.

In this embodiment, the third spring plate 11c to the eighth spring plate 11h of the card connector 11 are arranged in two columns and three rows, the third spring plate 11c to the eighth spring plate 11b can abut against and be electrically connected to the first gold finger 321 to the sixth gold finger 326 of the nano-SIM card 3 in a one-to-one correspondence, and the card connector 11 can be electrically connected to the nano-SIM card 3, to implement communication.

Refer to FIG. 9 and FIG. 12 together. A center spacing between the second row of spring plates (11c and 11d) and a third row of spring plates (11e and 11f) and a center spacing between the third row of spring plates (11e and 11f) and the fourth row of spring plates (11g and 11h) are set to fall within a range of 1.5 mm to 2.8 mm, so that an electronic device 100 can communicate with the first gold finger 321 to the sixth gold finger 326 of the nano-SIM card 3 through the third spring plate 11c to the eighth spring plate 11h, and a risk of a short circuit between the gold fingers of the nano-SIM card 3 can be effectively reduced. In this way, an electric connection relationship between the card connector 11 and the nano-SIM card 3 is reliable.

It may be understood that shapes and dimensions of gold fingers of nano-SIM cards 3 of different countries/different operators may be different, and different gold finger arrangement manners are formed. For example, the nano-SIM card 3 shown in FIG. 11 is a gold finger arrangement manner defined in compliance with a specification. In this embodiment of this application, the card connector 11 and the card holder assembly 10 are compatible with the nano-SIM cards 3 of various countries/different operators.

When the nano-SIM card 3 is connected to the card connector 11, a first row of spring plates (11a and 11b) and a fifth row of spring plates (11i and 11j) of the card connector 11 abut against the nano-SIM card 3. In some embodiments, as shown in FIG. 11 and FIG. 12, when the nano-SIM card 3 is connected to the card connector 11, a first spring plate 11a and the third spring plate 11c may abut against and be electrically connected to the first gold finger 321 of the nano-SIM card 3, a second spring plate 11b and a fourth spring plate 11d may abut against and be electrically connected to the second gold finger 322 of the nano-SIM card 3, a seventh spring plate 11g and a ninth spring plate 11i may abut against and be electrically connected to the fifth gold finger 325 of the nano-SIM card 3, and the eighth spring plate 11h and a tenth spring plate 11j may abut against and be electrically connected to the sixth gold finger 326 of the nano-SIM card 3. Two spring plates that abut against a same gold finger may be connected through the gold finger.

In some other embodiments, a plurality of gold fingers of the card interface 32 of the nano-SIM card 3 may also have an arrangement structure different from that in FIG. 11. When the nano-SIM card 3 is connected to the card connector 11, the first row of spring plates (11a and 11b) and the fifth row of spring plates (11i and 11j) of the card connector 11 abut against the card body 31 of the nano-SIM card 3; or the first spring plate 11a and the third spring plate 11c of the card connector 11 may abut against and be electrically connected to the first gold finger 321 of the nano-SIM card 3, the second spring plate 11b and the fourth spring plate 11d may abut against and be electrically connected to the second gold finger 322 of the nano-SIM card 3, and the fifth row of spring plates (11i and 11j) of the card connector 11 abuts against the card body 31 of the nano-SIM card 3; or the seventh spring plate 11g and the ninth spring plate 11i may abut against and be electrically connected to the fifth gold finger 325 of the nano-SIM card 3, the eighth spring plate 11b and the tenth spring plate 11j may abut against and be electrically connected to the sixth gold finger 326 of the nano-SIM card 3, and the first row of spring plates (11a and 11b) of the card connector 11 abuts against the card body 31 of the nano-SIM card 3. When the first row of spring plates (11a and 11b) and/or the fifth row of spring plates (11i and 11j) of the card connector 11 abut/abuts against the card body 31 of the nano-SIM card 3, the first row of spring plates (11a and 11b) and/or the fifth row of spring plates (11i and 11j) do/does not contact the gold finger of the nano-SIM card 3, and there is no electrical connection relationship between the first row of spring plates (11a and 11b) and/or the fifth row of spring plates (11i and 11j). A specific connection structure between the nano-SIM card 3 and each of the first row of spring plates (11a and 11b) and the fifth row of spring plates (11i and 11j) of the card connector 11 is not strictly limited in embodiments of this application.

For example, the six gold fingers of the nano-SIM card 3 may be respectively configured to transmit a data signal (DATA), a clock signal (clock, CLK), a programming voltage/input signal (programming voltage/input signal, VPP), a reset signal (reset signal, RST), a ground signal (GND), and a power signal (VCC). The data signal (DATA), also referred to as an I/O signal, is used to implement data transmission and communication. The programming voltage/input signal (programming voltage/input signal, VPP) is used to perform programming for the nano-SIM card 3, and may also be used for communication on a card that supports near field communication (near field communication, NFC).

Table 1 is a table of a correspondence between a plurality of spring plates of the card connector 11 and each of a plurality of gold fingers of the nano-SIM card 3 and transmission signals thereof. For example, the third spring plate 11c of the card connector 11 is electrically connected to the first gold finger 321 of the nano-SIM card 3, and the first gold finger 321 is configured to transmit the data signal (DATA); the fourth spring plate 11d is electrically connected to the second gold finger 322 of the nano-SIM card 3, and the second gold finger 322 is configured to transmit the clock signal (CLK); the fifth spring plate 11e is electrically connected to the third gold finger 323 of the nano-SIM card 3, and the third gold finger 323 is configured to transmit the programming voltage/input signal (VPP); the sixth spring plate 11f is electrically connected to the fourth gold finger 324 of the nano-SIM card 3, and the fourth gold finger 324 is configured to transmit the reset signal (RST); the seventh spring plate 11g is electrically connected to the fifth gold finger 325 of the nano-SIM card 3, and the fifth gold finger 325 is configured to transmit the ground signal (GND); and the eighth spring plate 11h is electrically connected to the sixth gold finger 326 of the nano-SIM card 3, and the sixth gold finger 326 is configured to transmit the power signal (VCC).

**Table 1**

| Card connector 11 | Nano-SIM card 3 | |
|---|---|---|
| First spring plate 11a | | |
| Second spring plate 11b | | |
| Third spring plate 11c | First gold finger 321 | DATA |
| Fourth spring plate 11d | Second gold finger 322 | CLK |
| Fifth spring plate 11e | Third gold finger 323 | VPP |
| Sixth spring plate 11f | Fourth gold finger 324 | RST |
| Seventh spring plate 11g | Fifth gold finger 325 | GND |
| Eighth spring plate 11h | Sixth gold finger 326 | VCC |
| Ninth spring plate 11i | | |
| Tenth spring plate 11j | | |

In some other embodiments, the six gold fingers of the nano-SIM card 3 may also have another correspondence with the six paths of signals. The six gold fingers of the nano-SIM card 3 may also be configured to transmit another combination of signals. For example, the nano-SIM card 3 may alternatively not transmit the programming voltage/input signal (VPP), and the third gold finger 323 is suspended. Correspondingly, the fifth spring plate 11e corresponding to the third gold finger 323 may not provide the programming voltage/input signal (VPP) either. This is not strictly limited in embodiments of this application. In this embodiment of this application, that the gold finger is suspended is that the gold finger is not configured to transmit a signal, and is not configured to provide a signal port for the information card.

This application provides a first NM card. The first NM card can match the card connector 11. The following uses an example to describe a structure of the first NM card and a connection structure of the first NM card and the card connector 11.

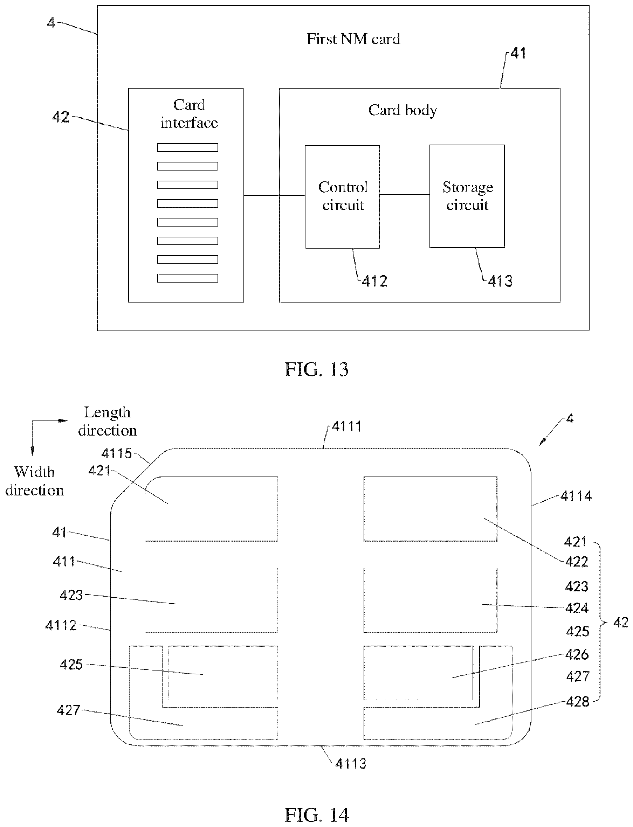

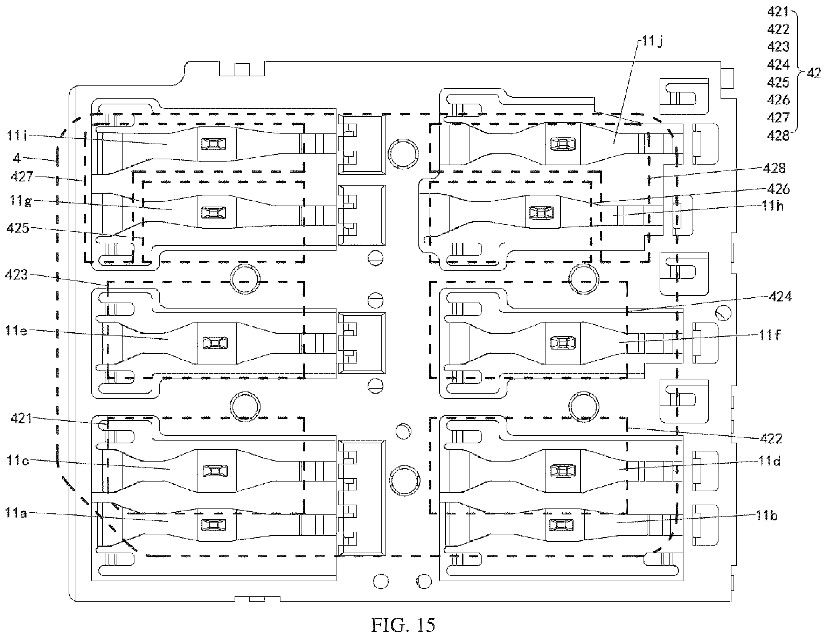

Refer to FIG. 13, FIG. 14, and FIG. 15 together. FIG. 13 is a schematic block diagram of a first NM card 4 according to an embodiment of this application. FIG. 14 is a diagram of a structure of the first NM card 4 shown in FIG. 13 in some embodiments. FIG. 15 is a diagram of a structure when the first NM card 4 shown in FIG. 14 is connected to the card connector 11 shown in FIG. 5.

In some embodiments, as shown in FIG. 13 and FIG. 14, the first NM card 4 includes a card body 41 and a card interface 42. The card body 41 includes a package 411, a control circuit 412 and a storage circuit 413 that are disposed in the package 411. The card interface 42 is fastened to the card body 41, and is exposed relative to the card body 41. The card interface 42 is electrically connected to the control circuit 412. The package 411 is configured to package the control circuit 412, the storage circuit 413, and an electrical connection line between the card interface 42 and each of the control circuit 412 and the storage circuit 413, to perform protection. The package 411 is of a dielectric material, and the dielectric material includes but is not limited to materials such as ethylene-vinyl acetate (ethylene-vinyl acetate, EVA), polyvinyl butyral (polyvinyl butyral, PVB), an ionomer, a polyolefin (polyolefin, PO), silicon, and a thermoplastic polyurethane.

A dimension of the card body 41 of the first NM card 4 may be the same as a dimension of a card body 31 of a nano-SIM card 3. The first NM card 4 has a length direction, a width direction, and a thickness direction of which every two are perpendicular to each other. A maximum dimension of the card body 41 of the first NM card 4 in the length direction is a length of the card body 41, a maximum dimension of the card body 41 in the width direction is a width of the card body 41, and a maximum dimension of the card body 41 in the thickness direction is a thickness of the card body 41. For example, the dimensions of the card body 41 of the first NM card 4 may be that the length is 12.30 mm, the width is 8.80 mm, and the thickness is 0.67 mm.

The card interface 42 of the first NM card 4 in FIG. 14 is disposed to face upward. A perspective of the first NM card 4 in FIG. 15 is obtained by turning upside down a perspective of the first NM card 4 in FIG. 14. The card interface 42 of the first NM card 4 in FIG. 15 is disposed to face downward, and the card connector 11 is located below the first NM card 4.

In some embodiments, the card body 41 of the first NM card 4 includes a first edge 4111, a second edge 4112, a third edge 4113, and a fourth edge 4114. The first edge 4111 and the third edge 4113 are disposed opposite to each other and extend in the length direction of the first NM card 4, and the second edge 4112 and the fourth edge 4114 are disposed opposite to each other and extend in the width direction of the first NM card 4. A spacing between the second edge 4112 and the fourth edge 4114 is greater than a spacing between the first edge 4111 and the third edge 4113. In other words, the first edge 4111 and the third edge 4113 are long edges, and the second edge 4112 and the fourth edge 4114 are short edges. The first edge 4111 and the third edge 4113 may be disposed in parallel or approximately in parallel, and the second edge 4112 and the fourth edge 4114 may be disposed in parallel or approximately in parallel.

A corner of the card body 41 of the first NM card 4 is a beveled edge, and the beveled edge is disposed between the first edge 4111 and the second edge 4112. The beveled edge forms a cut edge 4115, an obtuse angle is formed between the cut edge 4115 and the first edge 4111, and an obtuse angle is formed between the cut edge 4115 and the second edge 4112. An arc transition structure or a chamfered transition structure may be disposed between adjacent edges (including the first edge 4111, the second edge 4112, the third edge 4113, the fourth edge 4114, and the cut edge 4115) of the card body 41 of the first NM card 4. In some other embodiments, the card body 41 of the first NM card 4 may not be provided with the beveled edge. This is not strictly limited in this application. A size of the beveled edge of the card body 41 of the first NM card 4 may be the same as or different from a size of a beveled edge of the card body 31 of the nano-SIM card 3. When the size of the beveled edge of the card body 41 of the first NM card 4 is different from the size of the beveled edge of the card body 31 of the nano-SIM card 3, it is also considered that the dimension of the card body 41 of the first NM card 4 may be the same as the dimension of the card body 31 of the nano-SIM card 3.

For example, the card interface 42 of the first NM card 4 includes at least eight gold fingers, for example, may include a first gold finger 421, a second gold finger 422, a third gold finger 423, a fourth gold finger 424, a fifth gold finger 425, a sixth gold finger 426, a seventh gold finger 427, and an eighth gold finger 428 that are arranged in an array. The first gold finger 421 is closer to the cut edge 4115 of the card body 41 than the other gold fingers.

When a card tray 2 is installed with the first NM card 4, the first NM card 4 is inserted into a card holder assembly 10, and the first NM card 4 is connected to the card connector 11, 10 spring plates of the card connector 11 all abut against the first NM card 4. A third spring plate 11c to a tenth spring plate 11j (namely, a second row of spring plates to a fourth row of spring plates) of the card connector 11 abut against the first gold finger 421 to the eighth gold finger 428 of the first NM card 4 in a one-to-one correspondence, to be electrically connected to the first NM card 4.

In this embodiment, the third spring plate 11c to the tenth spring plate 11j of the card connector 11 are arranged in four rows and two columns. A center spacing between the fourth row of spring plates (11g and 11h) and a fifth row of spring plates (11i and 11j) is less than a center spacing between the second row of spring plates (11c and 11d) and a third row of spring plates (11e and 11f) and a center spacing between the third row of spring plates (11e and 11f) and the fourth row of spring plates (11g and 11h), so that the third spring plate 11c to the eighth spring plate 11h of the card connector 11 can be electrically connected to six gold fingers of the nano-SIM card 3 in a one-to-to-one correspondence, and the third spring plate 11c to the tenth spring plate 11j can also be electrically connected to the eight gold fingers of the first NM card 4 in a one-to-to-one correspondence. Therefore, the card connector 11 is compatible with the nano-SIM card 3 and the first NM card 4.

Refer to FIG. 9, FIG. 12, and FIG. 15 together. Because the nano-SIM card 3 and the first NM card 4 have different quantities of gold fingers, different shapes of the gold fingers, different dimensions of the gold fingers, different arrangement locations of the gold fingers, and different spacings between the gold fingers, the center spacing between the second row of spring plates (11c and 11d) and the third row of spring plates (11e and 11f) and the center spacing between the third row of spring plates (11e and 11f) and the fourth row of spring plates (11g and 11h) are set to fall within a range of 1.5 mm to 2.8 mm, and the center spacing between the fourth row of spring plates (11g and 11h) and the fifth row of spring plates (11i and 11j) is set to fall within a range of 1.0 mm to 1.7 mm, so that the third spring plate 11c to the eighth spring plate 11h can respectively communicate with the six gold fingers of the nano-SIM card 3, and the third spring plate 11c to the tenth spring plate 11j can respectively communicate with the eight gold fingers of the first NM card 4. Based on that the card connector 11 is compatible with the nano-SIM card 3 and the first NM card 4, a risk of a short circuit between the gold finger of the nano-SIM card 3 and the spring plate of the card connector 11 when the nano-SIM card 3 is disposed in the card connector 11 and a risk of a short circuit between the gold finger of the first NM card 4 and the spring plate of the card connector 11 when the first NM card 4 is disposed in the card connector 11 are effectively reduced, so that an electrical connection relationship between the card connector 11 and each of the nano-SIM card 3 and the first NM card 4 is reliable, and the nano-SIM card 3 and the first NM card 4 may share a same card connector 11 in a time-division manner.

As shown in FIG. 15, although the seventh gold finger 427 and the eighth gold finger 428 of the first NM card 4 are of an "L" type, because the spring plate of the card connector 11 abuts against a gold finger of an information card through an abutment contact of the spring plate, and a gap is formed between the remaining part of the spring plate and the gold finger, the ninth spring plate 11i is electrically connected to the seventh gold finger 427, the seventh spring plate 11g and the seventh gold finger 427 are not in contact and have no electrical connection relationship, the tenth spring plate 11j is electrically connected to the eighth gold finger 428, and the eighth spring plate 11h and the eighth gold finger 428 are not in contact and have no electrical connection relationship.

When the first NM card 4 is connected to the card connector 11, a first row of spring plates (11a and 11b) of the card connector 11 abuts against the first NM card 4. In some embodiments, the first spring plate 11a and the third spring plate 11c abut against and are electrically connected to the first gold finger 421 of the first NM card 4, and the second spring plate 11b and the fourth spring plate 11d abut against and are electrically connected to the second gold finger 422 of the first NM card 4. In some other embodiments, the first row of spring plates (11a and 11b) abuts against the card body 41 of the first NM card 4. In this case, there is no electrical connection relationship between the first row of spring plates (11a and 11b) and the first NM card 4. A specific connection structure between the first row of spring plates (11a and 11b) of the card connector 11 and the first NM card 4 is not strictly limited in embodiments of this application.

For example, an embedded multimedia card (embedded multimedia card, EMMC) interface protocol may be used for the first NM card 4. Four of the eight gold fingers of the first NM card 4 may be configured to transmit data signals (DATA 0, DATA 1, DATA 2, and DATA 3), one gold finger is configured to transmit a clock signal (CLK), one gold finger is configured to transmit a command and response signal (CMD), one gold finger is configured to transmit a ground signal (GND), and one gold finger is configured to transmit a power signal (VCC). The data signals (DATA 0, DATA 1, DATA 2, and DATA 3) are used to implement data transmission and communication. The command and response signal (CMD) may send a command from an external device to a memory card, or may enable a memory card to respond to a command from an external device.

Table 2 is a table of a correspondence between a plurality of spring plates of the card connector 11 and each of a plurality of gold fingers of the nano-SIM card 3 and the first NM card 4 and transmission signals thereof. When the first NM card 4 is connected to the card connector 11, the third spring plate 11c to the tenth spring plate 11j of the card connector 11 abut against and are electrically connected to the first gold finger 421 to the eighth gold finger 428 of the first NM card 4 in a one-to-one correspondence. In this application, if two gold fingers of two information cards are connected to the card connector 11 of an electronic device 100 and abut against and are electrically connected to a same spring plate, it is considered that locations of the two gold fingers correspond to each other. For example, locations of the first gold finger 421 to the sixth gold finger 426 of the first NM card 4 correspond to locations of the first gold finger 321 to the sixth gold finger 326 of the nano-SIM card 3 in a one-to-one correspondence. When the locations of the two gold fingers of the two information cards correspond to each other, shapes and dimensions of the two gold fingers and specific locations of the two gold fingers on card bodies of the information cards may be the same or may be different. This is not strictly limited in embodiments of this application.

For example, the first gold finger 421, the fourth gold finger 424, the seventh gold finger 427, and the eighth gold finger 428 of the first NM card 4 may be configured to transmit data signals. For example, the first gold finger 421 is configured to transmit the data signal (DATA 1), the fourth gold finger 424 is configured to transmit the data signal (DATA 0), the seventh gold finger 427 is configured to transmit the data signal (DATA 3), and the eighth gold finger 428 is configured to transmit the data signal (DATA 2). Signals transmitted in the first gold finger 421, the fourth gold finger 424, the seventh gold finger 427, and the eighth gold finger 428 may be exchanged in some other embodiments. Details are not described herein again. The second gold finger 422 of the first NM card 4 is configured to transmit the clock signal (CLK), the third gold finger 423 is configured to transmit the command and response signal (CMD), the fifth gold finger 425 is configured to transmit the ground signal (GND), and the sixth gold finger 426 is configured to transmit the power signal (VCC).

**Table 2**

| Card connector 11 | Nano-SIM card 3 | | First NM card 4 | |
|---|---|---|---|---|
| First spring plate 11a | | | | |
| Second spring plate 11b | | | | |
| Third spring plate 11c | First gold finger 321 | DATA | First gold finger 421 | DATA 1 |
| Fourth spring plate 11d | Second gold finger 322 | CLK | Second gold finger 422 | CLK |
| Fifth spring plate 11e | Third gold finger 323 | VPP | Third gold finger 423 | CMD |
| Sixth spring plate 11f | Fourth gold finger 324 | RST | Fourth gold finger 424 | DATA 0 |
| Seventh spring plate 11g | Fifth gold finger 325 | GND | Fifth gold finger 425 | GND |
| Eighth spring plate 11h | Sixth gold finger 326 | VCC | Sixth gold finger 426 | VCC |
| Ninth spring plate 11i | | | Seventh gold finger 427 | DATA 3 |
| Tenth spring plate 11j | | | Eighth gold finger 428 | DATA 2 |

In some other embodiments, the eight gold fingers of the first NM card 4 may also have another correspondence with the eight paths of signals. The eight gold fingers of the first NM card 4 may also be configured to transmit another combination of signals. This is not strictly limited in embodiments of this application.

For example, the first gold finger 421, the fourth gold finger 424, and the eighth gold finger 428 of the first NM card 4 each may be electrically connected to a high-voltage resistant circuit or a protection switch, to prevent a circuit of the first NM card 4 from being burnt when the third spring plate 11c to the fifth spring plate 11e and the eighth spring plate 11h provide a high voltage. The high-voltage resistant circuit or the protection switch is located in the package 411 of the first NM card 4. In some other embodiments, a high-impedance protection circuit may alternatively be provided within the electronic device. For example, a protection circuit is added within an interface controller for an implementation.

This application further provides a second NM card. The second NM card is a memory card, proper cutting is performed for matching based on a high-speed protocol, to modify a structure of a card interface, so that the high-speed protocol may be applied to the second NM card, to increase a transmission rate of the second NM card, so that the transmission rate of the second NM card is greater than a transmission rate of a first NM card. The transmission rate of the second NM card is increased, so that an electronic device 100 into which the second NM card is inserted can better support use scenarios and requirements such as 5G, Wi-Fi 6, and 8K HD videos and games, to improve use experience of a user.

For example, the transmission rate of the first NM card is usually lower than 100 MB/s. For example, an EMMC interface protocol may be used for the first NM card 4, the card interface 42 has eight gold fingers, and the transmission rate of the first NM card 4 may reach 90 MB/s. Different interface protocols may be used for the second NM card, and the card interface has 10, eight, or another quantity of gold fingers, so that the transmission rate is usually higher than 100 MB/s, and even may reach 1 GB/s. For example, an interface protocol such as a universal flash storage (Universal Flash Storage, UFS) interface protocol, a peripheral component interconnect express (peripheral component interconnect express, PCIe) interface protocol, a secure digital (Secure Digital, SD) interface protocol, or a non-volatile memory express (Non-Volatile Memory Express, NVMe) interface protocol may be used for the second NM card. The transmission rate of the second NM card usually falls within a range from 200 MB/s to 800 MB/s. In some embodiments, the EMMC interface protocol may also be used for the second NM card, to increase the transmission rate through frequency conversion.

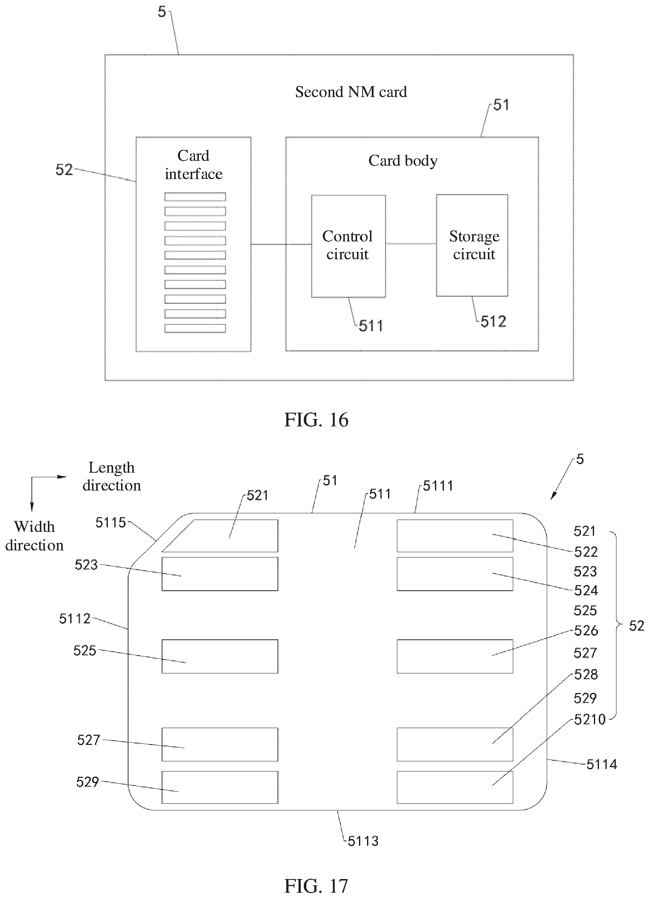

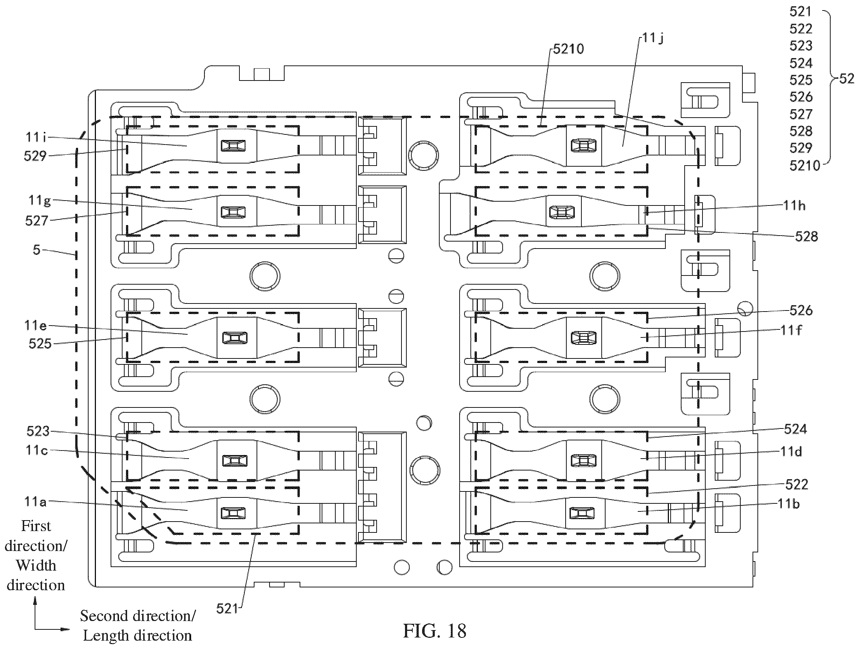

Refer to FIG. 16, FIG. 17, and FIG. 18 together. FIG. 16 is a schematic block diagram of a second NM card 5 according to an embodiment of this application. FIG. 17 is a diagram of a structure of the second NM card 5 shown in FIG. 16 in some embodiments. FIG. 18 is a diagram of a structure when the second NM card 5 shown in FIG. 17 is connected to the card connector 11 shown in FIG. 5.

In some embodiments, as shown in FIG. 16 and FIG. 17, the second NM card 5 includes a card body 51 and a card interface 52. The card body 51 includes a package 511, a control circuit 512 and a storage circuit 513 that are disposed in the package 511. The card interface 52 is fastened to the card body 51, and is relatively exposed on a side of the card body 51. The card interface 52 is electrically connected to the control circuit 512. The package 511 is configured to package the control circuit 512, the storage circuit 513, and an electrical connection line between the card interface 52 and each of the control circuit 512 and the storage circuit 513, to perform protection. The package 511 is of a dielectric material, and the dielectric material includes but is not limited to materials such as ethylene-vinyl acetate (ethylene-vinyl acetate, EVA), polyvinyl butyral (polyvinyl butyral, PVB), an ionomer, a polyolefin (polyolefin, PO), silicon, and a thermoplastic polyurethane.

A dimension of the card body 51 of the second NM card 5 may be the same as a dimension of the card body 31 of the nano-SIM card 3. The second NM card 5 has a length direction, a width direction, and a thickness direction of which every two are perpendicular to each other. A maximum dimension of the card body 51 of the second NM card 5 in the length direction is a length of the card body 51, a maximum dimension of the card body 51 in the width direction is a width of the card body 51, and a maximum dimension of the card body 51 in the thickness direction is a thickness of the card body 51. For example, the dimensions of the card body 51 of the second NM card 5 may be that the length is 12.30 mm, the width is 8.80 mm, and the thickness is 0.67 mm.

The card interface 52 of the second NM card 5 in FIG. 17 is disposed to face upward. A perspective of the second NM card 5 in FIG. 18 is obtained by turning upside down a perspective of the second NM card 5 in FIG. 17. The card interface 52 of the second NM card 5 in FIG. 18 is disposed to face downward, and the card connector 11 is located below the second NM card 5.

In some embodiments, the card body 51 of the second NM card 5 includes a first edge 5111, a second edge 5112, a third edge 5113, and a fourth edge 5114. The first edge 5111 and the third edge 5113 are disposed opposite to each other and extend in the length direction of the second NM card 5, and the second edge 5112 and the fourth edge 5114 are disposed opposite to each other and extend in the width direction of the second NM card 5. A spacing between the second edge 5112 and the fourth edge 5114 is greater than a spacing between the first edge 5111 and the third edge 5113. In other words, the first edge 5111 and the third edge 5113 are long edges, and the second edge 5112 and the fourth edge 5114 are short edges. The first edge 5111 and the third edge 5113 may be disposed in parallel or approximately in parallel, and the second edge 5112 and the fourth edge 5114 may be disposed in parallel or approximately in parallel.

A corner of the card body 51 of the second NM card 5 is a beveled edge, and the beveled edge is disposed between the first edge 5111 and the second edge 5112. The beveled edge forms a cut edge 5115, an obtuse angle is formed between the cut edge 5115 and the first edge 5111, and an obtuse angle is formed between the cut edge 5115 and the second edge 5112. An arc transition structure or a chamfered transition structure may be disposed between adjacent edges (including the first edge 5111, the second edge 5112, the third edge 5113, the fourth edge 5114, and the cut edge 5115) of the card body 51. In some other embodiments, the card body 51 of the second NM card 5 may not be provided with the beveled edge. This is not strictly limited in this application. A size of the beveled edge of the card body 51 of the second NM card 5 may be the same as or different from a size of a beveled edge of the card body 31 of the nano-SIM card 3. When the size of the beveled edge of the card body 51 of the second NM card 5 is different from the size of the beveled edge of the card body 31 of the nano-SIM card 3, it is also considered that the dimension of the card body 41 of the first NM card 4 may be the same as the dimension of the card body 31 of the nano-SIM card 3.

For example, the card interface 52 of the second NM card 5 includes a plurality of gold fingers, and the plurality of gold fingers are exposed on a same side of the card body 51. The second NM card 5 has at least 10 gold fingers. For example, the plurality of gold fingers may include a first gold finger 521, a second gold finger 522, a third gold finger 523, a fourth gold finger 524, a fifth gold finger 525, a sixth gold finger 526, a seventh gold finger 527, an eighth gold finger 528, a ninth gold finger 529, and a tenth gold finger 5210. The first gold finger 521, the third gold finger 523, the fifth gold finger 525, the seventh gold finger 527, and the ninth gold finger 529 of the second NM card 5 are arranged in a first column of gold fingers in the width direction of the second NM card 5; the second gold finger 522, the fourth gold finger 524, the sixth gold finger 526, the eighth gold finger 528, and the tenth gold finger 5210 of the second NM card 5 are arranged in a second column of gold fingers in the width direction of the second NM card 5; the first column of gold fingers and the second column of gold fingers are arranged in the length direction of the second NM card 5; and the five gold fingers in the first column of gold fingers (521, 523, 525, 527, and 529) and the five gold fingers in the second column of gold fingers (522, 524, 526, 528, and 5210) are in a one-to-one correspondence, and every two gold fingers are set to form a row. In other words, the 10 gold fingers are arranged in a first row of gold fingers (521 and 522), a second row of gold fingers (523 and 524), a third row of gold fingers (525 and 526), a fourth row of gold fingers (527 and 528), and a fifth row of gold fingers (529 and 5210) in the width direction of the second NM card 5. In this case, the first gold finger 321 to the tenth gold finger 5210 are arranged in two columns and five rows.

The first column of gold fingers (521, 523, 525, 527, and 529) is located between the second edge 5112 and the second column of gold fingers (522, 524, 526, 528, and 5210). In other words, the first column of gold fingers (521, 523, 525, 527, and 529) is arranged close to the second edge 5112, and the second column of gold fingers (522, 524, 526, 528, and 5210) is arranged close to the fourth edge 5114.

The first gold finger 521 is located between the first edge 5111 and the third gold finger 523, and the second gold finger 522 is located between the first edge 5111 and the fourth gold finger 514. In other words, the first row of gold fingers (521 and 522) is arranged close to the first edge 5111, and the fifth row of gold fingers (529 and 5210) is arranged close to the third edge 5113.

The first gold finger 521 may be provided with an oblique edge, to form a right trapezoid. The oblique edge of the first gold finger 521 is disposed to face the cut edge 5115 of the card body 51, and a spacing between the oblique edge and the cut edge 5115 is greater than or equal to 0.1 mm, for example, may be 0.2 mm. The second gold finger 522 to the tenth gold finger 5210 may be rectangular. In some other embodiments, the first gold finger 521 may also be rectangular.

A center spacing between the second row of gold fingers (523 and 524) and the third row of gold fingers (525 and 526) is greater than a center spacing between the first row of gold fingers (521 and 522) and the second row of gold fingers (523 and 524), and is greater than a center spacing between the fourth row of gold fingers (527 and 528) and the fifth row of gold fingers (529 and 5210). A center spacing between the third row of gold fingers (525 and 526) and the fourth row of gold fingers (527 and 528) is greater than the center spacing between the first row of gold fingers (521 and 522) and the second row of gold fingers (523 and 524), and is greater than the center spacing between the fourth row of gold fingers (527 and 528) and the fifth row of gold fingers (529 and 5210).

When the second NM card 5 is connected to the card connector 11, the width direction of the second NM card 5 is parallel to a first direction of the card connector 11, the length direction is parallel to a second direction of the card connector 11, and 10 spring plates of the card connector 11 abut against the second NM card 5. When a card tray 2 is installed with the second NM card 5, the second NM card 5 is inserted into a card holder assembly 10, and the second NM card 5 is connected to the card connector 11, the 10 spring plates of the card connector 11 abut against the 10 gold fingers of the second NM card 5 in a one-to-one correspondence, and a first spring plate 11a to a tenth spring plate 11j abut against the first gold finger 521 to the tenth gold finger 5210 of the second NM card 5 in a one-to-one correspondence.

In this embodiment, the first spring plate 11a to the tenth spring plate 11j of the card connector 11 are arranged in two columns and five rows, and a center spacing between the second row of spring plates (11c and 11d) and the third row of spring plates (11e and 11f) and a center spacing between the third row of spring plates (11e and 11f) and the fourth row of spring plates (11g and 11b) are both greater than a center spacing between the first row of spring plates (11a and 11b) and the second row of spring plates (11c and 11d) and a center spacing between the fourth row of spring plates (11g and 11h) and the fifth row of spring plates (11i and 11j), so that the third spring plate 11c to the eighth spring plate 11h of the card connector 11 can abut against and be electrically connected to the first gold finger 321 to the sixth gold finger 326 of the nano-SIM card 3 in one-to-one correspondence, the third spring plate 11c to the tenth spring plate 11j of the card connector 11 can abut against and be electrically connected to the first gold finger 421 to the eighth gold finger 428 of the first NM card 4 in a one-to-one correspondence, and the first spring plate 11a to the tenth spring plate 11j of the card connector 11 abut against and are electrically connected to the first gold finger 521 to the tenth gold finger 5210 of the second NM card 5 in a one-to-one correspondence. Therefore, the card connector 11 is compatible with the nano-SIM card 3, the first NM card 4, and the second NM card 5. In some other embodiments, the card connector 11 may also be designed to be compatible with the nano-SIM card 3 and the second NM card 5.

For example, with reference to FIG. 9, FIG. 12, FIG. 15, and FIG. 18, the center spacing between the second row of spring plates (11c and 11d) and the third row of spring plates (11e and 11f) of the card connector 11 and the center spacing between the third row of spring plates (11e and 11f) and the fourth row of spring plates (11g and 11h) are set to fall within a range of 1.5 mm to 2.8 mm, the center spacing between the first row of spring plates (11a and 11b) and the second row of spring plates (11c and 11d) is set to fall within a range of 1.0 mm to 1.7 mm, and the center spacing between the fourth row of spring plates (11g and 11h) and the fifth row of spring plates (11i and 11j) is set to fall within the range of 1.0 mm to 1.7 mm, so that the third spring plate 11c to the eighth spring plate 11h can respectively communicate with the six gold fingers of the nano-SIM card 3, the third spring plate 11c to the tenth spring plate 11j can respectively communicate with the eight gold fingers of the first NM card 4, and the first spring plate 11a to the tenth spring plate 11j can respectively communicate with the 10 gold fingers of the second NM card 5.

Because the three types of cards of the nano-SIM card 3, the first NM card 4, and the second NM card 5 have different quantities of gold fingers, different shapes of the gold fingers, different arrangement locations of the gold fingers, and different spacings between the gold fingers, a spacing between the first spring plate 11a to the tenth spring plate 11j is uniquely designed, so that based on that the card connector 11 is compatible with the nano-SIM card 3, the first NM card 4, and the second NM card 5, a risk of a short circuit between the gold finger of the nano-SIM card 3 and the spring plate of the card connector 11 when the nano-SIM card 3 is disposed in the card connector 11, a risk of a short circuit between the gold finger of the first NM card 4 and the spring plate of the card connector 11 when the first NM card 4 is disposed in the card connector 11, and a risk of a short circuit between the gold finger of the second NM card 5 and the spring plate of the card connector 11 when second NM card 5 is disposed in the card connector 11 are effectively reduced, so that an electrical connection relationship between the card connector 11 and each of the nano-SIM card 3, the first NM card 4, and the second NM card 5 is reliable, and the nano-SIM card 3, the first NM card 4, and the second NM card 5 may share a same card connector 11 in a time-division manner. It may be understood that, in some other embodiments, a solution in which the card connector 11 is compatible with only the nano-SIM card 3 and the second NM card 5 may alternatively be designed.

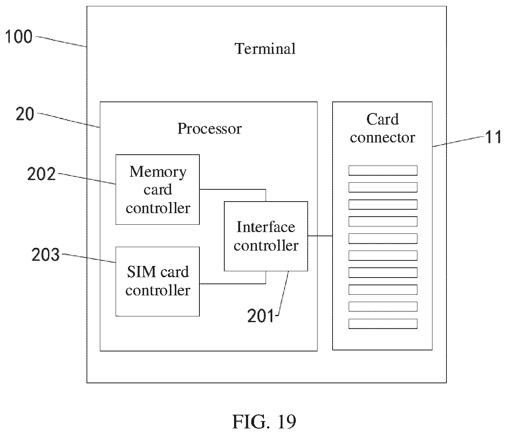

FIG. 19 is a schematic block diagram of a partial circuit of the electronic device 100 shown in FIG. 1 in some embodiments.

In some embodiments, a processor 20 of the electronic device 100 includes an interface controller 201, one or more memory card controllers 202, and a SIM card controller 203. The interface controller 201 is electrically connected to the one or more memory card controllers 202 and the SIM card controller 203, and the interface controller 201 is further electrically connected to a plurality of spring plates of a card connector 11. The memory card controller 202 is configured to control a memory card to run, and the SIM card controller 203 is configured to control a nano-SIM card 3 to run. When different information cards are inserted into a card holder assembly 10 of the electronic device 100 and are electrically connected to the card connector 11, the interface controller 201 can control the memory card controller 202 or the SIM card controller 203 to communicate with the information card through the card connector 11. For example, when a card tray 2 is installed with the nano-SIM card 3, and the nano-SIM card 3 is inserted into the card holder assembly 10, the interface controller 201 controls the SIM card controller 203 to communicate with the nano-SIM card 3 through the card connector 11; and when the card tray 2 is installed with a second NM card 5, and the second NM card 5 is inserted into the card holder assembly 10, the interface controller 201 controls the memory card controller 202 to communicate with the second NM card 5 through the card connector 11.

In this embodiment, the electronic device 100 can automatically identify a type of the information card by using the processor 20, and control a controller corresponding to the information card to be connected to the card connector 11, so that the information card can automatically match the electronic device 100, to perform communication, and improve use experience of a user.

A plurality of controllers of the processor 20 may be components independent of each other, or may be combined by using an integrated component, or one controller may be split into a plurality of components. This is not strictly limited in embodiments of this application. The interface controller 201 may include a plurality of switches, and may further include conducting wires. The plurality of switches may be arranged separately or in a centralized manner. This is not strictly limited in embodiments of this application.

For example, the processor 20 may identify, in a plurality of manners, a type of an information card connected to the card connector 11. For example, the processor 20 may sequentially connect the plurality of controllers and the card connector 11, and identify the type of the information card based on a matching situation between the controller and the information card. Alternatively, a detection circuit for detecting the type of the information card may be further disposed in the processor 20, and the processor 20 can identify the type of the information card based on a detection result of the detection circuit. A specific manner in which the processor 20 identifies the type of the information card is not strictly limited in embodiments of this application.

In some embodiments, when the card holder assembly 10 of the electronic device 100 is compatible with a first NM card 4 and the second NM card 5, the memory card controller 202 may include a first memory card controller and a second memory card controller, the first memory card controller is configured to control the first NM card 4 to run, and the second memory card controller is configured to control the second NM card 5 to run. When the card tray 2 is installed with the first NM card 4, and the first NM card 4 is inserted into the card holder assembly 10, the interface controller 201 controls the first memory card controller to communicate with the first NM card 4 through the card connector 11. When the card tray 2 is installed with the second NM card 5, and the second NM card 5 is inserted into the card holder assembly 10, the interface controller 201 controls the second memory card controller to communicate with the second NM card 5 through the card connector 11.

In this application, there may be a plurality of implementations of a card interface of the second NM card 5. For example, the following uses an example to describe a case in which the second NM card 5 can be connected to the card connector 11 shown in FIG. 5 in the following embodiments.

For example, 10 gold fingers of the second NM card 5 are arranged in two columns and five rows, the 10 gold fingers of the second NM card 5 are arranged in a first row of gold fingers (521 and 522) to a fifth row of gold fingers (529 and 5210) in a width direction, and the 10 gold fingers of the second NM card 5 are arranged in a first column of gold fingers (521, 523, 525, 527, and 529) and a second column of gold fingers (522, 524, 526, 528, and 5210) in a length direction.

In the width direction, a center spacing between a second row of gold fingers (523 and 524) and a third row of gold fingers (525 and 526) and a center spacing between the third row of gold fingers (525 and 526) and a fourth row of gold fingers (527 and 528) are greater than a center spacing between the first row of gold fingers (521 and 522) and the second row of gold fingers (523 and 524), and are greater than a center spacing between the fourth row of gold fingers (527 and 528) and the fifth row of gold fingers (529 and 5210).

For example, the center spacing between the second row of gold fingers (523 and 524) and the third row of gold fingers (525 and 526) may fall within a range of 1.5 mm to 2.8 mm, the center spacing between the third row of gold fingers (525 and 526) and the fourth row of gold fingers (527 and 528) may fall within the range of 1.5 mm to 2.8 mm, and the center spacing between the first row of gold fingers (521 and 522) and the second row of gold fingers (523 and 524) may fall within a range of 1.0 mm to 1.7 mm, and the center spacing between the fourth row of gold fingers (527 and 528) and the fifth row of gold fingers (529 and 5210) may fall within the range of 1.0 mm to 1.7 mm.

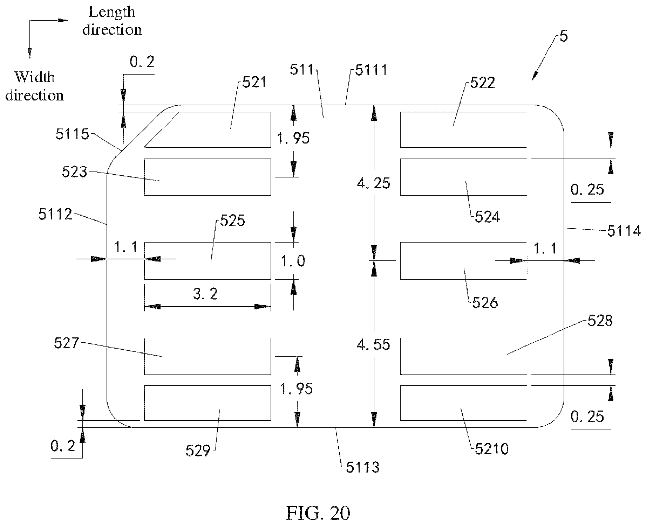

FIG. 20 is a diagram of dimensions of the second NM card 5 shown in FIG. 17 in some embodiments.

In some embodiments, 10 gold fingers of the second NM card 5 are arranged in two columns and five rows, a first column of gold fingers (521, 523, 525, 527, and 529) is arranged close to a second edge 5112, a second column of gold fingers (522, 524, 526, 528, and 5210) is arranged close to a fourth edge 5114, each column of gold fingers is arranged in alignment in a width direction, a first row of gold fingers (521 and 522) is arranged close to a first edge 5111, a fifth row of gold fingers (529 and 5210) is arranged close to a third edge 5113, and each row of gold fingers is arranged in alignment in a length direction. The first gold finger 521 may be provided with an oblique edge, to form a right trapezoid. The oblique edge of the first gold finger 521 is disposed to face a cut edge 5115 of the card body 51, and a spacing between the oblique edge and the cut edge 5115 may be 0.2 mm. The second gold finger 522 to the tenth gold finger 5210 may be rectangular.

For example, in the width direction, a spacing between a center of a second row of gold fingers (523 and 524) and the first edge 5111 may be 1.95 mm, a spacing between a center of a third row of gold fingers (525 and 526) and the first edge 5111 may be 4.25 mm, a spacing between the center of the third row of gold fingers (525 and 526) and the third edge 5113 may be 4.55 mm, and a spacing between a center of a fourth row of gold fingers (527 and 528) and the third edge 5113 may be 1.95 mm. In the width direction, a spacing between the first row of gold fingers (521 and 522) and the second row of gold fingers (523 and 524) may be 0.25 mm, and a spacing between the first row of gold fingers (521 and 522) and the first edge 5111 may be 0.2 mm. In the width direction, a spacing between the fourth row of gold fingers (527 and 528) and the fifth row of gold fingers (529 and 5210) may be 0.25 mm, and a spacing between the fifth row of gold fingers (529 and 5210) and the third edge 5113 may be 0.2 mm. In the length direction, a spacing between the first column of gold fingers (521, 523, 525, 527, and 529) and the second edge 5112 may be 1.1 mm, and a spacing between the second column of gold fingers (522, 524, 526, 528, and 5210) and the fourth edge 5114 may be 1.1 mm.

A length of each gold finger may be 3.2 mm, and a width may be 1.0 mm. A length of the first gold finger 521 is a length of a bottom edge of the first gold finger 521, and a width of the first gold finger 521 is a height of the first gold finger 521.

A tolerance of a shape dimension and a spacing dimension is ±0.1 mm.

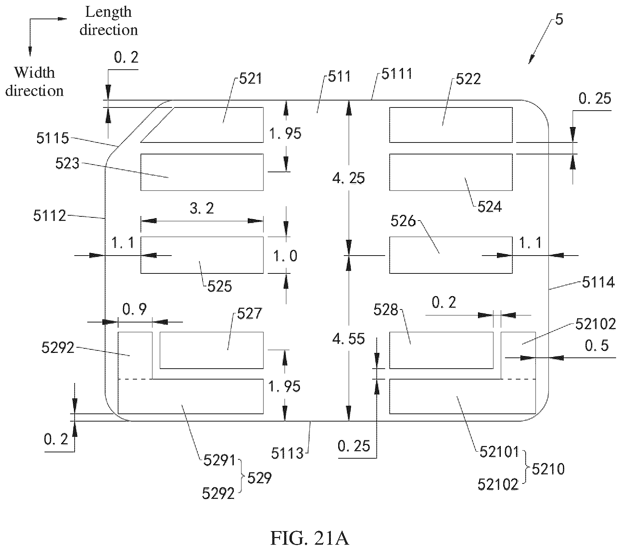

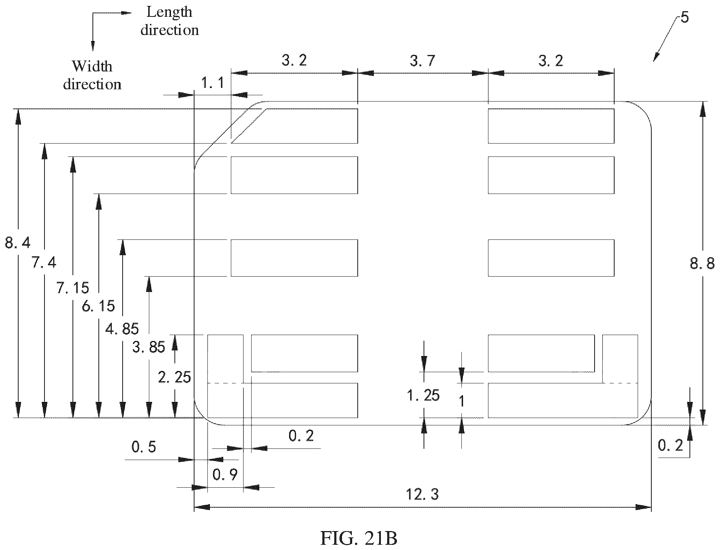

Refer to FIG. 21A and FIG. 21B together. FIG. 21A is a diagram of dimensions of the second NM card 5 shown in FIG. 16 in some other embodiments. FIG. 21B is a diagram of another dimension of the second NM card 5 shown in FIG. 21A.

In some embodiments, 10 gold fingers of the second NM card 5 are arranged in two columns, a first column of gold fingers (521, 523, 525, 527, and 529) is arranged close to a second edge 5112, and a second column of gold fingers (522, 524, 526, 528, and 5210) is arranged close to a fourth edge 5114. The first gold finger 521 to the sixth gold finger 526 are arranged in two columns and three rows, each column of gold fingers is arranged in alignment in a width direction, a first row of gold fingers (521 and 522) is arranged close to a first edge 5111, each row of gold fingers is arranged in alignment in a length direction, and a fourth row of gold fingers (527 and 528) is arranged in alignment in the length direction. The first gold finger 521 may be provided with an oblique edge, to form a right trapezoid. The oblique edge of the first gold finger 521 is disposed to face a cut edge 5115 of a card body 51, and a spacing between the oblique edge and the cut edge 5115 may be 0.2 mm. The second gold finger 522 to the eighth gold finger 528 may be rectangular. The ninth gold finger 529 and the tenth gold finger 5210 may be of an "L" type. The ninth gold finger 529 semi-encloses the seventh gold finger 527. The ninth gold finger 529 includes a first part 5291 and a second part, the first part 5291 extends in the length direction, and the second part 5292 extends in the width direction. The first part 5291 of the ninth gold finger 529 is located between the seventh gold finger 527 and a third edge 5113, and the second part 5292 of the ninth gold finger 529 is connected to the first part 5291 and is located between the seventh gold finger 527 and the second edge 5112. The tenth gold finger 5210 includes a first part 52101 and a second part 52102, the first part 52101 extends in the length direction, and the second part 52102 extends in the width direction. The first part 52101 of the tenth gold finger 5210 is located between the eighth gold finger 528 and the third edge 5113, and the second part 52102 of the tenth gold finger 5210 is connected to the first part 5291 and is located between the eighth gold finger 528 and the second edge 5112. As described above, the ninth gold finger 529 and the tenth gold finger 5210 may be understood as a fifth row of gold fingers (529 and 5210).

For example, in the width direction, a spacing between a center of a second row of gold fingers (523 and 524) and the first edge 5111 may be 1.95 mm, a spacing between a center of a third row of gold fingers (525 and 526) and the first edge 5111 may be 4.25 mm, a spacing between the center of the third row of gold fingers (525 and 526) and the third edge 5113 may be 4.55 mm, and a spacing between a center of the fourth row of gold fingers (527 and 528) and the third edge 5113 may be 1.95 mm. In the width direction, a spacing between the first row of gold fingers (521 and 522) and the second row of gold fingers (523 and 524) may be 0.25 mm, and a spacing between the first row of gold fingers (521 and 522) and the first edge 5111 may be 0.2 mm. In the width direction, a spacing between the fourth row of gold fingers (527 and 528) and the fifth row of gold fingers (529 and 5210) may be 0.25 mm, and a spacing between the fifth row of gold fingers (529 and 5210) and the third edge 5113 may be 0.2 mm. In other words, in the width direction, a spacing between the ninth gold finger 529 and the third edge 5113 may be 0.2 mm, and a spacing between the first part 5291 of the ninth gold finger 529 and the seventh gold finger 527 may be 0.25 mm; and a spacing between the tenth gold finger 5210 and the third edge 5113 may be 0.2 mm, and a spacing between the first part 52101 of the tenth gold finger 5210 and the eighth gold finger 528 may be 0.25 mm. A top edge that is of the second part 5292 of the ninth gold finger 529 and that is close to the first edge 5111 may be flush with a top edge that is of the seventh gold finger 527 and that is close to the first edge 5111; and a top edge that is of the second part 52102 of the tenth gold finger 5210 and that is close to the first edge 5111 may be flush with a top edge that is of the eighth gold finger 528 and that is close to the first edge 5111. In the width direction, widths of the first gold finger 521 to the eighth gold finger 528, the first part 5291 of the ninth gold finger 529, and the first part 52101 of the tenth gold finger 5210 each may be 1.0 mm.

For example, in the length direction, a spacing between the second edge 5112 and each of the first gold finger 521, the third gold finger 523, and the fifth gold finger 525 may be 1.1 mm, and a spacing between the fourth edge 5114 and each of the second gold finger 522, the fourth gold finger 524, and the sixth gold finger 526 may be 1.1 mm. In the length direction, a side edge that is of the seventh gold finger 527 and that is close to the fourth edge 5114 and a side edge that is of the first part 5291 of the ninth gold finger 529 and that is close to the fourth edge 5114 each may be flush with a side edge that is of the fifth gold finger 525 and that is close to the fourth edge 5114; a spacing between the seventh gold finger 527 and the second part 5292 of the ninth gold finger 529 may be 0.2 mm, and a spacing between the ninth gold finger 529 and the second edge 5112 may be 0.5 mm; and a width of the second part 5292 of the ninth gold finger 529 may be 0.9 mm. In the length direction, a side edge that is of the eighth gold finger 528 and that is close to the second edge 5112 and a side edge that is of the first part 52101 of the tenth gold finger 5210 and that is close to the second edge 5112 each may be flush with a side edge that is of the sixth gold finger 526 and that is close to the second edge 5112; a spacing between the eighth gold finger 528 and the second part 52102 of the tenth gold finger 5210 may be 0.2 mm, and a spacing between the tenth gold finger 5210 and the fourth edge 5114 may be 0.5 mm; and a width of the second part 52102 of the tenth gold finger 5210 may be 0.9 mm.

A tolerance of a shape dimension and a spacing dimension is ±0.1 mm.

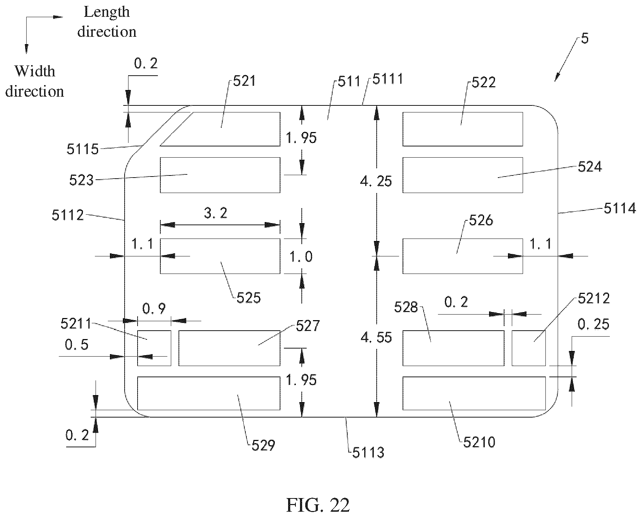

FIG. 22 is a diagram of dimensions of the second NM card 5 shown in FIG. 16 in some other embodiments.

In some embodiments, a first gold finger 521 to a tenth gold finger 5210 of the second NM card 5 are arranged in two columns and five rows, a first column of gold fingers (521, 523, 525, 527, and 529) is arranged close to a second edge 5112, a second column of gold fingers (522, 524, 526, 528, and 5210) is arranged close to a fourth edge 5114, a first row of gold fingers (521 and 522) is arranged close to a first edge 5111, a fifth row of gold fingers (529 and 5210) is arranged close to a third edge 5113, and each row of gold fingers is arranged in alignment in a length direction. The second NM card 5 further includes an eleventh gold finger 5220 and a twelfth gold finger 5230, the eleventh gold finger 5220 and the twelfth gold finger 5230 are arranged in a fourth row of gold fingers (527, 528, 5220, and 5230), the eleventh gold finger 5220 is located between the second edge 5112 and the seventh gold finger 527, and the twelfth gold finger 5230 is located between the fourth edge 5114 and the eighth gold finger 528. The first gold finger 521 may be provided with an oblique edge, to form a right trapezoid. The oblique edge of the first gold finger 521 is disposed to face a cut edge 5115 of the card body 51, and a spacing between the oblique edge and the cut edge 5115 may be 0.2 mm. The second gold finger 522 to the twelfth gold finger 5230 may be rectangular.

For example, in a width direction, a spacing between a center of a second row of gold fingers (523 and 524) and the first edge 5111 may be 1.95 mm, a spacing between a center of a third row of gold fingers (525 and 526) and the first edge 5111 may be 4.25 mm, a spacing between the center of the third row of gold fingers (525 and 526) and the third edge 5113 may be 4.55 mm, and a spacing between a center of the fourth row of gold fingers (527, 528, 5220, and 5230) and the third edge 5113 may be 1.95 mm. In the width direction, a spacing between the first row of gold fingers (521 and 522) and the second row of gold fingers (523 and 524) may be 0.25 mm, and a spacing between the first row of gold fingers (521 and 522) and the first edge 5111 may be 0.2 mm. In the width direction, a spacing between the fourth row of gold fingers (527, 528, 5220, 5230) and the fifth row of gold fingers (529 and 5210) may be 0.25 mm, and a spacing between the fifth row of gold fingers (529 and 5210) and the third edge 5113 may be 0.2 mm. In the width direction, widths of the first gold finger 521 and the twelfth gold finger 5230 each may be 1.0 mm.

For example, in the length direction, a spacing between the second edge 5112 and each of the first gold finger 521, the third gold finger 523, and the fifth gold finger 525 may be 1.1 mm, and a spacing between the fourth edge 5114 and each of the second gold finger 522, the fourth gold finger 524, and the sixth gold finger 526 may be 1.1 mm. In the length direction, a side edge that is of the seventh gold finger 527 and that is close to the fourth edge 5114 and a side edge that is of the ninth gold finger 529 and that is close to the fourth edge 5114 each may be flush with a side edge that is of the fifth gold finger 525 and that is close to the fourth edge 5114; a side edge that is of the eleventh gold finger 5220 and that is close to the second edge 5112 is flush with a side edge that is of the ninth gold finger 529 and that is close to the second edge 5112; and a spacing between the seventh gold finger 527 and the eleventh gold finger 5220 may be 0.2 mm, a spacing between the eleventh gold finger 5220 and the second edge 5112 may be 0.5 mm, and a length of the eleventh gold finger 5220 may be 0.9 mm. In the length direction, a side edge that is of the eighth gold finger 528 and that is close to the second edge 5112 and a side edge that is of the tenth gold finger 5210 and that is close to the second edge 5112 each may be flush with a side edge that is of the sixth gold finger 526 and that is close to the second edge 5112; a side edge that is of the twelfth gold finger 5230 and that is close to the fourth edge 5114 is flush with a side edge that is of the tenth gold finger 5210 and that is close to the fourth edge 5114; and a spacing between the eighth gold finger 528 and the twelfth gold finger 5230 may be 0.2 mm, a spacing between the twelfth gold finger 5230 and the fourth edge 5114 may be 0.5 mm, and a length of the twelfth gold finger 5230 may be 0.9 mm.

A tolerance of a shape dimension and a spacing dimension is ±0.1 mm.

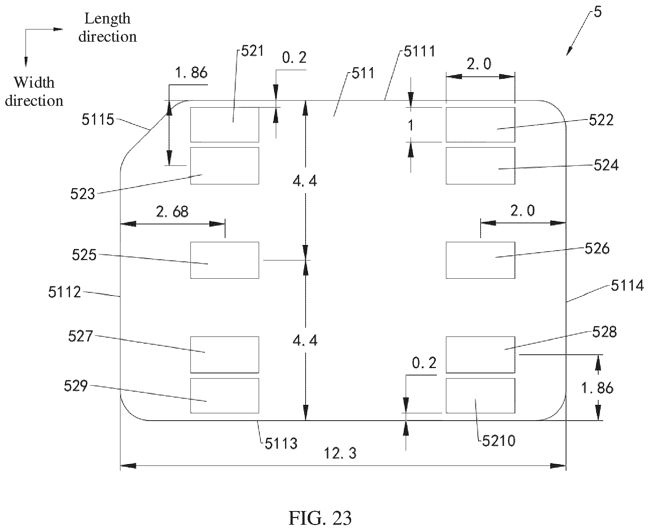

FIG. 23 is a diagram of dimensions of the second NM card 5 shown in FIG. 16 in some other embodiments.

In some embodiments, a first gold finger 521 to a tenth gold finger 5210 of the second NM card 5 are arranged in two columns and five rows, a first column of gold fingers (521, 523, 525, 527, and 529) is arranged close to a second edge 5112, a second column of gold fingers (522, 524, 526, 528, and 5210) is arranged close to a fourth edge 5114, each column of gold fingers is arranged in alignment in a width direction, a first row of gold fingers (521 and 522) is arranged close to a first edge 5111, a fifth row of gold fingers (529 and 5210) is arranged close to a third edge 5113, and each row of gold fingers is arranged in alignment in a length direction. The first gold finger 521 to the tenth gold finger 5210 each may be rectangular. The first gold finger 521 may be closer to a cut edge 5115 of a card body 51 than the other gold fingers.

For example, in the width direction, a spacing between a center of a second row of gold fingers (523 and 524) and the first edge 5111 may be 1.86 mm, a spacing between a center of a third row of gold fingers (525 and 526) and the first edge 5111 may be 4.4 mm, a spacing between the center of the third row of gold fingers (525 and 526) and the third edge 5113 may be 4.4 mm, and a spacing between a center of the fourth row of gold fingers (527 and 528) and the third edge 5113 may be 1.86 mm. A spacing between the first row of gold fingers (521 and 522) and the first edge 5111 may be 0.2 mm, and a spacing between the fifth row of gold fingers (529 and 5210) and the third edge 5113 may be 0.2 mm.

For example, in the length direction, a spacing between a center of the first column of gold fingers (521, 523, 525, 527, and 529) and the second edge 5112 may be 2.68 mm, and a spacing between a center of the second column of gold fingers (522, 524, 526, 528, and 5210) and the fourth edge 5114 may be 2.0 mm. A length of the card body 51 of the second NM card 5 may be 12.3 mm.

A tolerance of a shape dimension and a spacing dimension is ±0.1 mm.

It may be understood that structure dimensions of the second NM card 5 shown in FIG. 20 to FIG. 23 are some examples of the second NM card 5, and a card interface 52 of the second NM card 5 may further have more gold finger arrangement manners and dimensions, provided that the card interface 52 of the second NM card 5 includes at least a first gold finger 521 to a tenth gold finger 5210. This is not strictly limited in embodiments of this application.

The following separately uses examples to describe solutions in which a UFS interface protocol, a PCIe interface protocol, and an SD interface protocol are used for the second NM card, and also uses an example to describe a partial circuit of an electronic device that is compatible with a nano-SIM card and the second NM card. The UFS interface protocol, the PCIe interface protocol, and the SD interface protocol each can be applied to a second NM card having a first gold finger to a tenth gold finger, for example, the second NM card 5 shown in FIG. 17 and FIG. 20 to FIG. 23 and a second NM card having another card interface structure. An example in which the second NM card 5 has the card interface 52 shown in FIG. 17 is used for illustration in the following embodiments.

In some embodiments, the UFS interface protocol is used for the second NM card 5. The UFS protocol is a standard that is formulated by the joint electron device engineering council (Joint Electron Device Engineering Council, JEDEC) association and that is used to define an electrical interface of a UFS universal flash memory and a UFS storage device. The UFS defines a complete protocol stack, and the complete protocol stack is an application layer, a transport layer, and an interconnection layer from top to bottom. The UFS defines a unique UFS feature set, a feature set of an eMMC standard is used as a subset. UniPro (interface) of an MIPI (Mobile Industry Processor Interface, Mobile Industry Processor Interface 20 interface) alliance is used as a data link layer, and M-PHY (serial interface) of the MIPI is used as a physical layer. The data link layer and the physical layer are collectively referred to as an interconnect layer (UFS InterConnect Layer). For the UFS protocol, Version 1.0 is released in 2011, and subsequently, Version 1.1, Version 2.0, Version 2.1, and Version 3.0 are respectively released in 2012, 2013, 2016, and 2018. An update of each version is accompanied by an increase in a speed. The UFS protocol is a bridge after Version 4.5 of an eMMC protocol. The UFS protocol is mainly improved on the transmission layer. Differential serial transmission is performed for data signal transmission in the UFS protocol, to support to simultaneously read and write data. In addition, because a differential signal has a strong anti-interference capability and can provide a wider bandwidth, and parallel data transmission is performed in eMMC, compared with a previous generation protocol standard eMMC, the UFS protocol is featured by a fast speed and low power consumption. Therefore, the UFS protocol is featured by a high speed and low power consumption, and is applicable to an electronic device such as a mobile phone.

For example, the second NM card 5 includes at least 10 gold fingers, for example, includes the first gold finger 521 to the tenth gold finger 5210. In the first gold finger 521 to the tenth gold finger 5210, four gold fingers are configured to transmit data signals (RX+, RX-, TX+, and TX-), one gold finger is configured to transmit a reference clock signal (RCLK, or may be named as REF_CLK), one gold finger is configured to transmit a first power signal (VCC), one gold finger is configured to transmit a ground signal (VSS), and one gold finger is configured to transmit a second power signal (VCCQ). In this case, the second NM card 5 can support the UFS protocol, to implement basic performance of a high-speed card.

The data signal (RX+) and the data signal (RX-) are input differential signals, and the data signal (TX+) and the data signal (TX-) signal are output differential signals. The first power signal (VCC) is responsible for supplying power to a flash memory particle (that is, a storage circuit 513) of the second NM card 5. The second power signal (VCCQ) is responsible for supplying power to a control circuit 512 of the second NM card 5. In some embodiments, the second power signal (VCCQ) may also be responsible for supplying power to an M-PHY interface of the second NM card 5, a flash memory input/output, and another internal low-voltage circuit. A voltage of the first power signal (VCC) may fall within a range of 1.7 V to 1.95 V, or may fall within a range of 2.7 V to 3.6 V. A voltage of the second power signal (VCCQ) may fall within a range of 1.1 V to 1.3 V

In the first gold finger 521 to the tenth gold finger 5210, the two remaining gold fingers may be suspended; or one of the two remaining gold fingers is suspended, and the other gold finger is configured to transmit a detection signal (C/D); or one of the two remaining gold fingers is configured to transmit a detection signal (C/D), and the other gold finger is configured to transmit another signal; or the two remaining gold fingers are configured to transmit detection signals (C/D). The detection signal (C/D) may be a special data signal. When an information card is electrically connected to a card connector and communicates with an electronic device, the electronic device may identify, based on the detection signal (C/D), whether an inserted information card is the second NM card 5. In some embodiments, the electronic device may further identify a version of an inserted second NM card 5 based on the detection signal (C/D), or identify an interface protocol of an inserted second NM card 5. The second NM card 5 transmits the detection signal (C/D) through at least one gold finger, to reduce difficulty in identifying the second NM card 5 by the electronic device. In some other embodiments, in the first gold finger 521 to the tenth gold finger 5210, one or two of the two remaining gold fingers may alternatively be configured to transmit another signal.

The following uses an example to describe a first signal arrangement manner of a second NM card 5 for which a UFS interface protocol is used.

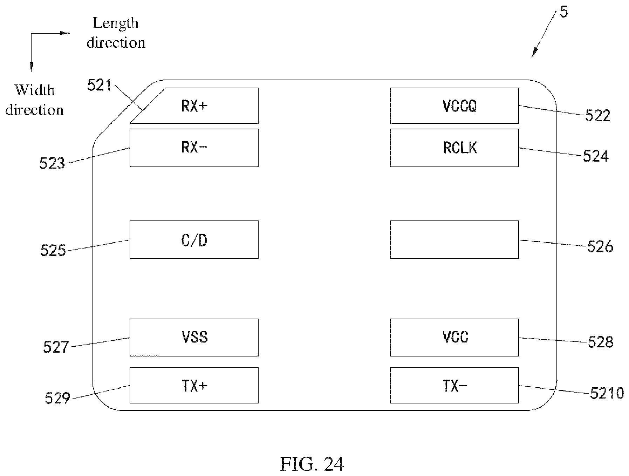

FIG. 24 is a diagram of the second NM card 5 shown in FIG. 17 in some embodiments.

For example, a first gold finger 521, a third gold finger 523, a ninth gold finger 529, and a tenth gold finger 5210 of the second NM card 5 are configured to transmit data signals (RX+, RX-, TX+, and TX-). An example in which the first gold finger 521 is configured to transmit the data signal (RX+), the third gold finger 523 is configured to transmit the data signal (RX-), the ninth gold finger 529 is configured to transmit the data signal (TX+), and the tenth gold finger 5210 is configured to transmit the data signal (TX-) is used for description in the following embodiments. In some other embodiments, the data signals transmitted through the first gold finger 521, the third gold finger 523, the ninth gold finger 529, and the tenth gold finger 5210 can be exchanged. For example, the data signals transmitted through the first gold finger 521 and the third gold finger 523 are exchanged, and the data signals transmitted through the ninth gold finger 529 and the tenth gold finger 5210 are exchanged. Details are not described herein in another embodiment.

A second gold finger 522 is configured to transmit a second power signal (VCCQ), a fourth gold finger 524 is configured to transmit a reference clock signal (RCLK), a seventh gold finger 527 is configured to transmit a ground signal (VSS), and an eighth gold finger 528 is configured to transmit a first power signal (VCC). A fifth gold finger 525 may be configured to transmit a detection signal (C/D). A sixth gold finger 526 is suspended.

Table 3 is Table 1 of a correspondence between a plurality of spring plates of a card connector 11 and each of a plurality of gold fingers of a nano-SIM card 3, a plurality of gold fingers of a first NM card 4, a plurality of gold fingers of a second NM card 5, and transmission signals thereof. When the second NM card 5 is connected to the card connector 11, a first spring plate 11a to a tenth spring plate 11j of the card connector 11 abut against and are electrically connected to the first gold finger 521 to the tenth gold finger 5210 of the second NM card 5 in a one-to-one correspondence, and locations of the third gold finger 523 to the eighth gold finger 528 of the second NM card 5 correspond to locations of a first gold finger 321 to a sixth gold finger 326 of the nano-SIM card 3 in a one-to-one correspondence. In some embodiments, locations of the third gold finger 523 to the tenth gold finger 5210 of the second NM card 5 correspond to locations of a first gold finger 421 to an eighth gold finger 428 of the first NM card 4 in a one-to-one correspondence.

**Table 3**

| Card connector 11 | Nano-SIM card 3 | | First NM card 4 | | Second NM card 5 | |
|---|---|---|---|---|---|---|
| First spring plate 11a | | | | | First gold finger 521 | RX+ |
| Second spring plate 11b | | | | | Second gold finger 522 | VCCQ |
| Third spring plate 11c | First gold finger 321 | DATA | First gold finger 421 | DATA 1 | Third gold finger 523 | RX- |
| Fourth spring plate 11d | Second gold finger 322 | CLK | Second gold finger 422 | CLK | Fourth gold finger 524 | RCLK |
| Fifth spring plate 11e | Third gold finger 323 | VPP | Third gold finger 423 | CMD | Fifth gold finger 525 | C/D |
| Sixth spring plate 11f | Fourth gold finger 324 | RST | Fourth gold finger 424 | DATA 0 | Sixth gold finger 526 | |
| Seventh spring plate 11g | Fifth gold finger 325 | GND | Fifth gold finger 425 | GND | Seventh gold finger 527 | VSS |
| Eighth spring plate 11h | Sixth gold finger 326 | VCC | Sixth gold finger 426 | VCC | Eighth gold finger 528 | VCC |
| Ninth spring plate 11i | | | Seventh gold finger 427 | DATA 3 | Ninth gold finger 529 | TX+ |
| Tenth spring plate 11j | | | Eighth gold finger 428 | DATA 2 | Tenth gold finger 5210 | TX- |

second NM card 5 arranges, on the second gold finger 522, a second power signal (VCCQ) required for a UFS protocol. Because a location of the second gold finger 522 of the second NM card 5 corresponds to none of locations of all the gold fingers of the nano-SIM card 3 and the first NM card 4, the second gold finger 522 of the second NM card 5 does not need to share a same spring plate of the card connector 11 with the nano-SIM card 3 and the first NM card 4, to prevent the second power signal (VCCQ) from sharing a same spring plate with data signals of the nano-SIM card 3 and the first NM card 4, and reduce a risk that the nano-SIM card 3 and the first NM card 4 are burnt by the second power signal (VCCQ) when the nano-SIM card 3 and the first NM card 4 are inserted into an electronic device 100 and are connected to the card connector 11. Reliability of compatibility of the electronic device 100 with the nano-SIM card 3, the first NM card 4, and the second NM card 5 is high. In addition, a high-voltage resistant design that is used to prevent a circuit from being burnt by the second power signal (VCCQ) does not need to be deployed for the first NM card 4 and the nano-SIM card 3 either, to reduce costs.

One high-speed data signal (for example, RX+) of the second NM card 5 is arranged on the first gold finger 521. Because a location of the first gold finger 521 of the second NM card 5 corresponds to none of locations of all the gold fingers of the nano-SIM card 3 and the first NM card 4, the first spring plate 11a is connected to a high-speed data interface of a processor 20 of the electronic device 100 and does not need to be connected to a low-speed data interface. Regardless of whether an information card inserted into the electronic device 100 is the second NM card 5, the nano-SIM card 3, or the first NM card 4, the processor 20 does not need to switch an interface electrically connected to the first spring plate 11a, to reduce difficulty in switching between the high-speed data interface and the low-speed data interface, simplify a circuit of the processor 20, and reduce design difficulty and costs.

In addition, because a location of the seventh gold finger 527 of the second NM card 5 corresponds to a location of the fifth gold finger 325 of the nano-SIM card 3, corresponds to a location of the fifth gold finger 425 of the first NM card 4, and abuts against and is electrically connected to the seventh spring plate 11g of the card connector 11 when the second NM card 5, the nano-SIM card 3, and the first NM card 4 are inserted into the electronic device 100, and the seventh gold finger 527 of the second NM card 5, the fifth gold finger 325 of the nano-SIM card 3, and the fifth gold finger 425 of the first NM card 4 are all configured to transmit ground signals (which are respectively VSS/GND/GND), the processor 20 of the electronic device 100 may be electrically connected to the seventh spring plate 11g of the card connector 11 through a same ground interface. Regardless of whether the information inserted into the electronic device 100 is the second NM card 5, the nano-SIM card 3, or the first NM card 4, the processor 20 does not need to switch an interface electrically connected to the seventh spring plate 11g, to simplify a circuit of the processor 20, and reduce design difficulty and costs.

Because a location of the eighth gold finger 528 of the second NM card 5 corresponds to a location of the sixth gold finger 326 of the nano-SIM card 3, corresponds to a location of the sixth gold finger 426 of the first NM card 4, and abuts against and is electrically connected to the eighth spring plate 11h of the card connector 11 when the second NM card 5, the nano-SIM card 3, and the first NM card 4 are inserted into the electronic device 100, the eighth gold finger 528 of the second NM card 5, the sixth gold finger 326 of the nano-SIM card 3, and the sixth gold finger 426 of the first NM card 4 are all configured to transmit power signals (which are respectively VCC/VCC/VCC), the processor 20 of the electronic device 100 may be electrically connected to the eighth spring plate 11h of the card connector 11 through a same power interface. Regardless of whether the information inserted into the electronic device 100 is the second NM card 5, the nano-SIM card 3, or the first NM card 4, the processor 20 does not need to switch an interface electrically connected to the eighth spring plate 11h, to simplify a circuit of the processor 20, and reduce design difficulty and costs.

A location of the fourth gold finger 524 of the second NM card 5 corresponds to a location of the second gold finger 322 of the nano-SIM card 3, corresponds to a location of the second gold finger 422 of the first NM card 4, and abuts against and is electrically connected to the fourth spring plate 11d of the card connector 11 when the second NM card 5, the nano-SIM card 3, and the first NM card 4 are inserted into the electronic device 100, the fourth gold finger 524 of the second NM card 5 is configured to transmit a reference clock signal (RCLK), the second gold finger 322 of the nano-SIM card 3 is configured to transmit a clock signal (CLK), the second gold finger 422 of the first NM card 4 is configured to transmit a clock signal (CLK), and the second NM card 5, the nano-SIM card 3, and the first NM card 4 may share the fourth spring plate 11d in a time-division manner. The processor 20 may provide clock signals of different frequencies through the fourth spring plate 11d, without a need to switch a data interface signal, to simplify the circuit of the processor 20, and reduce design complexity and costs. In some scenarios, when the first NM card 4, the second NM card 5, and the nano-SIM card 3 can have clock signals of a same frequency, the processor 20 may provide a same clock signal for the three types of cards, and no longer needs to perform switching, to simplify design difficulty of the processor 20. For example, there is a unified clock frequency of 20 MHz.

A location of the third gold finger 523 of the second NM card 5 corresponds to a location of the first gold finger 321 of the nano-SIM card 3, corresponds to a location of the first gold finger 421 of the first NM card 4, and abuts against and is electrically connected to the third spring plate 11c of the card connector 11 when the second NM card 5, the nano-SIM card 3, and the first NM card 4 are inserted into the electronic device 100, the third gold finger 523 of the second NM card 5 is configured to transmit a data signal (for example, RX-), the first gold finger 321 of the nano-SIM card 3 is configured to transmit a data signal (DATA), the first gold finger 421 of the first NM card 4 is configured to transmit a data signal (for example, DATA 1), and the second NM card 5, the nano-SIM card 3, and the first NM card may share the third spring plate 11c in a time-division manner.

A location of the fifth gold finger 525 of the second NM card 5 corresponds to a location of the third gold finger 323 of the nano-SIM card 3, corresponds to a location of the third gold finger 423 of the first NM card 4, and abuts against and is electrically connected to the fifth spring plate 11e of the card connector 11 when the second NM card 5, the nano-SIM card 3, and the first NM card 4 are inserted into the electronic device 100, the fifth gold finger 525 of the second NM card 5 is configured to transmit a detection signal (C/D), the third gold finger 323 of the nano-SIM card 3 is configured to transmit a programming voltage/input signal (VPP), the third gold finger 423 of the first NM card 4 is configured to transmit a command and response signal (CMD), and the second NM card 5, the nano-SIM card 3, and the first NM card 4 may share the fifth spring plate 11e in a time-division manner. Optionally, the programming voltage/input signal (VPP) signal of the nano-SIM card 3 may not be supported, to reduce design difficulty of the processor 20.

A location of the ninth gold finger 529 of the second NM card 5 corresponds to a location of the seventh gold finger 427 of the first NM card 4, and abuts against and is electrically connected to the ninth spring plate 11i of the card connector 11 when the second NM card 5 and the first NM card 4 are inserted into the electronic device 100, the ninth gold finger 529 of the second NM card 5 is configured to transmit a data signal (for example, TX+), the seventh gold finger 427 of the first NM card 4 is configured to transmit a data signal (for example, DATA 3), and the second NM card 5 and the first NM card 4 may share the ninth spring plate 11i in a time-division manner.

A location of the tenth gold finger 5210 of the second NM card 5 corresponds to a location of the eighth gold finger 428 of the first NM card 4, and abuts against and is electrically connected to the tenth spring plate 11j of the card connector 11 when the second NM card 5 and the first NM card 4 are inserted into the electronic device 100, the tenth gold finger 5210 of the second NM card 5 is configured to transmit a data signal (for example, TX-), the eighth gold finger 428 of the first NM card 4 is configured to transmit a data signal (for example, DATA 2), and the second NM card 5 and the first NM card 4 may share the tenth spring plate 11j in a time-division manner.

When the electronic device 100 is compatible with the nano-SIM card 3 and the second NM card 5, and is incompatible with the first NM card 4, the ninth spring plate 11i and the tenth spring plate 11j of the card connector 11 may alternatively be exclusive spring plates of the second NM card 5, and the ninth spring plate 11i and the tenth spring plate 11j are both connected to a high-speed data interface. Regardless of whether the information card inserted into the electronic device 100 is the second NM card 5 or the nano-SIM card 3, the processor 20 does not need to switch an interface electrically connected to the ninth spring plate 11i and the tenth spring plate 11j, to simplify a circuit of the processor 20, and reduce design difficulty and costs.

For example, the fourth gold finger 524 and the tenth gold finger 5210 of the second NM card 5 may be both electrically connected to a high-voltage resistant circuit or a protection switch, to prevent a circuit from being burnt when the card interface 52 of the second NM card 5 is short-circuited. The high-voltage resistant circuit or the protection switch is located in a package 511 of the second NM card 5. In some other embodiments, a high-impedance protection circuit may be provided in the electronic device, to prevent a circuit of the second NM card 5 from being burnt. For example, this can be implemented by adding a protection circuit in an interface controller of the electronic device.

In this embodiment of this application, that a spring plate is shared in a time-division manner may include that different signals are provided when different information cards are inserted. For example, a spring plate provides a signal corresponding to a gold finger of the first NM card 4 when the first NM card 4 is inserted, and the spring plate provides a signal corresponding to a gold finger of the second NM card 5 when the second NM card 5 is inserted. This is an example scenario of time-division multiplexing.

In some other embodiments, the fifth gold finger 525 may be suspended, and the sixth gold finger 526 is configured to transmit a C/D signal; or both the fifth gold finger 525 and the sixth gold finger 526 are suspended.

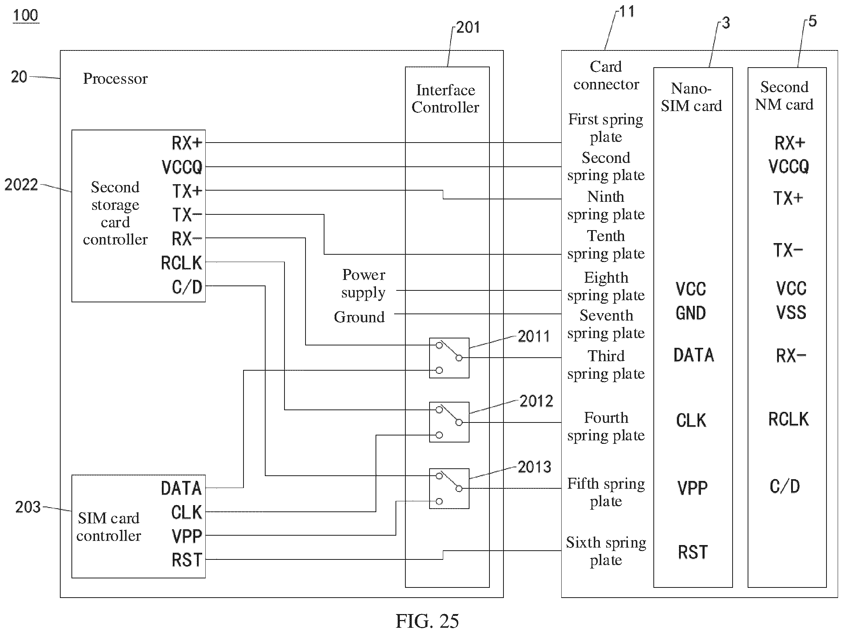

FIG. 25 is a schematic of a partial circuit of the electronic device 100 shown in FIG. 1 in some embodiments.

In some embodiments, a card holder assembly 10 of the electronic device 100 is compatible with a nano-SIM card 3 and a second NM card 5, and a signal arrangement of a card interface 52 of the second NM card 5 is shown in FIG. 24. A processor 20 of the electronic device 100 includes an interface controller 201, a SIM card controller 203, and a second memory card controller 2022. The interface controller 201 is electrically connected to the SIM card controller 203 and the second memory card controller 2022. The interface controller 201 is electrically connected to a first spring plate 11a to a tenth spring plate 11j of a card connector 11 of the card holder assembly 10.

The SIM card controller 203 includes a data interface, a clock interface, a programming voltage/input interface, and a reset interface. The data interface is configured to transmit a data signal (DATA), the clock interface is configured to transmit a clock signal (CLK), the programming voltage/input interface is configured to transmit a programming voltage/input signal (VPP), and the reset interface is configured to transmit a reset signal (RST). Optionally, the programming voltage/input interface may not be supported, to reduce design difficulty of the processor 20. In FIG. 25 and related descriptions of subsequent accompanying drawings and content of embodiments, a plurality of interfaces of the SIM card controller 203 are marked and illustrated by using signals transmitted through the plurality of interfaces.

The second memory card controller 2022 supports a UFS protocol. The second memory card controller 2022 includes four data interfaces, a reference clock interface, a second power interface, and a detection interface. The four data interfaces are configured to transmit data signals (RX+, RX-, TX+, and TX-), the reference clock interface is configured to transmit a reference clock signal (RCLK), the second power interface is configured to transmit a second power signal (VCCQ), and the detection interface is configured to transmit a detection signal (C/D). In FIG. 25 and related descriptions of subsequent accompanying drawings and content of embodiments, a plurality of interfaces of the second memory card controller 2022 are marked and illustrated by using signals transmitted through the plurality of interfaces. In some other embodiments, the second power interface may alternatively be independent of the second memory card controller 2022. This is not strictly limited in embodiments of this application.

The processor 20 further includes a power interface and a ground interface, the power interface is configured to transmit a power signal (VCC) or a first power signal (VCC), and the ground interface is configured to transmit a ground signal (GND) or a ground signal (VSS). The power interface and the ground interface may be independent of the SIM card controller 203 and the second memory card controller 2022, or may be separately split and integrated into the SIM card controller 203 and the second memory card controller 2022. This is not strictly limited in embodiments of this application. In FIG. 25 and subsequent accompanying drawings, that the power interface and the ground interface are independent of the SIM card controller 203 and the second memory card controller 2022 is used as an example for illustration, and the power interface and the ground interface are respectively identified as a power supply and a ground.

For example, the interface controller 201 is configured to: connect the SIM card controller 203 and the card connector 11, or connect the second memory card controller 2022 and the card connector 11. The interface controller 201 may include a plurality of switches and a conducting wire.

In some embodiments, the interface controller 201 includes a first switch 2011, a second switch 2012, and a third switch 2013.

The first switch 2011 is connected to a data interface (for example, RX-) of the second memory card controller 2022 and a data interface (DATA) of the SIM card controller 203, the first switch 2011 is further connected to a third spring plate 11c of the card connector 11, and the first switch 2011 is configured to connect the third spring plate 11c and the data interface (for example, RX-) of the second memory card controller 2022, or connect the third spring plate 11c and the data interface (DATA) of the SIM card controller 203.

The second switch 2012 is connected to the reference clock interface (RCLK) of the second memory card controller 2022 and the clock interface (CLK) of the SIM card controller 203, the second switch 2012 is further connected to a fourth spring plate 11d of the card connector 11, and the second switch 2012 is configured to: connect the fourth spring plate 11d and the reference clock interface (RCLK) of the second memory card controller 2022, or connect the fourth spring plate 11d and the clock interface (CLK) of the SIM card controller 203.

The third switch 2013 is connected to the detection interface (C/D) of the second memory card controller 2022 and the programming voltage/input interface (VPP) of the SIM card controller 203, the third switch 2013 is further connected to a fifth spring plate 11e of the card connector 11, and the third switch 2013 is configured to: connect the fifth spring plate 11e and the detection interface (C/D) of the second memory card controller 2022, or connect the fifth spring plate 11e and the programming voltage/input interface (VPP) of the SIM card controller 203.

Another data interface (for example, RX+) of the second memory card controller 2022 is electrically connected to the first spring plate 11a of the card connector 11 by using the interface controller 201. The second power interface (VCCQ) of the second memory card controller 2022 is electrically connected to a second spring plate 11b of the card connector 11 by using the interface controller 201. Another data interface (for example, TX+) of the second memory card controller 2022 is electrically connected to a ninth spring plate 11i of the card connector 11 by using the interface controller 201. Another data interface (for example, TX-) of the second memory card controller 2022 is electrically connected to the tenth spring plate 11j of the card connector 11 by using the interface controller 201. The power interface of the processor 20 is electrically connected to an eighth spring plate 11h of the card connector 11 by using the interface controller 201. The ground interface of the processor 20 is electrically connected to a seventh spring plate 11g of the card connector 11 by using the interface controller 201. The reset interface (RST) of the SIM card controller 203 is electrically connected to a sixth spring plate 11f of the card connector 11 by using the interface controller 201.

Between a data interface (for example, RX+) of the second memory card controller 2022 and the first spring plate 11a, between the second power interface (VCCQ) of the second memory card controller 2022 and the second spring plate 11b, between a data interface (for example, TX+) of the second memory card controller 2022 and the ninth spring plate 11i, between a data interface (for example, TX-) of the second memory card controller 2022 and the tenth spring plate 11j, between the power interface of the processor 20 and the eighth spring plate 11h, and between the ground interface and the seventh spring plate 11g, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector 11, the interface controller 201 connects the SIM card controller 203 and the card connector 11, the SIM card controller 203 transmits the data signal (DATA), the clock signal (CLK), the programming voltage/input signal (VPP), and the reset signal (RST) to the nano-SIM card 3 through the third spring plate 11c and the sixth spring plate 11f of the card connector 11, the processor 20 of the electronic device 100 transmits the power signal (VCC) and the ground signal (GND) to the nano-SIM card 3 through the eighth spring plate 11h and the seventh spring plate 11g of the card connector 11, and the nano-SIM card 3 communicates with the electronic device 100.

When the second NM card 5 is inserted into the card holder assembly 10 of the electronic device 100 and the second NM card 5 is electrically connected to the card connector 11, the interface controller 201 connects the second memory card controller 2022 and the card connector 11, the second memory card controller 2022 transmits the data signals (RX+, RX-, TX+, and TX-), the reference clock signal (RCLK), the second power signal (VCCQ), and the detection signal (C/D) to the second NM card 5 through the first spring plate 11a to the fifth spring plate 11e, the ninth spring plate 11i, and the tenth spring plate 11j of the card connector 11, the processor 20 of the electronic device 100 transmits the first power signal (VCC) and the ground signal (VSS) to the second NM card 5 through the eighth spring plate 11h and the seventh spring plate 11g of the card connector 11, and the second NM card 5 communicates with the electronic device 100. Therefore, the electronic device 100 is compatible with the nano-SIM card 3 and the second NM card 5.

In some other embodiments, the programming voltage/input signal (VPP) may not be supported, to reduce the design difficulty of the processor 20. In this case, the SIM card controller 203 may not include the programming voltage/input interface (VPP), the interface controller 201 may not include the third switch 2013, and the detection interface (C/D) of the second memory card controller 2022 is electrically connected to the fifth spring plate 11e of the card connector 11 through the interface controller 201. For other solution content, refer to the foregoing embodiments. Details are not described herein again.

It may be understood that, when the fifth gold finger 525 of the second NM card 5 is suspended and the sixth gold finger 526 is configured to transmit the detection signal (C/D), the interface controller 201 is adaptively adjusted. For example, the interface controller 201 includes a fourth switch 2014, and the third switch 2013 may be omitted. The detection interface (C/D) of the second memory card controller 2022 is connected to the fourth switch 2014, and the interface controller 201 is further configured to connect the detection interface (C/D) of the second memory card controller 2022 and the sixth spring plate 11f when the second NM card 5 is inserted into the electronic device 100. When the fifth gold finger 525 and the sixth gold finger 526 of the second NM card 5 are both suspended, the second memory card controller 2022 does not need to be provided with the detection interface, and the interface controller 201 is adaptively adjusted, for example, may not be provided with the fourth switch 2014.

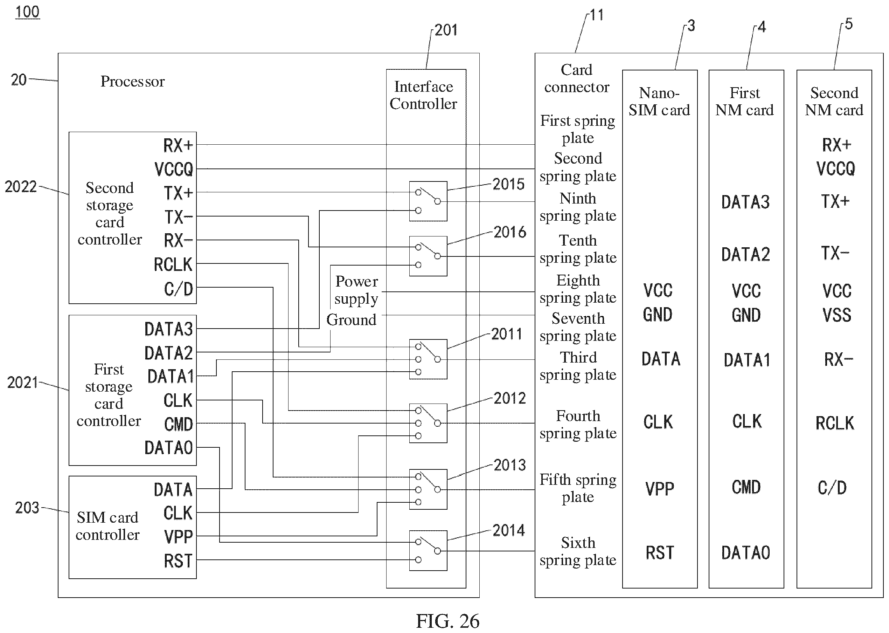

FIG. 26 is a schematic of a partial circuit of the electronic device 100 shown in FIG. 1 in some other embodiments.

In some embodiments, a card holder assembly 10 of the electronic device 100 is compatible with a nano-SIM card 3, a first NM card 4, and a second NM card 5, and a signal arrangement of a card interface 52 of the second NM card 5 is shown in FIG. 24. A processor 20 of the electronic device 100 includes an interface controller 201, a SIM card controller 203, a first memory card controller 2021, and a second memory card controller 2022. The SIM card controller 203, the first memory card controller 2021, and the second memory card controller 2022 are electrically connected to the interface controller 201. The interface controller 201 is electrically connected to a first spring plate 11a to a tenth spring plate 11j of a card connector 11 of the card holder assembly 10.

For the SIM card controller 203 and the second memory card controller 2022, refer to related descriptions in the embodiment corresponding to FIG. 25. Details are not described herein again. The first memory card controller 2021 includes four data interfaces, a clock interface, and a command and response interface. The four data interfaces are configured to transmit data signals (DATA 0, DATA 1, DATA 2, and DATA 3), the clock interface is configured to transmit a clock signal (CLK), and the command and response interface is configured to transmit a command and response signal (CMD). In FIG. 26 and related descriptions of subsequent accompanying drawings and content of embodiments, a plurality of interfaces of the first memory card controller 2021 are marked and illustrated by using signals transmitted through the plurality of interfaces. After a power interface and a ground interface are split, the power interface and the ground interface may alternatively be integrated into the first memory card controller 2021.

For example, the interface controller 201 is configured to: connect the SIM card controller 203 and the card connector 11, or connect the first memory card controller 2021 and the card connector 11, or connect the second memory card controller 2022 and the card connector 11. The interface controller 201 may include a plurality of switches and a conducting wire.

In some embodiments, the interface controller 201 includes a first switch 2011, a second switch 2012, a third switch 2013, a fourth switch 2014, a fifth switch 2015, and a sixth switch 2016.

The first switch 2011 is connected to a data interface (for example, RX-) of the second memory card controller 2022, a data interface (for example, DATA 1) of the first memory card controller 2021, and a data interface (DATA) of the SIM card controller 203, the first switch 2011 is further connected to a third spring plate 11c of the card connector 11, and the first switch 2011 is configured to: connect the third spring plate 11c and the data interface (for example, RX-) of the second memory card controller 2022, or connect the third spring plate 11c and the data interface (for example, DATA 1) of the first memory card controller 2021, or connect the third spring plate 11c and the data interface (DATA) of the SIM card controller 203.

The second switch 2012 is connected to a reference clock interface (RCLK) of the second memory card controller 2022, the clock interface (CLK) of the first memory card controller 2021, and a clock interface (CLK) of the SIM card controller 203, the second switch 2012 is further connected to a fourth spring plate 11d of the card connector 11, and the second switch 2012 is configured to: connect the fourth spring plate 11d and the reference clock interface (RCLK) of the second memory card controller 2022, or connect the third spring plate 11c and the clock interface (CLK) of the first memory card controller 2021, or connect the fourth spring plate 11d and the clock interface (CLK) of the SIM card controller 203.

The third switch 2013 is connected to a detection interface (C/D) of the second memory card controller 2022, the command and response interface (CMD) of the first memory card controller 2021, and a programming voltage/input interface (VPP) of the SIM card controller 203, the third switch 2013 is further connected to a fifth spring plate 11e of the card connector 11, and the third switch 2013 is configured to: connect the fifth spring plate 11e and the detection interface (C/D) of the second memory card controller 2022, connect the fifth spring plate 11e and the command and response interface (CMD) of the first memory card controller 2021, or connect the fifth spring plate 11e and the programming voltage/input interface (VPP) of the SIM card controller 203. Optionally, the detection interface (C/D) or the programming voltage/input interface (VPP) may be supported, or may not be supported, to reduce design difficulty of the processor 20.

The fourth switch 2014 is connected to another data interface (for example, DATA 0) of the first memory card controller 2021 and a reset interface (RST) of the SIM card controller 203, the fourth switch 2014 is further connected to a sixth spring plate 11f of the card connector 11, and the fourth switch 2014 is configured to: connect the sixth spring plate 11f and the data interface (for example, DATA 0) of the first memory card controller 2021, or connect the sixth spring plate 11f and the reset interface (RST) of the SIM card controller 203.

The fifth switch 2015 is connected to another data interface (for example, TX+) of the second memory card controller 2022 and another data interface (for example, DATA 3) of the first memory card controller 2021, the fifth switch 2015 is further connected to a ninth spring plate 11i of the card connector 11, and the fifth switch 2015 is configured to: connect the ninth spring plate 11i and the data interface (for example, TX+) of the second memory card controller 2022, or connect the ninth spring plate 11i and the data interface (for example, DATA 3) of the first memory card controller 2021.

The sixth switch 2016 is connected to another data interface (for example, TX-) of the second memory card controller 2022 and another data interface (for example, DATA 2) of the first memory card controller 2021, the sixth switch 2016 is further connected to the tenth spring plate 11j of the card connector 11, and the sixth switch 2016 is configured to: connect the tenth spring plate 11j and the data interface (for example, TX-) of the second memory card controller 2022, or connect the tenth spring plate 11j and the data interface (for example, DATA 2) of the first memory card controller 2021.

The another data interface (for example, RX+) of the second memory card controller 2022 is electrically connected to the first spring plate 11a of the card connector 11 by using the interface controller 201. The second power interface (VCCQ) of the second memory card controller 2022 is electrically connected to a second spring plate 11b of the card connector 11 by using the interface controller 201. The power interface of the processor 20 is electrically connected to an eighth spring plate 11h of the card connector 11 by using the interface controller 201. The ground interface of the processor 20 is electrically connected to a seventh spring plate 11g of the card connector 11 by using the interface controller 201. Between the data interface (for example, RX+) of the second memory card controller 2022 and the first spring plate 11a, between the second power interface (VCCQ) and the second spring plate 11b, between the power interface of the processor 20 and the eighth spring plate 11h, and between the ground interface and the seventh spring plate 11g, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector 11, the interface controller 201 connects the SIM card controller 203 and the card connector 11, the SIM card controller 203 transmits the data signal (DATA), the clock signal (CLK), the transmission programming voltage/input signal (VPP), and the reset signal (RST) to the nano-SIM card 3 through the third spring plate 11c and the sixth spring plate 11f of the card connector 11, the processor 20 of the electronic device 100 transmits the power signal (VCC) and the ground signal (GND) to the nano-SIM card 3 through the eighth spring plate 11h and the seventh spring plate 11g of the card connector 11, and the nano-SIM card 3 communicates with the electronic device 100.

When the first NM card 4 is inserted into the card holder assembly 10 of the electronic device 100 and the first NM card 4 is electrically connected to the card connector 11, the interface controller 201 connects the first memory card controller 2021 and the card connector 11, the first memory card controller 2021 transmits the data signals (DATA 0, DATA 1, DATA 2, and DATA 3), the clock signal (CLK), and the command and response signal (CMD) to the first NM card 4 through the third spring plate 11c to the sixth spring plate 11f, the ninth spring plate 11i, and the tenth spring plate 11j of the card connector 11, the processor 20 of the electronic device 100 transmits the power signal (VCC) and the ground signal (GND) to the first NM card 4 through the eighth spring plate 11h and the seventh spring plate 11g of the card connector 11, and the first NM card 4 communicates with the electronic device 100.

When the second NM card 5 is inserted into the card holder assembly 10 of the electronic device 100 and the second NM card 5 is electrically connected to the card connector 11, the interface controller 201 connects the second memory card controller 2022 and the card connector 11, the second memory card controller 2022 transmits the data signals (RX+, RX-, TX+, and TX-), the reference clock signal (RCLK), the second power signal (VCCQ), and the detection signal (C/D) to the second NM card 5 through the first spring plate 11a to the fifth spring plate 11e, the ninth spring plate 11i, and the tenth spring plate 11j of the card connector 11, the processor 20 of the electronic device 100 transmits the first power signal (VCC) and the ground signal (VSS) to the second NM card 5 through the eighth spring plate 11h and the seventh spring plate 11g of the card connector 11, and the second NM card 5 communicates with the electronic device 100. Therefore, the electronic device 100 is compatible with the nano-SIM card 3, the first NM card 4, and the second NM card 5.

In some other embodiments, the programming voltage/input signal (VPP) may not be supported, to reduce the design difficulty of the processor 20. In this case, the SIM card controller 203 may not include the programming voltage/input interface (VPP), the third switch 2013 is connected to the detection interface (C/D) of the second memory card controller 2022 and the command and response interface (CMD) of the first memory card controller 2021, and the third switch 2013 is further connected to the fifth spring plate 11e of the card connector 11. For other solution content, refer to the foregoing embodiments. Details are not described herein again.

It may be understood that, when the fifth gold finger 525 of the second NM card 5 is suspended and the sixth gold finger 526 is configured to transmit the detection signal (C/D), the interface controller 201 is adaptively adjusted. For example, the detection interface (C/D) of the second memory card controller 2022 is connected to the fourth switch 2014, and the interface controller 201 is further configured to connect the detection interface (C/D) of the second memory card controller 2022 and the sixth spring plate 11f when the second NM card 5 is inserted into the electronic device 100. When the fifth gold finger 525 and the sixth gold finger 526 of the second NM card 5 are both suspended, the second memory card controller 2022 does not need to be provided with the detection interface, and the interface controller 201 is adaptively adjusted.

The following uses an example to describe a second signal arrangement manner of a second NM card 5 for which a UFS interface protocol is used.

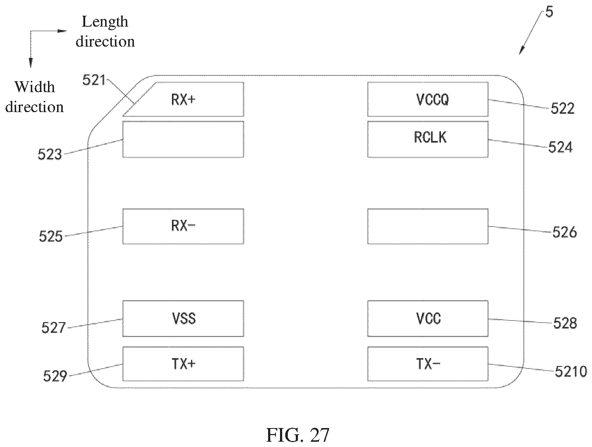

FIG. 27 is a diagram of the second NM card 5 shown in FIG. 17 in some other embodiments.

For example, a first gold finger 521, a fifth gold finger 525, a ninth gold finger 529, and a tenth gold finger 5210 of the second NM card 5 are configured to transmit data signals. An example in which the first gold finger 521 is configured to transmit a data signal (RX+), the fifth gold finger 525 is configured to transmit a data signal (RX-), the ninth gold finger 529 is configured to transmit a data signal (TX+), and the tenth gold finger 5210 is configured to transmit a data signal (TX-) is used for description in the following embodiments. In some other embodiments, the data signals transmitted through the first gold finger 521, the fifth gold finger 525, the ninth gold finger 529, and the tenth gold finger 5210 can be exchanged. For example, the data signals transmitted through the first gold finger 521 and the fifth gold finger 525 are exchanged, and the data signals transmitted through the ninth gold finger 529 and the tenth gold finger 5210 are exchanged. Details are not described herein in another embodiment.

A second gold finger 522 is configured to transmit a second power signal (VCCQ), a fourth gold finger 524 is configured to transmit a reference clock signal (RCLK), a seventh gold finger 527 is configured to transmit a ground signal (VSS), and an eighth gold finger 528 is configured to transmit a first power signal (VCC). A third gold finger 523 and a sixth gold finger 526 are suspended.

Table 4 is Table 2 of a correspondence between a plurality of spring plates of a card connector 11 and each of a plurality of gold fingers of a nano-SIM card 3, a plurality of gold fingers of a first NM card 4, a plurality of gold fingers of the second NM card 5, and transmission signals thereof. When the second NM card 5 is connected to the card connector 11, a first spring plate 11a to a tenth spring plate 11j of the card connector 11 abut against and are electrically connected to the first gold finger 521 to the tenth gold finger 5210 of the second NM card 5 in a one-to-one correspondence, and locations of the third gold finger 523 to the eighth gold finger 528 of the second NM card 5 correspond to locations of a first gold finger 321 to a sixth gold finger 326 of the nano-SIM card 3 in a one-to-one correspondence. In some embodiments, locations of the third gold finger 523 to the tenth gold finger 5210 of the second NM card 5 correspond to locations of a first gold finger 421 to an eighth gold finger 428 of the first NM card 4 in a one-to-one correspondence.

**Table 4**

| Card connector 11 | Nano-SIM card 3 | | First NM card 4 | | Second NM card 5 | |
|---|---|---|---|---|---|---|
| First spring plate 11a | | | | | First gold finger 521 | RX+ |
| Second spring plate 11b | | | | | Second gold finger 522 | VCCQ |
| Third spring plate 11c | First gold finger 321 | DATA | First gold finger 421 | DATA 1 | Third gold finger 523 | |
| Fourth spring plate 11d | Second gold finger 322 | CLK | Second gold finger 422 | CLK | Fourth gold finger 524 | RCLK |
| Fifth spring plate 11e | Third gold finger 323 | VPP | Third gold finger 423 | CMD | Fifth gold finger 525 | RX- |
| Sixth spring plate 11f | Fourth gold finger 324 | RST | Fourth gold finger 424 | DATA 0 | Sixth gold finger 526 | |
| Seventh spring plate 11g | Fifth gold finger 325 | GND | Fifth gold finger 425 | GND | Seventh gold finger 527 | VSS |
| Eighth spring plate 11h | Sixth gold finger 326 | VCC | Sixth gold finger 426 | VCC | Eighth gold finger 528 | VCC |
| Ninth spring plate 11i | | | Seventh gold finger 427 | DATA 3 | Ninth gold finger 529 | TX+ |
| Tenth spring plate 11j | | | Eighth gold finger 428 | DATA 2 | Tenth gold finger 5210 | TX- |

In this embodiment, the second NM card 5 arranges, on the second gold finger 522, a second power signal (VCCQ) required for a UFS protocol. Because a location of the second gold finger 522 of the second NM card 5 corresponds to none of locations of all the gold fingers of the nano-SIM card 3 and the first NM card 4, the second gold finger 522 of the second NM card 5 does not need to share a same spring plate of the card connector 11 with the nano-SIM card 3 and the first NM card 4, to prevent the second power signal (VCCQ) from sharing a same spring plate with data signals of the nano-SIM card 3 and the first NM card 4, and reduce a risk that the nano-SIM card 3 and the first NM card 4 are burnt by the second power signal (VCCQ) when the nano-SIM card 3 and the first NM card 4 are inserted into an electronic device 100 and are connected to the card connector 11. Reliability of compatibility of the electronic device 100 with the nano-SIM card 3, the first NM card 4, and the second NM card 5 is high. In addition, a high-voltage resistant design that is used to prevent a circuit from being burnt by the second power signal (VCCQ) does not need to be deployed for the first NM card 4 and the nano-SIM card 3 either, to reduce costs.

One high-speed data signal (for example, RX+) of the second NM card 5 is arranged on the first gold finger 521. Because a location of the first gold finger 521 of the second NM card 5 corresponds to none of locations of all the gold fingers of the nano-SIM card 3 and the first NM card 4, the first spring plate 11a is connected to a high-speed data interface of a processor 20 of the electronic device 100 and does not need to be connected to a low-speed data interface. Regardless of whether an information card inserted into the electronic device 100 is the second NM card 5, the nano-SIM card 3, or the first NM card 4, the processor 20 does not need to switch an interface electrically connected to the first spring plate 11a, to reduce difficulty in switching between the high-speed data interface and the low-speed data interface, simplify a circuit of the processor 20, and reduce design difficulty and costs.

In addition, because a location of the seventh gold finger 527 of the second NM card 5 corresponds to a location of the fifth gold finger 325 of the nano-SIM card 3, corresponds to a location of the fifth gold finger 425 of the first NM card 4, and abuts against and is electrically connected to the seventh spring plate 11g of the card connector 11 when the second NM card 5, the nano-SIM card 3, and the first NM card 4 are inserted into the electronic device 100, and the seventh gold finger 527 of the second NM card 5, the fifth gold finger 325 of the nano-SIM card 3, and the fifth gold finger 425 of the first NM card 4 are all configured to transmit ground signals (which are respectively VSS/GND/GND), the processor 20 of the electronic device 100 may be electrically connected to the seventh spring plate 11g of the card connector 11 through a same ground interface. Regardless of whether the information inserted into the electronic device 100 is the second NM card 5, the nano-SIM card 3, or the first NM card 4, the processor 20 does not need to switch an interface electrically connected to the seventh spring plate 11g, to simplify a circuit of the processor 20, and reduce design difficulty and costs.

Because a location of the eighth gold finger 528 of the second NM card 5 corresponds to a location of the sixth gold finger 326 of the nano-SIM card 3, corresponds to a location of the sixth gold finger 426 of the first NM card 4, and abuts against and is electrically connected to the eighth spring plate 11h of the card connector 11 when the second NM card 5, the nano-SIM card 3, and the first NM card 4 are inserted into the electronic device 100, the eighth gold finger 528 of the second NM card 5, the sixth gold finger 326 of the nano-SIM card 3, and the sixth gold finger 426 of the first NM card 4 are all configured to transmit power signals (which are respectively VCC/VCC/VCC), the processor 20 of the electronic device 100 may be electrically connected to the eighth spring plate 11h of the card connector 11 through a same power interface. Regardless of whether the information inserted into the electronic device 100 is the second NM card 5, the nano-SIM card 3, or the first NM card 4, the processor 20 does not need to switch an interface electrically connected to the eighth spring plate 11h, to simplify a circuit of the processor 20, and reduce design difficulty and costs.

A location of the fourth gold finger 524 of the second NM card 5 corresponds to a location of the second gold finger 322 of the nano-SIM card 3, corresponds to a location of the second gold finger 422 of the first NM card 4, and abuts against and is electrically connected to the fourth spring plate 11d of the card connector 11 when the second NM card 5, the nano-SIM card 3, and the first NM card 4 are inserted into the electronic device 100, the fourth gold finger 524 of the second NM card 5 is configured to transmit a reference clock signal (RCLK), the second gold finger 322 of the nano-SIM card 3 is configured to transmit a clock signal (CLK), the second gold finger 422 of the first NM card 4 is configured to transmit a clock signal (CLK), and the second NM card 5, the nano-SIM card 3, and the first NM card 4 may share the fourth spring plate 11d in a time-division manner. The processor 20 may provide clock signals of different frequencies through the fourth spring plate 11d, without a need to switch a data interface signal, to simplify the circuit of the processor 20, and reduce design complexity and costs. In some scenarios, when the first NM card 4, the second NM card 5, and the nano-SIM card 3 can have clock signals of a same frequency, the processor 20 may provide a same clock signal for the three types of cards, and no longer needs to perform switching, to simplify design difficulty of the processor 20. For example, there is a unified clock frequency of 20 MHz.

A location of the fifth gold finger 525 of the second NM card 5 corresponds to a location of the third gold finger 323 of the nano-SIM card 3, corresponds to a location of the third gold finger 423 of the first NM card 4, and abuts against and is electrically connected to the fifth spring plate 11e of the card connector 11 when the second NM card 5, the nano-SIM card 3, and the first NM card 4 are inserted into the electronic device 100, the fifth gold finger 525 of the second NM card 5 is configured to transmit a data signal (for example, RX-), the third gold finger 323 of the nano-SIM card 3 is configured to transmit a programming voltage/input signal (VPP), the third gold finger 423 of the first NM card 4 is configured to transmit a command and response signal (CMD), and the second NM card 5, the nano-SIM card 3, and the first NM card 4 may share the fifth spring plate 11e in a time-division manner. A high-speed data signal of the fifth gold finger 525 of the second NM card 5 shares a same spring plate with the command and response signal (CMD) of the third gold finger 423 of the first NM card 4, and does not share a same spring plate with a low-speed data signal of the first NM card 4. Compared with a solution in which a high-speed data signal and a low-speed data signal share a same spring plate and interface switching is performed, this solution has small design difficulty. Optionally, the programming voltage/input signal (VPP) may not be supported, to reduce design difficulty of the processor 20.

A location of the ninth gold finger 529 of the second NM card 5 corresponds to a location of the seventh gold finger 427 of the first NM card 4, and abuts against and is electrically connected to the ninth spring plate 11i of the card connector 11 when the second NM card 5 and the first NM card 4 are inserted into the electronic device 100, the ninth gold finger 529 of the second NM card 5 is configured to transmit a data signal (for example, TX+), the seventh gold finger 427 of the first NM card 4 is configured to transmit a data signal (for example, DATA 3), and the second NM card 5 and the first NM card 4 may share the ninth spring plate 11i in a time-division manner.

A location of the tenth gold finger 5210 of the second NM card 5 corresponds to a location of the eighth gold finger 428 of the first NM card 4, and abuts against and is electrically connected to the tenth spring plate 11j of the card connector 11 when the second NM card 5 and the first NM card 4 are inserted into the electronic device 100, the tenth gold finger 5210 of the second NM card 5 is configured to transmit a data signal (for example, TX-), the eighth gold finger 428 of the first NM card 4 is configured to transmit a data signal (for example, DATA 2), and the second NM card 5 and the first NM card 4 may share the tenth spring plate 11j in a time-division manner.

When the electronic device 100 is compatible with the nano-SIM card 3 and the second NM card 5, and is incompatible with the first NM card 4, the ninth spring plate 11i and the tenth spring plate 11j of the card connector 11 may alternatively be exclusive spring plates of the second NM card 5, and the ninth spring plate 11i and the tenth spring plate 11j are both connected to a high-speed data interface. Regardless of whether the information card inserted into the electronic device 100 is the second NM card 5 or the nano-SIM card 3, the processor 20 does not need to switch an interface electrically connected to the ninth spring plate 11i and the tenth spring plate 11j, to simplify a circuit of the processor 20, and reduce design difficulty and costs.

For example, the fourth gold finger 524 and the tenth gold finger 5210 of the second NM card 5 may be both electrically connected to a high-voltage resistant circuit or a protection switch, to prevent a circuit from being burnt when the card interface 52 of the second NM card 5 is short-circuited. The high-voltage resistant circuit or the protection switch is located in a package 511 of the second NM card 5. In some other embodiments, a high-impedance protection circuit may be provided in the electronic device, to prevent a circuit of the second NM card 5 from being burnt. For example, this can be implemented by adding a protection circuit in an interface controller of the electronic device.

In some other embodiments, one of the third gold finger 523 and the sixth gold finger 526 may be configured to transmit a detection signal (C/D), and the other may be suspended or is configured to transmit another signal; or the third gold finger 523 and the sixth gold finger 526 each are configured to transmit a detection signal (C/D). The second NM card 5 transmits the detection signal (C/D) through at least one gold finger, to reduce difficulty in identifying the second NM card 5 by the electronic device 100. When the third gold finger 523 or the sixth gold finger 526 is configured to transmit the detection signal (C/D), the second NM card 5, the nano-SIM card 3, and the first NM card 4 may correspondingly share the third spring plate 11c or the sixth spring plate 11f in a time-division manner.

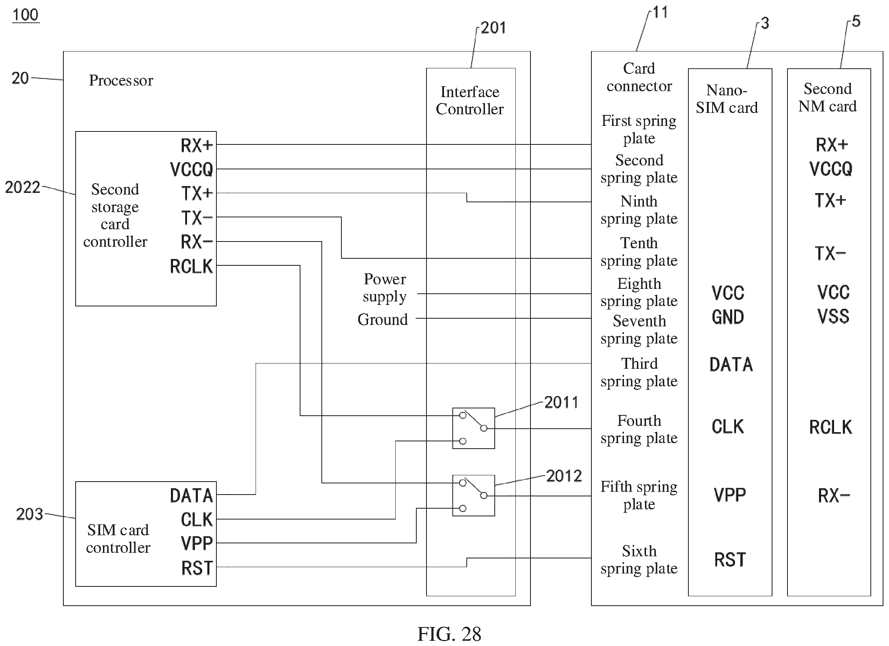

FIG. 28 is a schematic of a partial circuit of the electronic device 100 shown in FIG. 1 in some other embodiments.

In some embodiments, a card holder assembly 10 of the electronic device 100 is compatible with a nano-SIM card 3 and a second NM card 5, and a signal arrangement of a card interface 52 of the second NM card 5 is shown in FIG. 27. A processor 20 of the electronic device 100 includes an interface controller 201, a SIM card controller 203, and a second memory card controller 2022. The SIM card controller 203 and the second memory card controller 2022 are electrically connected to the interface controller 201. The interface controller 201 is electrically connected to a first spring plate 11a to a tenth spring plate 11j of a card connector 11 of the card holder assembly 10.

The SIM card controller 203 includes a data interface, a clock interface, a programming voltage/input interface, and a reset interface. The data interface is configured to transmit a data signal (DATA), the clock interface is configured to transmit a clock signal (CLK), the programming voltage/input interface is configured to transmit a programming voltage/input signal (VPP), and the reset interface is configured to transmit a reset signal (RST). In FIG. 28 and related descriptions of subsequent accompanying drawings and content of embodiments, a plurality of interfaces of the SIM card controller 203 are marked and illustrated by using signals transmitted through the plurality of interfaces.

The second memory card controller 2022 includes four data interfaces, a reference clock interface, and a second power interface. The four data interfaces are configured to transmit data signals (RX+, RX-, TX+, and TX-), the reference clock interface is configured to transmit a reference clock signal (RCLK), and the second power interface is configured to transmit a second power signal (VCCQ). In FIG. 28 and related descriptions of subsequent accompanying drawings and content of embodiments, a plurality of interfaces of the second memory card controller 2022 are marked and illustrated by using signals transmitted through the plurality of interfaces. In some other embodiments, the second power interface may alternatively be independent of the second memory card controller 2022. This is not strictly limited in embodiments of this application.

The processor 20 further includes a power interface and a ground interface, the power interface is configured to transmit a power signal (VCC) or a first power signal (VCC), and the ground interface is configured to transmit a ground signal (GND) or a ground signal (VSS). The power interface and the ground interface may be independent of the SIM card controller 203 and the second memory card controller 2022, or may be separately split and integrated into the SIM card controller 203 and the second memory card controller 2022. This is not strictly limited in embodiments of this application. In FIG. 28 and subsequent accompanying drawings, that the power interface and the ground interface are independent of the SIM card controller 203 and the second memory card controller 2022 is used as an example for illustration, and the power interface and the ground interface are respectively identified as a power supply and a ground.

For example, the interface controller 201 is configured to: connect the SIM card controller 203 and the card connector 11, or connect the second memory card controller 2022 and the card connector 11. The interface controller 201 may include a plurality of switches and a conducting wire.

In some embodiments, the interface controller 201 includes a first switch 2011 and a second switch 2012.

The first switch 2011 is connected to the reference clock interface (RCLK) of the second memory card controller 2022 and the clock interface (CLK) of the SIM card controller 203, the first switch 2011 is further connected to a fourth spring plate 11d of the card connector 11, and the first switch 2011 is configured to: connect the fourth spring plate 11d and the reference clock interface (RCLK) of the second memory card controller 2022, or connect the fourth spring plate 11d and the clock interface (CLK) of the SIM card controller 203.

The second switch 2012 is connected to a data interface (for example, RX-) of the second memory card controller 2022 and the programming voltage/input interface (VPP) of the SIM card controller 203, the second switch 2012 is further connected to a fifth spring plate 11e of the card connector 11, and the second switch 2012 is configured to: connect the fifth spring plate 11e and the data interface (for example, RX-) of the second memory card controller 2022, or connect the fifth spring plate 11e and the programming voltage/input interface (VPP) of the SIM card controller 203. Optionally, the programming voltage/input interface (VPP) may be supported, or may not be supported, to reduce design difficulty of the processor 20.

Another data interface (for example, RX+) of the second memory card controller 2022 is electrically connected to the first spring plate 11a of the card connector 11 by using the interface controller 201. The second power interface (VCCQ) of the second memory card controller 2022 is electrically connected to a second spring plate 11b of the card connector 11 by using the interface controller 201. Another data interface (for example, TX+) of the second memory card controller 2022 is electrically connected to a ninth spring plate 11i of the card connector 11 by using the interface controller 201. Another data interface (for example, TX-) of the second memory card controller 2022 is electrically connected to the tenth spring plate 11j of the card connector 11 by using the interface controller 201. The data interface (DATA) of the SIM card controller 203 is electrically connected to a third spring plate 11c of the card connector 11 by using the interface controller 201. The power interface of the processor 20 is electrically connected to an eighth spring plate 11h of the card connector 11 by using the interface controller 201. The ground interface of the processor 20 is electrically connected to a seventh spring plate 11g of the card connector 11 by using the interface controller 201. The reset interface (RST) of the SIM card controller 203 is electrically connected to a sixth spring plate 11f of the card connector 11 by using the interface controller 201.

Between a data interface (for example, RX+) of the second memory card controller 2022 and the first spring plate 11a, between the second power interface (VCCQ) of the second memory card controller 2022 and the second spring plate 11b, between a data interface (for example, TX+) of the second memory card controller 2022 and the ninth spring plate 11i, between a data interface (for example, TX-) of the second memory card controller 2022 and the tenth spring plate 11j, between the data interface (DATA) of the SIM card controller 203 and the third spring plate 11c, between the power interface of the processor 20 and the eighth spring plate 11h, and between the ground interface and the seventh spring plate 11g, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector 11, the interface controller 201 connects the SIM card controller 203 and the card connector 11, the SIM card controller 203 transmits the data signal (DATA), the clock signal (CLK), the transmission programming voltage/input signal (VPP), and the reset signal (RST) to the nano-SIM card 3 through the third spring plate 11c and the sixth spring plate 11f of the card connector 11, the processor 20 of the electronic device 100 transmits the power signal (VCC) and the ground signal (GND) to the nano-SIM card 3 through the eighth spring plate 11h and the seventh spring plate 11g of the card connector 11, and the nano-SIM card 3 communicates with the electronic device 100.

When the second NM card 5 is inserted into the card holder assembly 10 of the electronic device 100 and the second NM card 5 is electrically connected to the card connector 11, the interface controller 201 connects the second memory card controller 2022 and the card connector 11, the second memory card controller 2022 transmits the data signals (RX+, RX-, TX+, and TX-), the reference clock signal (RCLK), and the second power signal (VCCQ) to the second NM card 5 through the first spring plate 11a, the second spring plate 11b, the fourth spring plate 11d, the fifth spring plate 11e, the ninth spring plate 11i, and the tenth spring plate 11j of the card connector 11, the processor 20 of the electronic device 100 transmits the first power signal (VCC) and the ground signal (VSS) to the second NM card 5 through the eighth spring plate 11h and the seventh spring plate 11g of the card connector 11, and the second NM card 5 communicates with the electronic device 100. Therefore, the electronic device 100 is compatible with the nano-SIM card 3 and the second NM card 5.

In some other embodiments, the programming voltage/input signal (VPP) may not be supported, to reduce the design difficulty of the processor 20. In this case, the SIM card controller 203 may not include the programming voltage/input interface (VPP), the interface controller 201 may not include the second switch 2012, and a data interface (for example, RX-) of the second memory card controller 2022 is electrically connected to the fifth spring plate 11e of the card connector 11 through the interface controller 201. For other solution content, refer to the foregoing embodiments. Details are not described herein again.

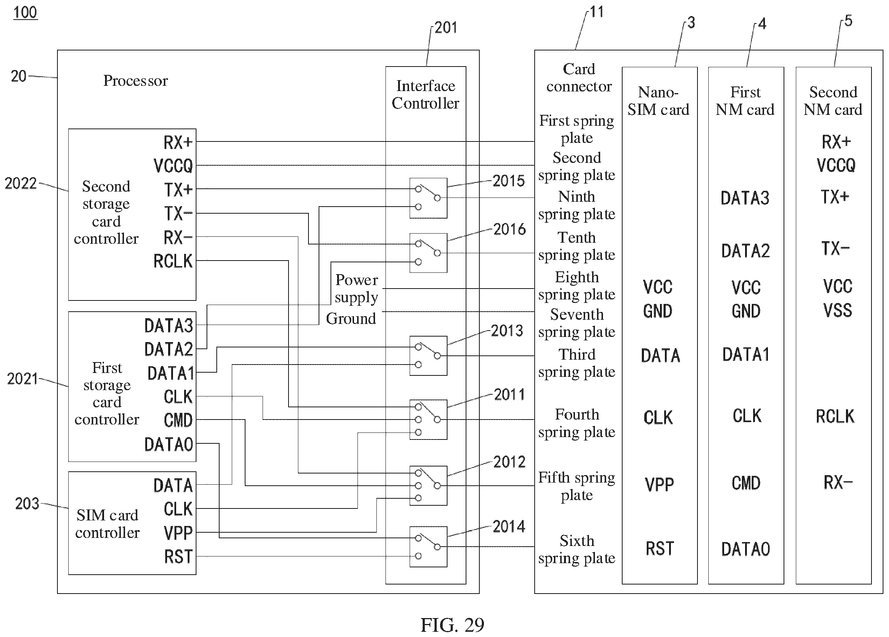

FIG. 29 is a schematic of a partial circuit of the electronic device 100 shown in FIG. 1 in some other embodiments.

In some embodiments, a card holder assembly 10 of the electronic device 100 is compatible with a nano-SIM card 3, a first NM card 4, and a second NM card 5, and a signal arrangement of a card interface 52 of the second NM card 5 is shown in FIG. 27. A processor 20 of the electronic device 100 includes an interface controller 201, a SIM card controller 203, a first memory card controller 2021, and a second memory card controller 2022. The SIM card controller 203, the first memory card controller 2021, and the second memory card controller 2022 are electrically connected to the interface controller 201. The interface controller 201 is electrically connected to a first spring plate 11a to a tenth spring plate 11j of a card connector 11 of the card holder assembly 10.

For the SIM card controller 203 and the second memory card controller 2022, refer to related descriptions in the embodiment corresponding to FIG. 28. Details are not described herein again. The first memory card controller 2021 includes four data interfaces, a clock interface, and a command and response interface. The four data interfaces are configured to transmit data signals (DATA 0, DATA 1, DATA 2, and DATA 3), the clock interface is configured to transmit a clock signal (CLK), and the command and response interface is configured to transmit a command and response signal (CMD). In FIG. 29 and related descriptions of subsequent accompanying drawings and content of embodiments, a plurality of interfaces of the first memory card controller 2021 are marked and illustrated by using signals transmitted through the plurality of interfaces. After a power interface and a ground interface are split, the power interface and the ground interface may alternatively be integrated into the first memory card controller 2021.

For example, the interface controller 201 is configured to: connect the SIM card controller 203 and the card connector 11, or connect the first memory card controller 2021 and the card connector 11, or connect the second memory card controller 2022 and the card connector 11. The interface controller 201 may include a plurality of switches and a conducting wire.

In some embodiments, the interface controller 201 includes a first switch 2011, a second switch 2012, a third switch 2013, a fourth switch 2014, a fifth switch 2015, and a sixth switch 2016.

The first switch 2011 is connected to a reference clock interface (RCLK) of the second memory card controller 2022, the clock interface (CLK) of the first memory card controller 2021, and a clock interface (CLK) of the SIM card controller 203, the first switch 2011 is further connected to a fourth spring plate 11d of the card connector 11, and the first switch 2011 is configured to: connect the fourth spring plate 11d and the reference clock interface (RCLK) of the second memory card controller 2022, or connect the third spring plate 11c and the clock interface (CLK) of the first memory card controller 2021, or connect the fourth spring plate 11d and the clock interface (CLK) of the SIM card controller 203.

The second switch 2012 is connected to a data interface (for example, RX-) of the second memory card controller 2022, the command and response interface (CMD) of the first memory card controller 2021, and a programming voltage/input interface (VPP) of the SIM card controller 203, the second switch 2012 is further connected to a fifth spring plate 11e of the card connector 11, and the second switch 2012 is configured to: connect the fifth spring plate 11e and the data interface (for example, RX-) of the second memory card controller 2022, connect the fifth spring plate 11e and the command and response interface (CMD) of the first memory card controller 2021, or connect the fifth spring plate 11e and the programming voltage/input interface (VPP) of the SIM card controller 203.

The third switch 2013 is connected to a data interface (for example, DATA 1) of the first memory card controller 2021 and a data interface (DATA) of the SIM card controller 203, the third switch 2013 is further connected to a third spring plate 11c of the card connector 11, and the third switch 2013 is configured to connect the third spring plate 11c and the data interface (for example, DATA 1) of the first memory card controller 2021, or connect the third spring plate 11c and the data interface (DATA) of the SIM card controller 203.

The fourth switch 2014 is connected to another data interface (for example, DATA 0) of the first memory card controller 2021 and a reset interface (RST) of the SIM card controller 203, the fourth switch 2014 is further connected to a sixth spring plate 11f of the card connector 11, and the fourth switch 2014 is configured to: connect the sixth spring plate 11f and the data interface (for example, DATA 0) of the first memory card controller 2021, or connect the sixth spring plate 11f and the reset interface (RST) of the SIM card controller 203.

The fifth switch 2015 is connected to another data interface (for example, TX+) of the second memory card controller 2022 and another data interface (for example, DATA 3) of the first memory card controller 2021, the fifth switch 2015 is further connected to a ninth spring plate 11i of the card connector 11, and the fifth switch 2015 is configured to: connect the ninth spring plate 11i and the data interface (for example, TX+) of the second memory card controller 2022, or connect the ninth spring plate 11i and the data interface (for example, DATA 3) of the first memory card controller 2021.

The sixth switch 2016 is connected to another data interface (for example, TX-) of the second memory card controller 2022 and another data interface (for example, DATA 2) of the first memory card controller 2021, the sixth switch 2016 is further connected to the tenth spring plate 11j of the card connector 11, and the sixth switch 2016 is configured to: connect the tenth spring plate 11j and the data interface (for example, TX-) of the second memory card controller 2022, or connect the tenth spring plate 11j and the data interface (for example, DATA 2) of the first memory card controller 2021.

The another data interface (for example, RX+) of the second memory card controller 2022 is electrically connected to the first spring plate 11a of the card connector 11 by using the interface controller 201. The second power interface (VCCQ) of the second memory card controller 2022 is electrically connected to a second spring plate 11b of the card connector 11 by using the interface controller 201. The power interface of the processor 20 is electrically connected to an eighth spring plate 11h of the card connector 11 by using the interface controller 201. The ground interface of the processor 20 is electrically connected to a seventh spring plate 11g of the card connector 11 by using the interface controller 201. Between the data interface (for example, RX+) of the second memory card controller 2022 and the first spring plate 11a, between the second power interface (VCCQ) and the second spring plate 11b, between the power interface of the processor 20 and the eighth spring plate 11h, and between the ground interface and the seventh spring plate 11g, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector 11, the interface controller 201 connects the SIM card controller 203 and the card connector 11, the SIM card controller 203 transmits the data signal (DATA), the clock signal (CLK), the transmission programming voltage/input signal (VPP), and the reset signal (RST) to the nano-SIM card 3 through the third spring plate 11c and the sixth spring plate 11f of the card connector 11, the processor 20 of the electronic device 100 transmits the power signal (VCC) and the ground signal (GND) to the nano-SIM card 3 through the eighth spring plate 11h and the seventh spring plate 11g of the card connector 11, and the nano-SIM card 3 communicates with the electronic device 100.

When the first NM card 4 is inserted into the card holder assembly 10 of the electronic device 100 and the first NM card 4 is electrically connected to the card connector 11, the interface controller 201 connects the first memory card controller 2021 and the card connector 11, the first memory card controller 2021 transmits the data signals (DATA 0, DATA 1, DATA 2, and DATA 3), the clock signal (CLK), and the command and response signal (CMD) to the first NM card 4 through the third spring plate 11c to the sixth spring plate 11f, the ninth spring plate 11i, and the tenth spring plate 11j of the card connector 11, the processor 20 of the electronic device 100 transmits the power signal (VCC) and the ground signal (GND) to the first NM card 4 through the eighth spring plate 11h and the seventh spring plate 11g of the card connector 11, and the first NM card 4 communicates with the electronic device 100.

When the second NM card 5 is inserted into the card holder assembly 10 of the electronic device 100 and the second NM card 5 is electrically connected to the card connector 11, the interface controller 201 connects the second memory card controller 2022 and the card connector 11, the second memory card controller 2022 transmits the data signals (RX+, RX-, TX+, and TX-), the reference clock signal (RCLK), and the second power signal (VCCQ) to the second NM card 5 through the first spring plate 11a, the second spring plate 11b, the fourth spring plate 11d, the fifth spring plate 11e, the ninth spring plate 11i, and the tenth spring plate 11j of the card connector 11, the processor 20 of the electronic device 100 transmits the first power signal (VCC) and the ground signal (VSS) to the second NM card 5 through the eighth spring plate 11h and the seventh spring plate 11g of the card connector 11, and the second NM card 5 communicates with the electronic device 100. Therefore, the electronic device 100 is compatible with the nano-SIM card 3, the first NM card 4, and the second NM card 5.

In some other embodiments, the programming voltage/input signal (VPP) may not be supported, to reduce the design difficulty of the processor 20. In this case, the SIM card controller 203 may not include the programming voltage/input interface (VPP). The second switch 2012 is connected to a data interface (for example, RX-) of the second memory card controller 2022 and the command and response interface (CMD) of the first memory card controller 2021. The second switch 2012 is further connected to the fifth spring plate 11e of the card connector 11. For other solution content, refer to the foregoing embodiments. Details are not described herein again.

It may be understood that when a third gold finger 523 or a sixth gold finger 526 of the second NM card 5 is configured to transmit a detection signal (C/D), in the electronic device 100 that is compatible with the second NM card 5, the second memory card controller 2022 further includes a detection interface. The detection interface is configured to transmit a detection signal (C/D), and the interface controller 201 is further configured to connect the detection interface and a corresponding third spring plate 11c or sixth spring plate 11f when the second NM card 5 is inserted into the electronic device 100. The interface controller 201 is connected to the third spring plate 11c or the sixth spring plate 11f by using a switch, and the switch is further connected to the detection interface of the second memory card controller 2022.

The following uses an example to describe a third signal arrangement manner of a second NM card 5 for which a UFS interface protocol is used.

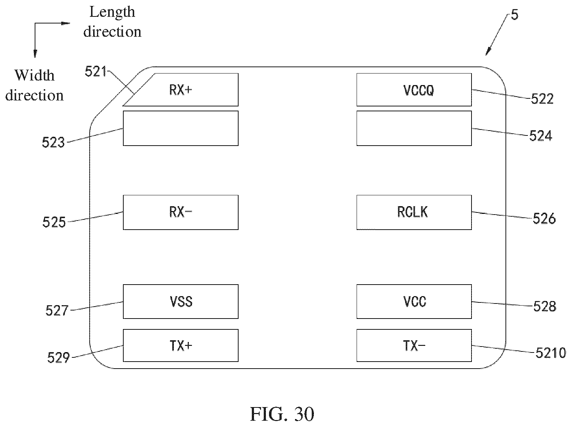

FIG. 30 is a diagram of the second NM card 5 shown in FIG. 17 in some other embodiments.

For example, a first gold finger 521, a fifth gold finger 525, a ninth gold finger 529, and a tenth gold finger 5210 of the second NM card 5 are configured to transmit data signals. An example in which the first gold finger 521 is configured to transmit a data signal (RX+), the fifth gold finger 525 is configured to transmit a data signal (RX-), the ninth gold finger 529 is configured to transmit a data signal (TX+), and the tenth gold finger 5210 is configured to transmit a data signal (TX-) is used for description in the following embodiments. In some other embodiments, the data signals transmitted through the first gold finger 521, the fifth gold finger 525, the ninth gold finger 529, and the tenth gold finger 5210 can be exchanged. For example, the data signals transmitted through the first gold finger 521 and the fifth gold finger 525 are exchanged, and the data signals transmitted through the ninth gold finger 529 and the tenth gold finger 5210 are exchanged. Details are not described herein in another embodiment.

A second gold finger 522 is configured to transmit a second power signal (VCCQ), a sixth gold finger 526 is configured to transmit a reference clock signal (RCLK), a seventh gold finger 527 is configured to transmit a ground signal (VSS), and an eighth gold finger 528 is configured to transmit a first power signal (VCC). A third gold finger 523 and a fourth gold finger 524 are suspended.

Table 5 is Table 3 of a correspondence between a plurality of spring plates of a card connector 11 and each of a plurality of gold fingers of a nano-SIM card 3, a plurality of gold fingers of a first NM card 4, a plurality of gold fingers of a second NM card 5, and transmission signals thereof. When the second NM card 5 is connected to the card connector 11, a first spring plate 11a to a tenth spring plate 11j of the card connector 11 abut against and are electrically connected to the first gold finger 521 to the tenth gold finger 5210 of the second NM card 5 in a one-to-one correspondence, and locations of a third gold finger 523 to an eighth gold finger 528 of the second NM card 5 correspond to locations of a first gold finger 321 to a sixth gold finger 326 of the nano-SIM card 3 in a one-to-one correspondence. In some embodiments, locations of a third gold finger 523 to a tenth gold finger 5210 of the second NM card 5 correspond to locations of a first gold finger 421 to an eighth gold finger 428 of the first NM card 4 in a one-to-one correspondence.

**Table 5**

| Card connector 11 | Nano-SIM card 3 | | First NM card 4 | | Second NM card 5 | |
|---|---|---|---|---|---|---|
| First spring plate 11a | | | | | First gold finger 521 | RX+ |
| Second spring plate 11b | | | | | Second gold finger 522 | VCCQ |
| Third spring plate 11c | First gold finger 321 | DATA | First gold finger 421 | DATA 1 | Third gold finger 523 | |
| Fourth spring plate 11d | Second gold finger 322 | CLK | Second gold finger 422 | CLK | Fourth gold finger 524 | |
| Fifth spring plate 11e | Third gold finger 323 | VPP | Third gold finger 423 | CMD | Fifth gold finger 525 | RX- |
| Sixth spring plate 11f | Fourth gold finger 324 | RST | Fourth gold finger 424 | DATA 0 | Sixth gold finger 526 | RCLK |
| Seventh spring plate 11g | Fifth gold finger 325 | GND | Fifth gold finger 425 | GND | Seventh gold finger 527 | VSS |
| Eighth spring plate 11h | Sixth gold finger 326 | VCC | Sixth gold finger 426 | VCC | Eighth gold finger 528 | VCC |
| Ninth spring plate 11i | | | Seventh gold finger 427 | DATA 3 | Ninth gold finger 529 | TX+ |
| Tenth spring plate 11j | | | Eighth gold finger 428 | DATA 2 | Tenth gold finger 5210 | TX- |

In this embodiment, the second NM card 5 arranges, on the second gold finger 522, a second power signal (VCCQ) required for a UFS protocol. Because a location of the second gold finger 522 of the second NM card 5 corresponds to none of locations of all the gold fingers of the nano-SIM card 3 and the first NM card 4, the second gold finger 522 of the second NM card 5 does not need to share a same spring plate of the card connector 11 with the nano-SIM card 3 and the first NM card 4, to prevent the second power signal (VCCQ) from sharing a same spring plate with data signals of the nano-SIM card 3 and the first NM card 4, and reduce a risk that the nano-SIM card 3 and the first NM card 4 are burnt by the second power signal (VCCQ) when the nano-SIM card 3 and the first NM card 4 are inserted into an electronic device 100 and are connected to the card connector 11. Reliability of compatibility of the electronic device 100 with the nano-SIM card 3, the first NM card 4, and the second NM card 5 is high. In addition, a high-voltage resistant design that is used to prevent a circuit from being burnt by the second power signal (VCCQ) does not need to be deployed for the first NM card 4 and the nano-SIM card 3 either, to reduce costs.

One high-speed data signal (for example, RX+) of the second NM card 5 is arranged on the first gold finger 521. Because a location of the first gold finger 521 of the second NM card 5 corresponds to none of locations of all the gold fingers of the nano-SIM card 3 and the first NM card 4, the first spring plate 11a is connected to a high-speed data interface of a processor 20 of the electronic device 100 and does not need to be connected to a low-speed data interface. Regardless of whether an information card inserted into the electronic device 100 is the second NM card 5, the nano-SIM card 3, or the first NM card 4, the processor 20 does not need to switch an interface electrically connected to the first spring plate 11a, to reduce difficulty in switching between the high-speed data interface and the low-speed data interface, simplify a circuit of the processor 20, and reduce design difficulty and costs.

In addition, because a location of the seventh gold finger 527 of the second NM card 5 corresponds to a location of the fifth gold finger 325 of the nano-SIM card 3, corresponds to a location of the fifth gold finger 425 of the first NM card 4, and abuts against and is electrically connected to the seventh spring plate 11g of the card connector 11 when the second NM card 5, the nano-SIM card 3, and the first NM card 4 are inserted into the electronic device 100, and the seventh gold finger 527 of the second NM card 5, the fifth gold finger 325 of the nano-SIM card 3, and the fifth gold finger 425 of the first NM card 4 are all configured to transmit ground signals (which are respectively VSS/GND/GND), the processor 20 of the electronic device 100 may be electrically connected to the seventh spring plate 11g of the card connector 11 through a same ground interface. Regardless of whether the information inserted into the electronic device 100 is the second NM card 5, the nano-SIM card 3, or the first NM card 4, the processor 20 does not need to switch an interface electrically connected to the seventh spring plate 11g, to simplify a circuit of the processor 20, and reduce design difficulty and costs.

Because a location of the eighth gold finger 528 of the second NM card 5 corresponds to a location of the sixth gold finger 326 of the nano-SIM card 3, corresponds to a location of the sixth gold finger 426 of the first NM card 4, and abuts against and is electrically connected to the eighth spring plate 11h of the card connector 11 when the second NM card 5, the nano-SIM card 3, and the first NM card 4 are inserted into the electronic device 100, the eighth gold finger 528 of the second NM card 5, the sixth gold finger 326 of the nano-SIM card 3, and the sixth gold finger 426 of the first NM card 4 are all configured to transmit power signals (which are respectively VCC/VCC/VCC), the processor 20 of the electronic device 100 may be electrically connected to the eighth spring plate 11h of the card connector 11 through a same power interface. Regardless of whether the information inserted into the electronic device 100 is the second NM card 5, the nano-SIM card 3, or the first NM card 4, the processor 20 does not need to switch an interface electrically connected to the eighth spring plate 11h, to simplify a circuit of the processor 20, and reduce design difficulty and costs.

A location of the fifth gold finger 525 of the second NM card 5 corresponds to a location of the third gold finger 323 of the nano-SIM card 3, corresponds to a location of the third gold finger 423 of the first NM card 4, and abuts against and is electrically connected to the fifth spring plate 11e of the card connector 11 when the second NM card 5, the nano-SIM card 3, and the first NM card 4 are inserted into the electronic device 100, the fifth gold finger 525 of the second NM card 5 is configured to transmit a data signal (for example, RX-), the third gold finger 323 of the nano-SIM card 3 is configured to transmit a programming voltage/input signal (VPP), the first gold finger 421 of the first NM card 4 is configured to transmit a command and response signal (CMD), and the second NM card 5, the nano-SIM card 3, and the first NM card 4 may share the fifth spring plate 11e in a time-division manner.

A location of the sixth gold finger 526 of the second NM card 5 corresponds to a location of the fourth gold finger 324 of the nano-SIM card 3, corresponds to a location of the fourth gold finger 424 of the first NM card 4, and abuts against and is electrically connected to the sixth spring plate 11f of the card connector 11 when the second NM card 5, the nano-SIM card 3, and the first NM card 4 are inserted into the electronic device 100, the sixth gold finger 526 of the second NM card 5 is configured to transmit a reference clock signal (RCLK), the fourth gold finger 324 of the nano-SIM card 3 is configured to transmit a reset signal (RST), the fourth gold finger 424 of the first NM card 4 is configured to transmit a data signal (for example, DATA 0), and the second NM card 5, the nano-SIM card 3, and the first NM card 4 may share the sixth spring plate 11f in a time-division manner.

A location of the ninth gold finger 529 of the second NM card 5 corresponds to a location of the seventh gold finger 427 of the first NM card 4, and abuts against and is electrically connected to the ninth spring plate 11i of the card connector 11 when the second NM card 5 and the first NM card 4 are inserted into the electronic device 100, the ninth gold finger 529 of the second NM card 5 is configured to transmit a data signal (for example, TX+), the seventh gold finger 427 of the first NM card 4 is configured to transmit a data signal (for example, DATA 3), and the second NM card 5 and the first NM card 4 may share the ninth spring plate 11i in a time-division manner.

A location of the tenth gold finger 5210 of the second NM card 5 corresponds to a location of the eighth gold finger 428 of the first NM card 4, and abuts against and is electrically connected to the tenth spring plate 11j of the card connector 11 when the second NM card 5 and the first NM card 4 are inserted into the electronic device 100, the tenth gold finger 5210 of the second NM card 5 is configured to transmit a data signal (for example, TX-), the eighth gold finger 428 of the first NM card 4 is configured to transmit a data signal (for example, DATA 2), and the second NM card 5 and the first NM card 4 may share the tenth spring plate 11j in a time-division manner.

When the electronic device 100 is compatible with the nano-SIM card 3 and the second NM card 5, and is incompatible with the first NM card 4, the ninth spring plate 11i and the tenth spring plate 11j of the card connector 11 may alternatively be exclusive spring plates of the second NM card 5, and the ninth spring plate 11i and the tenth spring plate 11j are both connected to a high-speed data interface. Regardless of whether the information card inserted into the electronic device 100 is the second NM card 5 or the nano-SIM card 3, the processor 20 does not need to switch an interface electrically connected to the ninth spring plate 11i and the tenth spring plate 11j, to simplify a circuit of the processor 20, and reduce design difficulty and costs.

For example, the fourth gold finger 524 and the tenth gold finger 5210 of the second NM card 5 may be both electrically connected to a high-voltage resistant circuit or a protection switch, to prevent a circuit from being burnt when the card interface 52 of the second NM card 5 is short-circuited. The high-voltage resistant circuit or the protection switch is located in a package 511 of the second NM card 5. When the fourth gold finger 524 is suspended, and does not form an interface of the second NM card 5, the fourth gold finger 524 may alternatively be not electrically connected to the high-voltage resistant circuit or the protection switch. In some other embodiments, a high-impedance protection circuit may be provided in the electronic device, to prevent a circuit of the second NM card 5 from being burnt. For example, this can be implemented by adding a protection circuit in an interface controller of the electronic device.

In this embodiment, when the third gold finger 523 and the fourth gold finger 524 of the second NM card 5 are suspended, an interface connection circuit corresponding to the third spring plate 11c and the fourth spring plate 11d of an electrical connector is simplified, so that the electronic device 100 is more compatible with the nano-SIM card 3 and the second NM card 5. In some other embodiments, one of the third gold finger 523 and the fourth gold finger 524 may be configured to transmit a detection signal (C/D), and the other may be suspended or is configured to transmit another signal; or the third gold finger 523 and the fourth gold finger 524 each are configured to transmit a detection signal (C/D). The second NM card 5 transmits the detection signal (C/D) through at least one gold finger, to reduce difficulty in identifying the second NM card 5 by the electronic device 100. When the third gold finger 523 or the fourth gold finger 524 is configured to transmit the detection signal (C/D), the second NM card 5, the nano-SIM card 3, and the first NM card 4 may correspondingly share the third spring plate 11c or the fourth spring plate 11d in a time-division manner.

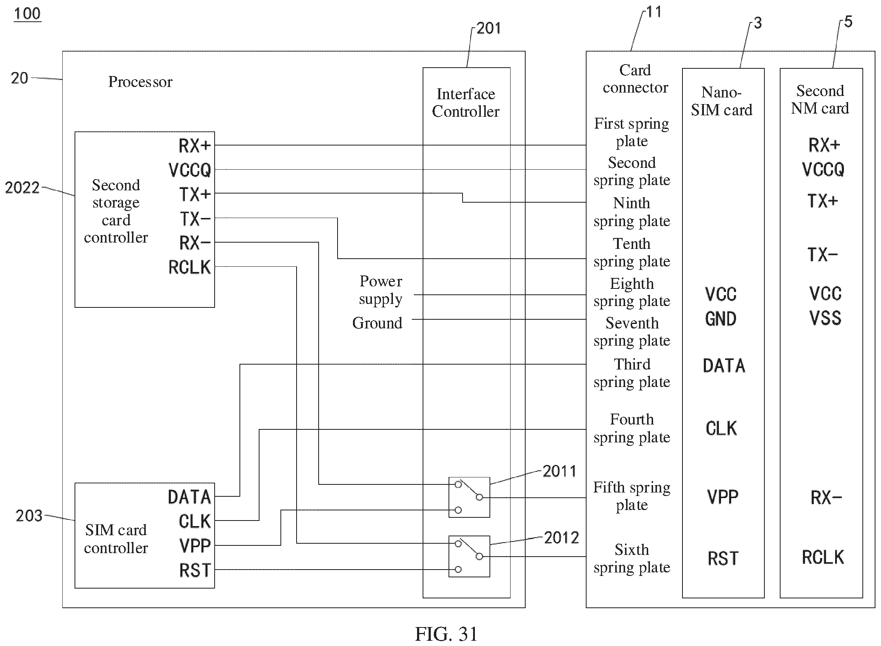

FIG. 31 is a schematic of a partial circuit of the electronic device 100 shown in FIG. 1 in some other embodiments.

In some embodiments, a card holder assembly 10 of the electronic device 100 is compatible with a nano-SIM card 3 and a second NM card 5, and a signal arrangement of a card interface 52 of the second NM card 5 is shown in FIG. 30. A processor 20 of the electronic device 100 includes an interface controller 201, a SIM card controller 203, and a second memory card controller 2022. The SIM card controller 203 and the second memory card controller 2022 are electrically connected to the interface controller 201. The interface controller 201 is electrically connected to a first spring plate 11a to a tenth spring plate 11j of a card connector 11 of the card holder assembly 10.

The SIM card controller 203 includes a data interface, a clock interface, a programming voltage/input interface, and a reset interface. The data interface is configured to transmit a data signal (DATA), the clock interface is configured to transmit a clock signal (CLK), the programming voltage/input interface is configured to transmit a programming voltage/input signal (VPP), and the reset interface is configured to transmit a reset signal (RST). In FIG. 31 and related descriptions of subsequent accompanying drawings and content of embodiments, a plurality of interfaces of the SIM card controller 203 are marked and illustrated by using signals transmitted through the plurality of interfaces.

The second memory card controller 2022 includes four data interfaces, a reference clock interface, and a second power interface. The four data interfaces are configured to transmit data signals (RX+, RX-, TX+, and TX-), the reference clock interface is configured to transmit a reference clock signal (RCLK), and the second power interface is configured to transmit a second power signal (VCCQ). In FIG. 31 and related descriptions of subsequent accompanying drawings and content of embodiments, a plurality of interfaces of the second memory card controller 2022 are marked and illustrated by using signals transmitted through the plurality of interfaces. In some other embodiments, the second power interface may alternatively be independent of the second memory card controller 2022. This is not strictly limited in embodiments of this application.

The processor 20 further includes a power interface and a ground interface, the power interface is configured to transmit a power signal (VCC) or a first power signal (VCC), and the ground interface is configured to transmit a ground signal (GND) or a ground signal (VSS). The power interface and the ground interface may be independent of the SIM card controller 203 and the second memory card controller 2022, or may be separately split and integrated into the SIM card controller 203 and the second memory card controller 2022. This is not strictly limited in embodiments of this application. In FIG. 31 and subsequent accompanying drawings, that the power interface and the ground interface are independent of the SIM card controller 203 and the second memory card controller 2022 is used as an example for illustration, and the power interface and the ground interface are respectively identified as a power supply and a ground.

For example, the interface controller 201 is configured to: connect the SIM card controller 203 and the card connector 11, or connect the second memory card controller 2022 and the card connector 11. The interface controller 201 may include a plurality of switches and a conducting wire.

In some embodiments, the interface controller 201 includes a first switch 2011 and a second switch 2012.

The first switch 2011 is connected to a data interface (for example, RX-) of the second memory card controller 2022 and the programming voltage/input interface (VPP) of the SIM card controller 203, the first switch 2011 is further connected to a fifth spring plate 11e of the card connector 11, and the first switch 2011 is configured to: connect the fifth spring plate 11e and the data interface (for example, RX-) of the second memory card controller 2022, or connect the fifth spring plate 11e and the programming voltage/input interface (VPP) of the SIM card controller 203.

The second switch 2012 is connected to the reference clock interface (RCLK) of the second memory card controller 2022 and the reset interface (RST) of the SIM card controller 203, the second switch 2012 is further connected to a sixth spring plate 11f of the card connector 11, and the second switch 2012 is configured to: connect the sixth spring plate 11f and the reference clock interface (RCLK) of the second memory card controller 2022, or connect the sixth spring plate 11f and the reset interface (RST) of the SIM card controller 203.

Another data interface (for example, RX+) of the second memory card controller 2022 is electrically connected to the first spring plate 11a of the card connector 11 by using the interface controller 201. The second power interface (VCCQ) of the second memory card controller 2022 is electrically connected to a second spring plate 11b of the card connector 11 by using the interface controller 201. Another data interface (for example, TX+) of the second memory card controller 2022 is electrically connected to a ninth spring plate 11i of the card connector 11 by using the interface controller 201. Another data interface (for example, TX-) of the second memory card controller 2022 is electrically connected to the tenth spring plate 11j of the card connector 11 by using the interface controller 201. The data interface (DATA) of the SIM card controller 203 is electrically connected to a third spring plate 11c of the card connector 11 by using the interface controller 201. The clock interface (CLK) of the SIM card controller 203 is electrically connected to a fourth spring plate 11d of the card connector 11 by using the interface controller 201. The power interface of the processor 20 is electrically connected to an eighth spring plate 11h of the card connector 11 by using the interface controller 201. The ground interface of the processor 20 is electrically connected to a seventh spring plate 11g of the card connector 11 by using the interface controller 201.

Between a data interface (for example, RX+) of the second memory card controller 2022 and the first spring plate 11a, between the second power interface (VCCQ) of the second memory card controller 2022 and the second spring plate 11b, between a data interface (for example, TX+) of the second memory card controller 2022 and the ninth spring plate 11i, between a data interface (for example, TX-) of the second memory card controller 2022 and the tenth spring plate 11j, between the data interface (DATA) of the SIM card controller 203 and the third spring plate 11c, between the clock interface (CLK) of the SIM card controller 203 and the fourth spring plate 11d, between the power interface of the processor 20 and the eighth spring plate 11h, and between the ground interface and the seventh spring plate 11g, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector 11, the interface controller 201 connects the SIM card controller 203 and the card connector 11, the SIM card controller 203 transmits the data signal (DATA), the clock signal (CLK), the transmission programming voltage/input signal (VPP), and the reset signal (RST) to the nano-SIM card 3 through the third spring plate 11c and the sixth spring plate 11f of the card connector 11, the processor 20 of the electronic device 100 transmits the power signal (VCC) and the ground signal (GND) to the nano-SIM card 3 through the eighth spring plate 11h and the seventh spring plate 11g of the card connector 11, and the nano-SIM card 3 communicates with the electronic device 100.

When the second NM card 5 is inserted into the card holder assembly 10 of the electronic device 100 and the second NM card 5 is electrically connected to the card connector 11, the interface controller 201 connects the second memory card controller 2022 and the card connector 11, the second memory card controller 2022 transmits the data signals (RX+, RX-, TX+, and TX-), the reference clock signal (RCLK), and the second power signal (VCCQ) to the second NM card 5 through the first spring plate 11a, the second spring plate 11b, the fifth spring plate 11e, the sixth spring plate 11f, the ninth spring plate 11i, and the tenth spring plate 11j of the card connector 11, the processor 20 of the electronic device 100 transmits the first power signal (VCC) and the ground signal (VSS) to the second NM card 5 through the eighth spring plate 11h and the seventh spring plate 11g of the card connector 11, and the second NM card 5 communicates with the electronic device 100. Therefore, the electronic device 100 is compatible with the nano-SIM card 3 and the second NM card 5.

In some other embodiments, the programming voltage/input signal (VPP) may not be supported, to reduce the design difficulty of the processor 20. In this case, the SIM card controller 203 may not include the programming voltage/input interface (VPP), the interface controller 201 may not include the first switch 2011, and a data interface (for example, RX-) of the second memory card controller 2022 is connected to the fifth spring plate 11e of the card connector 11 through the interface controller 201. For other solution content, refer to the foregoing embodiments. Details are not described herein again.

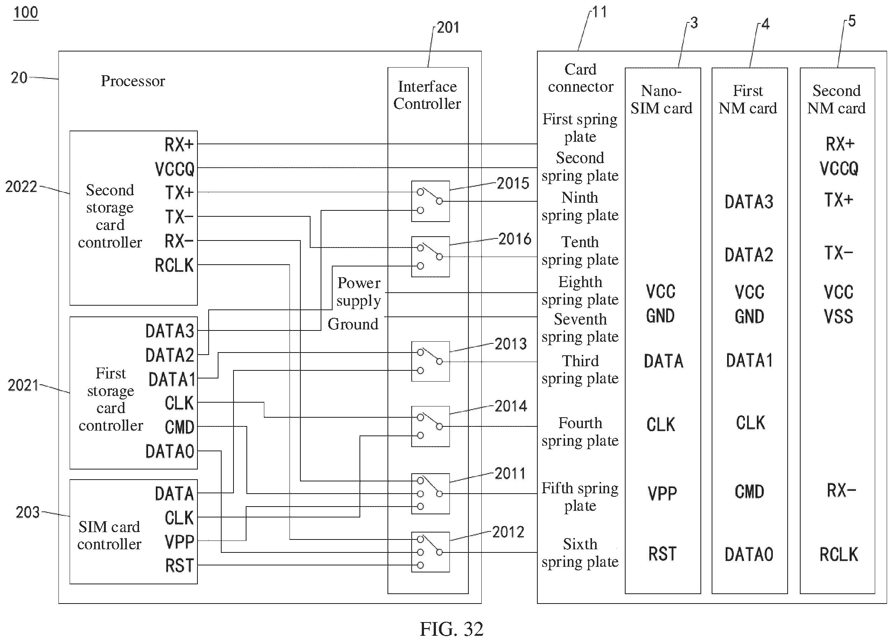

FIG. 32 is a schematic of a partial circuit of the electronic device 100 shown in FIG. 1 in some other embodiments.

In some embodiments, a card holder assembly 10 of the electronic device 100 is compatible with a nano-SIM card 3, a first NM card 4, and a second NM card 5, and a signal arrangement of a card interface 52 of the second NM card 5 is shown in FIG. 30. A processor 20 of the electronic device 100 includes an interface controller 201, a SIM card controller 203, a first memory card controller 2021, and a second memory card controller 2022. The SIM card controller 203, the first memory card controller 2021, and the second memory card controller 2022 are electrically connected to the interface controller 201. The interface controller 201 is electrically connected to a first spring plate 11a to a tenth spring plate 11j of a card connector 11 of the card holder assembly 10.

For the SIM card controller 203 and the second memory card controller 2022, refer to related descriptions in the embodiment corresponding to FIG. 31. Details are not described herein again. The first memory card controller 2021 includes four data interfaces, a clock interface, and a command and response interface. The four data interfaces are configured to transmit data signals (DATA 0, DATA 1, DATA 2, and DATA 3), the clock interface is configured to transmit a clock signal (CLK), and the command and response interface is configured to transmit a command and response signal (CMD). In FIG. 31 and related descriptions of subsequent accompanying drawings and content of embodiments, a plurality of interfaces of the first memory card controller 2021 are marked and illustrated by using signals transmitted through the plurality of interfaces. After a power interface and a ground interface are split, the power interface and the ground interface may alternatively be integrated into the first memory card controller 2021.

For example, the interface controller 201 is configured to: connect the SIM card controller 203 and the card connector 11, or connect the first memory card controller 2021 and the card connector 11, or connect the second memory card controller 2022 and the card connector 11. The interface controller 201 may include a plurality of switches and a conducting wire.

In some embodiments, the interface controller 201 includes a first switch 2011, a second switch 2012, a third switch 2013, a fourth switch 2014, a fifth switch 2015, and a sixth switch 2016.

The first switch 2011 is connected to a data interface (for example, RX-) of the second memory card controller 2022, the command and response interface (CMD) of the first memory card controller 2021, and a programming voltage/input interface (VPP) of the SIM card controller 203, the first switch 2011 is further connected to a fifth spring plate 11e of the card connector 11, and the first switch 2011 is configured to: connect the fifth spring plate 11e and the data interface (for example, RX-) of the second memory card controller 2022, connect the fifth spring plate 11e and the command and response interface (CMD) of the first memory card controller 2021, or connect the fifth spring plate 11e and the programming voltage/input interface (VPP) of the SIM card controller 203.

The second switch 2012 is connected to a reference clock interface (RCLK) of the second memory card controller 2022, a data interface (for example, DATA 0) of the first memory card controller 2021, and a reset interface (RST) of the SIM card controller 203, the second switch 2012 is further connected to a sixth spring plate 11f of the card connector 11, and the second switch 2012 is configured to: connect the sixth spring plate 11f and the reference clock interface (RCLK) of the second memory card controller 2022, or connect the sixth spring plate 11f and the data interface (for example, DATA 0) of the first memory card controller 2021, or connect the sixth spring plate 11f and the reset interface (RST) of the SIM card controller 203.

The third switch 2013 is connected to another data interface (for example, DATA 1) of the first memory card controller 2021 and a data interface (DATA) of the SIM card controller 203, the third switch 2013 is further connected to a third spring plate 11c of the card connector 11, and the third switch 2013 is configured to connect the third spring plate 11c and the data interface (for example, DATA 1) of the first memory card controller 2021, or connect the third spring plate 11c and the data interface (DATA) of the SIM card controller 203.

The fourth switch 2014 is connected to the clock interface (CLK) of the first memory card controller 2021 and the clock interface (CLK) of the SIM card controller 203, the fourth switch 2014 is further connected to a fourth spring plate 11d of the card connector 11, and the fourth switch 2014 is configured to: connect the fourth spring plate 11d and the clock interface (CLK) of the first memory card controller 2021, or connect the fourth spring plate 11d and the clock interface (CLK) of the SIM card controller 203.

The fifth switch 2015 is connected to another data interface (for example, TX+) of the second memory card controller 2022 and another data interface (for example, DATA 3) of the first memory card controller 2021, the fifth switch 2015 is further connected to a ninth spring plate 11i of the card connector 11, and the fifth switch 2015 is configured to: connect the ninth spring plate 11i and the data interface (for example, TX+) of the second memory card controller 2022, or connect the ninth spring plate 11i and the data interface (for example, DATA 3) of the first memory card controller 2021.

The sixth switch 2016 is connected to another data interface (for example, TX-) of the second memory card controller 2022 and another data interface (for example, DATA 2) of the first memory card controller 2021, the sixth switch 2016 is further connected to the tenth spring plate 11j of the card connector 11, and the sixth switch 2016 is configured to: connect the tenth spring plate 11j and the data interface (for example, TX-) of the second memory card controller 2022, or connect the tenth spring plate 11j and the data interface (for example, DATA 2) of the first memory card controller 2021.

The another data interface (for example, RX+) of the second memory card controller 2022 is electrically connected to the first spring plate 11a of the card connector 11 by using the interface controller 201. The second power interface (VCCQ) of the second memory card controller 2022 is electrically connected to a second spring plate 11b of the card connector 11 by using the interface controller 201. The power interface of the processor 20 is electrically connected to an eighth spring plate 11h of the card connector 11 by using the interface controller 201. The ground interface of the processor 20 is electrically connected to a seventh spring plate 11g of the card connector 11 by using the interface controller 201. Between the data interface (for example, RX+) of the second memory card controller 2022 and the first spring plate 11a, between the second power interface (VCCQ) and the second spring plate 11b, between the power interface of the processor 20 and the eighth spring plate 11h, and between the ground interface and the seventh spring plate 11g, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector 11, the interface controller 201 connects the SIM card controller 203 and the card connector 11, the SIM card controller 203 transmits the data signal (DATA), the clock signal (CLK), the transmission programming voltage/input signal (VPP), and the reset signal (RST) to the nano-SIM card 3 through the third spring plate 11c and the sixth spring plate 11f of the card connector 11, the processor 20 of the electronic device 100 transmits the power signal (VCC) and the ground signal (GND) to the nano-SIM card 3 through the eighth spring plate 11h and the seventh spring plate 11g of the card connector 11, and the nano-SIM card 3 communicates with the electronic device 100.

When the first NM card 4 is inserted into the card holder assembly 10 of the electronic device 100 and the first NM card 4 is electrically connected to the card connector 11, the interface controller 201 connects the first memory card controller 2021 and the card connector 11, the first memory card controller 2021 transmits the data signals (DATA 0, DATA 1, DATA 2, and DATA 3), the clock signal (CLK), and the command and response signal (CMD) to the first NM card 4 through the third spring plate 11c to the sixth spring plate 11f, the ninth spring plate 11i, and the tenth spring plate 11j of the card connector 11, the processor 20 of the electronic device 100 transmits the power signal (VCC) and the ground signal (GND) to the first NM card 4 through the eighth spring plate 11h and the seventh spring plate 11g of the card connector 11, and the first NM card 4 communicates with the electronic device 100.

When the second NM card 5 is inserted into the card holder assembly 10 of the electronic device 100 and the second NM card 5 is electrically connected to the card connector 11, the interface controller 201 connects the second memory card controller 2022 and the card connector 11, the second memory card controller 2022 transmits the data signals (RX+, RX-, TX+, and TX-), the reference clock signal (RCLK), and the second power signal (VCCQ) to the second NM card 5 through the first spring plate 11a, the second spring plate 11b, the fifth spring plate 11e, the sixth spring plate 11f, the ninth spring plate 11i, and the tenth spring plate 11j of the card connector 11, the processor 20 of the electronic device 100 transmits the first power signal (VCC) and the ground signal (VSS) to the second NM card 5 through the eighth spring plate 11h and the seventh spring plate 11g of the card connector 11, and the second NM card 5 communicates with the electronic device 100. Therefore, the electronic device 100 is compatible with the nano-SIM card 3, the first NM card 4, and the second NM card 5.

In some other embodiments, the programming voltage/input signal (VPP) may not be supported, to reduce the design difficulty of the processor 20. In this case, the SIM card controller 203 may not include the programming voltage/input interface (VPP). The first switch 2011 is connected to a data interface (for example, RX-) of the second memory card controller 2022 and the command and response interface (CMD) of the first memory card controller 2021. The first switch 2011 is further connected to the fifth spring plate 11e of the card connector 11. For other solution content, refer to the foregoing embodiments. Details are not described herein again.

It may be understood that when a third gold finger 523 or a fourth gold finger 524 of the second NM card 5 is configured to transmit a detection signal (C/D), in the electronic device 100 that is compatible with the second NM card 5, the second memory card controller 2022 further includes a detection interface. The detection interface is configured to transmit a detection signal (C/D), and the interface controller 201 is further configured to connect the detection interface and a corresponding third spring plate 11c or sixth spring plate 11f when the second NM card 5 is inserted into the electronic device 100. The interface controller 201 is connected to the third spring plate 11c or the fourth spring plate 11d by using a switch, and the switch is further connected to the detection interface of the second memory card controller 2022.

In some embodiments, a PCIe interface protocol is used for the second NM card. PCIe, also referred to as PCI Express, is a hierarchical protocol, and includes a transaction layer, a data link layer, and a physical layer. A main advantage of PCIE is a high data transmission rate, and PCIE further has advantages such as a strong anti-interference capability, a long transmission distance, and low power consumption. A transmission mode of PCI Express is changed from a parallel transmission of PCI to serial transmission, to perform differential signal transmission (differential transmission). In such a transmission mode, same content is transmitted through positive and negative mirroring, to improve interference discovery and correction efficiency. In addition, full duplex may be used for PCI Express. Therefore, transmission efficiency of PCI Express is greatly improved compared with PCI. Since 2001, PCI Express has been updated from Version 1.0 to Version 5.0 in 20 years, and is formally updated to Version 6.0 in 2021. Undoubtedly, PCI Express is a popular transmission bus standard. A bandwidth of PCIe 1.0 is nearly two times of a bandwidth of PCI. A maximum bandwidth of PCI Express 6.0 released in 2021 is up to 256 GB/s. In 2018, the SD Association officially announced that an SD (Secure Digital) card is compatible with a PCI Express channel, and PCI Express is compatible with a mobile memory card. For an NM card, PCI Express provides an advantage of a large bandwidth.

For example, the second NM card 5 includes at least 10 gold fingers, for example, includes the first gold finger 521 to the tenth gold finger 5210. In the first gold finger 521 to the tenth gold finger 5210, four gold fingers are configured to transmit data signals (RX+, RX-, TX+, and TX-), two gold fingers are configured to transmit clock signals (CLK+ and CLK-), one gold finger is configured to transmit a first power signal (VDD 1), one gold finger is configured to transmit a ground signal (VSS), and one gold finger is configured to transmit a second power signal (VDD 2). In the first gold finger 521 to the tenth gold finger 5210, one gold finger may be suspended. In this case, the second NM card 5 can support the PCIe interface protocol, to implement basic performance of a high-speed card.

The data signal (RX+) and the data signal (RX-) are input differential signals; the data signal (TX+) and the data signal (TX-) signal are output differential signals; and the clock signal (CLK+) and the clock signal (CLK-) are differential low-voltage clock signals. The first power signal (VDD 1) is responsible for supplying power to a storage circuit 513 of the second NM card 5, and the second power signal (VDD 2) is responsible for supplying power to a control circuit 512 of the second NM card 5. A voltage of the first power signal (VDD 1) is higher than a voltage of the second power signal (VDD 2). For example, the voltage of the first power signal (VDD 1) may fall within a range of 2.7 V to 3.6 V, and the voltage of the second power signal (VDD 2) may fall within a range of 1.70 V to 1.95 V

In some other embodiments, in the first gold finger 521 to the tenth gold finger 5210, one of the gold fingers is not suspended, and is configured to transmit a detection signal (C/D). The detection signal (C/D) may be a special data signal. When an information card is electrically connected to the card connector 11 and communicates with the electronic device 100, the electronic device 100 may identify, based on the detection signal (C/D), whether the inserted information card is the second NM card 5. In some embodiments, the electronic device 100 may further identify a version of an inserted second NM card 5 based on the detection signal (C/D), or identify an interface protocol of an inserted second NM card 5. The second NM card 5 transmits the detection signal (C/D) through one gold finger, to reduce difficulty in identifying the second NM card 5 by the electronic device 100.

The following uses an example to describe a first signal arrangement manner of a second NM card 5 for which a PCIe interface protocol is used.

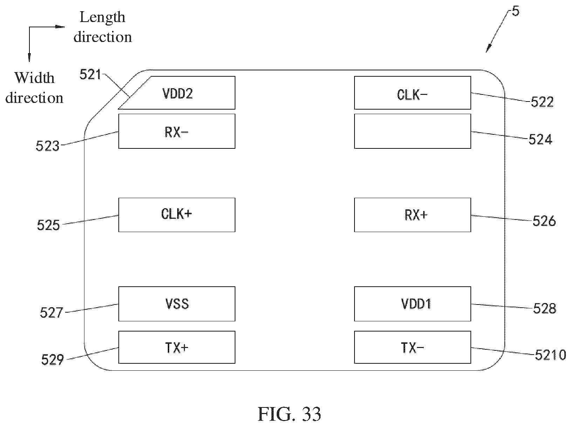

FIG. 33 is a diagram of the second NM card 5 shown in FIG. 17 in some other embodiments.

For example, a third gold finger 523, a sixth gold finger 526, a ninth gold finger 529, and a tenth gold finger 5210 of the second NM card 5 are configured to transmit data signals. An example in which the third gold finger 523 is configured to transmit a data signal (RX-), the sixth gold finger 526 is configured to transmit a data signal (RX+), the ninth gold finger 529 is configured to transmit a data signal (TX+), and the tenth gold finger 5210 is configured to transmit a data signal (TX-) is used for description in the following embodiments. In some other embodiments, the data signals transmitted through the third gold finger 523, the sixth gold finger 526, the ninth gold finger 529, and the tenth gold finger 5210 can be exchanged. For example, the data signals transmitted through the third gold finger 523 and the sixth gold finger 526 are exchanged, and the data signals transmitted through the ninth gold finger 529 and the tenth gold finger 5210 are exchanged. Details are not described herein in another embodiment.

A second gold finger 522 and a fifth gold finger 525 are configured to transmit clock signals. An example in which the second gold finger 522 is configured to transmit a clock signal (CLK-) and the fifth gold finger 525 is configured to transmit a clock signal (CLK+) is used for description in the following embodiments. In some other embodiments, the clock signals transmitted through the second gold finger 522 and the fifth gold finger 525 can be exchanged.

A first gold finger 521 is configured to transmit a second power signal (VDD 2), a seventh gold finger 527 is configured to transmit a ground signal (VSS), and an eighth gold finger 528 is configured to transmit a first power signal (VDD 1). A fourth gold finger 524 is suspended.

Table 6 is Table 4 of a correspondence between a plurality of spring plates of a card connector 11 and each of a plurality of gold fingers of a nano-SIM card 3, a plurality of gold fingers of a first NM card 4, a plurality of gold fingers of a second NM card 5, and transmission signals thereof. When the second NM card 5 is connected to the card connector 11, a first spring plate 11a to a tenth spring plate 11j of the card connector 11 abut against and are electrically connected to the first gold finger 521 to the tenth gold finger 5210 of the second NM card 5 in a one-to-one correspondence, and locations of a third gold finger 523 to an eighth gold finger 528 of the second NM card 5 correspond to locations of a first gold finger 321 to a sixth gold finger 326 of the nano-SIM card 3 in a one-to-one correspondence. In some embodiments, locations of a third gold finger 523 to a tenth gold finger 5210 of the second NM card 5 correspond to locations of a first gold finger 421 to an eighth gold finger 428 of the first NM card 4 in a one-to-one correspondence.

**Table 6**

| Card connector 11 | Nano-SIM card 3 | | First NM card 4 | | Second NM card 5 | |
|---|---|---|---|---|---|---|
| First spring plate 11a | | | | | First gold finger 521 | VDD 2 |
| Second spring plate 11b | | | | | Second gold finger 522 | CLK- |
| Third spring plate 11c | First gold finger 321 | DATA | First gold finger 421 | DATA 1 | Third gold finger 523 | RX- |
| Fourth spring plate 11d | Second gold finger 322 | CLK | Second gold finger 422 | CLK | Fourth gold finger 524 | |
| Fifth spring plate 11e | Third gold finger 323 | VPP | Third gold finger 423 | CMD | Fifth gold finger 525 | CLK+ |
| Sixth spring plate 11f | Fourth gold finger 324 | RST | Fourth gold finger 424 | DATA 0 | Sixth gold finger 526 | RX+ |
| Seventh spring plate 11g | Fifth gold finger 325 | GND | Fifth gold finger 425 | GND | Seventh gold finger 527 | VSS |
| Eighth spring plate 11h | Sixth gold finger 326 | VCC | Sixth gold finger 426 | VCC | Eighth gold finger 528 | VDD 1 |
| Ninth spring plate 11i | | | Seventh gold finger 427 | DATA 3 | Ninth gold finger 529 | TX+ |
| Tenth spring plate 11j | | | Eighth gold finger 428 | DATA 2 | Tenth gold finger 5210 | TX- |

In this embodiment, the second NM card 5 arranges, on the first gold finger 521, a second power signal (VDD 2) required for a PCIe protocol. Because a location of the first gold finger 521 of the second NM card 5 corresponds to none of locations of all the gold fingers of the nano-SIM card 3 and the first NM card 4, the first gold finger 521 of the second NM card 5 does not need to share a same spring plate of the card connector 11 with the nano-SIM card 3 and the first NM card 4, to prevent the second power signal (VDD 2) from sharing a same spring plate with data signals of the nano-SIM card 3 and the first NM card 4, and reduce a risk that the nano-SIM card 3 and the first NM card 4 are burnt by the second power signal (VDD 2) when the nano-SIM card 3 and the first NM card 4 are inserted into an electronic device 100 and are connected to the card connector 11. Reliability of compatibility of the electronic device 100 with the nano-SIM card 3, the first NM card 4, and the second NM card 5 is high. In addition, a high-voltage resistant design that is used to prevent a circuit from being burnt by the second power signal (VDD 2) does not need to be deployed for the first NM card 4 and the nano-SIM card 3 either, to reduce costs.

A clock signal (for example, CLK-) of the second NM card 5 is arranged on the second gold finger 522. Because a location of the second gold finger 522 of the second NM card 5 corresponds to none of locations of all gold fingers of the nano-SIM card 3 and the first NM card 4, regardless of whether the information card inserted into the electronic device 100 is the second NM card 5, the nano-SIM card 3, or the first NM card 4, the processor 20 does not need to switch an interface electrically connected to the first spring plate 11a, to simplify a circuit of the processor 20, and reduce design difficulty and costs.

In addition, because a location of the seventh gold finger 527 of the second NM card 5 corresponds to a location of the fifth gold finger 325 of the nano-SIM card 3, corresponds to a location of the fifth gold finger 425 of the first NM card 4, and abuts against and is electrically connected to the seventh spring plate 11g of the card connector 11 when the second NM card 5, the nano-SIM card 3, and the first NM card 4 are inserted into the electronic device 100, and the seventh gold finger 527 of the second NM card 5, the fifth gold finger 325 of the nano-SIM card 3, and the fifth gold finger 425 of the first NM card 4 are all configured to transmit ground signals (which are respectively VSS/GND/GND), the processor 20 of the electronic device 100 may be electrically connected to the seventh spring plate 11g of the card connector 11 through a same ground interface. Regardless of whether the information inserted into the electronic device 100 is the second NM card 5, the nano-SIM card 3, or the first NM card 4, the processor 20 does not need to switch an interface electrically connected to the seventh spring plate 11g, to simplify a circuit of the processor 20, and reduce design difficulty and costs.

Because a location of the eighth gold finger 528 of the second NM card 5 corresponds to a location of the sixth gold finger 326 of the nano-SIM card 3, corresponds to a location of the sixth gold finger 426 of the first NM card 4, and abuts against and is electrically connected to the eighth spring plate 11h of the card connector 11 when the second NM card 5, the nano-SIM card 3, and the first NM card 4 are inserted into the electronic device 100, the eighth gold finger 528 of the second NM card 5, the sixth gold finger 326 of the nano-SIM card 3, and the sixth gold finger 426 of the first NM card 4 are all configured to transmit power signals (which are respectively VDD 1/VCC/VCC), the processor 20 of the electronic device 100 may be electrically connected to the eighth spring plate 11h of the card connector 11 through a same power interface. Regardless of whether the information inserted into the electronic device 100 is the second NM card 5, the nano-SIM card 3, or the first NM card 4, the processor 20 does not need to switch an interface electrically connected to the eighth spring plate 11h, to simplify a circuit of the processor 20, and reduce design difficulty and costs.

A location of the third gold finger 523 of the second NM card 5 corresponds to a location of the first gold finger 321 of the nano-SIM card 3, corresponds to a location of the first gold finger 421 of the first NM card 4, and abuts against and is electrically connected to the third spring plate 11c of the card connector 11 when the second NM card 5, the nano-SIM card 3, and the first NM card 4 are inserted into the electronic device 100, the third gold finger 523 of the second NM card 5 is configured to transmit a data signal (for example, RX-), the first gold finger 321 of the nano-SIM card 3 is configured to transmit a data signal (DATA), the first gold finger 421 of the first NM card 4 is configured to transmit a data signal (for example, DATA 1), and the second NM card 5, the nano-SIM card 3, and the first NM card 4 may share the third spring plate 11c in a time-division manner.

A location of the fifth gold finger 525 of the second NM card 5 corresponds to a location of the third gold finger 323 of the nano-SIM card 3, corresponds to a location of the third gold finger 423 of the first NM card 4, and abuts against and is electrically connected to the fifth spring plate 11e of the card connector 11 when the second NM card 5, the nano-SIM card 3, and the first NM card 4 are inserted into the electronic device 100, the fifth gold finger 525 of the second NM card 5 is configured to transmit another clock signal (for example, CLK+), the third gold finger 323 of the nano-SIM card 3 is configured to transmit a programming voltage/input signal (VPP), the first gold finger 421 of the first NM card 4 is configured to transmit a command and response signal (CMD), and the second NM card 5, the nano-SIM card 3, and the first NM card 4 may share the fifth spring plate 11e in a time-division manner.

A location of the sixth gold finger 526 of the second NM card 5 corresponds to a location of the fourth gold finger 324 of the nano-SIM card 3, corresponds to a location of the fourth gold finger 424 of the first NM card 4, and abuts against and is electrically connected to the sixth spring plate 11f of the card connector 11 when the second NM card 5, the nano-SIM card 3, and the first NM card 4 are inserted into the electronic device 100, the sixth gold finger 526 of the second NM card 5 is configured to transmit another data signal (for example, RX+), the fourth gold finger 324 of the nano-SIM card 3 is configured to transmit a reset signal (RST), the fourth gold finger 424 of the first NM card 4 is configured to transmit a data signal (for example, DATA 0), and the second NM card 5, the nano-SIM card 3, and the first NM card 4 may share the sixth spring plate 11f in a time-division manner.

A location of the ninth gold finger 529 of the second NM card 5 corresponds to a location of the seventh gold finger 427 of the first NM card 4, and abuts against and is electrically connected to the ninth spring plate 11i of the card connector 11 when the second NM card 5 and the first NM card 4 are inserted into the electronic device 100, the ninth gold finger 529 of the second NM card 5 is configured to transmit a data signal (for example, TX+), the seventh gold finger 427 of the first NM card 4 is configured to transmit a data signal (for example, DATA 3), and the second NM card 5 and the first NM card 4 may share the ninth spring plate 11i in a time-division manner.

A location of the tenth gold finger 5210 of the second NM card 5 corresponds to a location of the eighth gold finger 428 of the first NM card 4, and abuts against and is electrically connected to the tenth spring plate 11j of the card connector 11 when the second NM card 5 and the first NM card 4 are inserted into the electronic device 100, the tenth gold finger 5210 of the second NM card 5 is configured to transmit a data signal (for example, TX-), the eighth gold finger 428 of the first NM card 4 is configured to transmit a data signal (for example, DATA 2), and the second NM card 5 and the first NM card 4 may share the tenth spring plate 11j in a time-division manner.

When the electronic device 100 is compatible with the nano-SIM card 3 and the second NM card 5, and is incompatible with the first NM card 4, the ninth spring plate 11i and the tenth spring plate 11j of the card connector 11 may alternatively be exclusive spring plates of the second NM card 5, and the ninth spring plate 11i and the tenth spring plate 11j are both connected to a high-speed data interface. Regardless of whether the information card inserted into the electronic device 100 is the second NM card 5 or the nano-SIM card 3, the processor 20 does not need to switch an interface electrically connected to the ninth spring plate 11i and the tenth spring plate 11j, to simplify a circuit of the processor 20, and reduce design difficulty and costs.

For example, the third gold finger 523 and the tenth gold finger 5210 of the second NM card 5 may be electrically connected to a high-voltage resistant circuit or a protection switch, to prevent a circuit from being burnt when the card interface 52 of the second NM card 5 is short-circuited. The high-voltage resistant circuit or the protection switch is located in a package 511 of the second NM card 5. In some other embodiments, a high-impedance protection circuit may be provided in the electronic device, to prevent a circuit of the second NM card 5 from being burnt. For example, this can be implemented by adding a protection circuit in an interface controller of the electronic device.

In some other embodiments, the fourth gold finger 524 may not be suspended, and is configured to transmit a detection signal (C/D).

In some other embodiments, the second gold finger 522 of the second NM card 5 is suspended, or is configured to transmit a detection signal (C/D), and the fourth gold finger 524 is configured to transmit a clock signal (for example, CLK-). The clock signals transmitted through the fourth gold finger 524 and the fifth gold finger 525 may be exchanged.

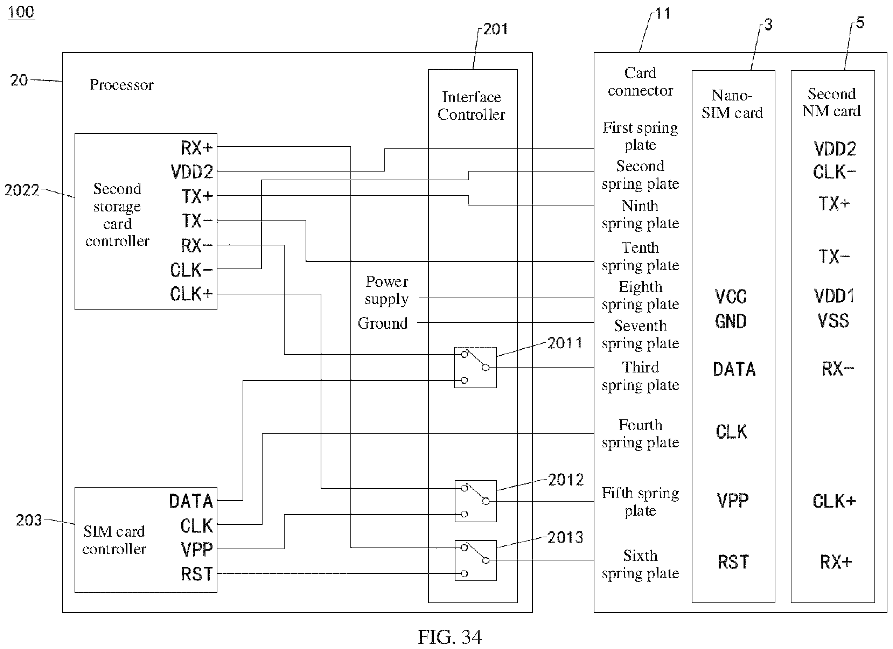

FIG. 34 is a schematic of a partial circuit of the electronic device 100 shown in FIG. 1 in some other embodiments.

In some embodiments, a card holder assembly 10 of the electronic device 100 is compatible with a nano-SIM card 3 and a second NM card 5, and a signal arrangement of a card interface 52 of the second NM card 5 is shown in FIG. 33. A processor 20 of the electronic device 100 includes an interface controller 201, a SIM card controller 203, and a second memory card controller 2022. The SIM card controller 203 and the second memory card controller 2022 are electrically connected to the interface controller 201. The interface controller 201 is electrically connected to a first spring plate 11a to a tenth spring plate 11j of a card connector 11 of the card holder assembly 10.

The SIM card controller 203 includes a data interface, a clock interface, a programming voltage/input interface, and a reset interface. The data interface is configured to transmit a data signal (DATA), the clock interface is configured to transmit a clock signal (CLK), the programming voltage/input interface is configured to transmit a programming voltage/input signal (VPP), and the reset interface is configured to transmit a reset signal (RST). In FIG. 34 and related descriptions of subsequent accompanying drawings and content of embodiments, a plurality of interfaces of the SIM card controller 203 are marked and illustrated by using signals transmitted through the plurality of interfaces.

The second memory card controller 2022 includes four data interfaces, two clock interfaces, and a second power interface. The four data interfaces are configured to transmit data signals (RX+, RX-, TX+, and TX-), the two clock interfaces are configured to transmit clock signals (CLK+ and CLK-), and the second power interface is configured to transmit a second power signal (VDD 2). In FIG. 34 and related descriptions of subsequent accompanying drawings and content of embodiments, a plurality of interfaces of the second memory card controller 2022 are marked and illustrated by using signals transmitted through the plurality of interfaces. In some other embodiments, the second power interface may alternatively be independent of the second memory card controller 2022. This is not strictly limited in embodiments of this application.

The processor 20 further includes a power interface and a ground interface, the power interface is configured to transmit a power signal (VCC) or a first power signal (VDD 1), and the ground interface is configured to transmit a ground signal (GND) or a ground signal (VSS). The power interface and the ground interface may be independent of the SIM card controller 203 and the second memory card controller 2022, or may be separately split and integrated into the SIM card controller 203 and the second memory card controller 2022. This is not strictly limited in embodiments of this application. In FIG. 34 and subsequent accompanying drawings, that the power interface and the ground interface are independent of the SIM card controller 203 and the second memory card controller 2022 is used as an example for illustration, and the power interface and the ground interface are respectively identified as a power supply and a ground.

For example, the interface controller 201 is configured to: connect the SIM card controller 203 and the card connector 11, or connect the second memory card controller 2022 and the card connector 11. The interface controller 201 may include a plurality of switches and a conducting wire.

In some embodiments, the interface controller 201 includes a first switch 2011, a second switch 2012, and a third switch 2013.

The first switch 2011 is connected to a data interface (for example, RX-) of the second memory card controller 2022 and a data interface (DATA) of the SIM card controller 203, the first switch 2011 is further connected to a third spring plate 11c of the card connector 11, and the first switch 2011 is configured to connect the third spring plate 11c and the data interface (for example, RX-) of the second memory card controller 2022, or connect the third spring plate 11c and the data interface (DATA) of the SIM card controller 203.

The second switch 2012 is connected to a clock interface (for example, CLK+) of the second memory card controller 2022 and the programming voltage/input interface (VPP) of the SIM card controller 203, the second switch 2012 is further connected to a fifth spring plate 11e of the card connector 11, and the second switch 2012 is configured to: connect the fifth spring plate 11e and the clock interface (for example, CLK+) of the second memory card controller 2022, or connect the fifth spring plate 11e and the programming voltage/input interface (VPP) of the SIM card controller 203.

The third switch 2013 is connected to another data interface (for example, RX+) of the second memory card controller 2022 and a reset interface (RST) of the SIM card controller 203, the third switch 2013 is further connected to a sixth spring plate 11f of the card connector 11, and the third switch 2013 is configured to: connect the sixth spring plate 11f and the data interface (for example, RX+) of the second memory card controller 2022, or connect the sixth spring plate 11f and the reset interface (RST) of the SIM card controller 203.

The second power interface (VDD 2) of the second memory card controller 2022 is electrically connected to a first spring plate 11a of the card connector 11 by using the interface controller 201. Another clock interface (for example, CLK-) of the second memory card controller 2022 is electrically connected to the second spring plate 11b of the card connector 11 by using the interface controller 201. Another data interface (for example, TX+) of the second memory card controller 2022 is electrically connected to a ninth spring plate 11i of the card connector 11 by using the interface controller 201. Another data interface (for example, TX-) of the second memory card controller 2022 is electrically connected to the tenth spring plate 11j of the card connector 11 by using the interface controller 201. The power interface of the processor 20 is electrically connected to an eighth spring plate 11h of the card connector 11 by using the interface controller 201. The ground interface of the processor 20 is electrically connected to a seventh spring plate 11g of the card connector 11 by using the interface controller 201. The clock interface (CLK) of the SIM card controller 203 is electrically connected to a fourth spring plate 11d of the card connector 11 by using the interface controller 201.

Between the second power interface (VDD 2) of the second memory card controller 2022 and the first spring plate 11a, between the clock interface (for example, CLK-) of the second memory card controller 2022 and the second spring plate 11b, between the clock interface (CLK) of the SIM card controller 203 and the fourth spring plate 11d, between a data interface (for example, TX+) of the second memory card controller 2022 and the ninth spring plate 11i, between a data interface (for example, TX-) of the second memory card controller 2022 and the tenth spring plate 11j, between the power interface of the processor 20 and the eighth spring plate 11h, and between the ground interface and the seventh spring plate 11g, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector 11, the interface controller 201 connects the SIM card controller 203 and the card connector 11, the SIM card controller 203 transmits the data signal (DATA), the clock signal (CLK), the transmission programming voltage/input signal (VPP), and the reset signal (RST) to the nano-SIM card 3 through the third spring plate 11c and the sixth spring plate 11f of the card connector 11, the processor 20 of the electronic device 100 transmits the power signal (VCC) and the ground signal (GND) to the nano-SIM card 3 through the eighth spring plate 11h and the seventh spring plate 11g of the card connector 11, and the nano-SIM card 3 communicates with the electronic device 100.

When the second NM card 5 is inserted into the card holder assembly 10 of the electronic device 100 and the second NM card 5 is electrically connected to the card connector 11, the interface controller 201 connects the second memory card controller 2022 and the card connector 11, the second memory card controller 2022 transmits the data signals (RX+, RX-, TX+, and TX-), clock signals (CLK+ and CLK-), and the second power signal (VDD 2) to the second NM card 5 through the first spring plate 11a to the third spring plate 11c, the fifth spring plate 11e, the sixth spring plate 11f, the ninth spring plate 11i, and the tenth spring plate 11j of the card connector 11, the processor 20 of the electronic device 100 transmits the first power signal (VDD 1) and the ground signal (VSS) to the second NM card 5 through the eighth spring plate 11h and the seventh spring plate 11g of the card connector 11, and the second NM card 5 communicates with the electronic device 100. Therefore, the electronic device 100 is compatible with the nano-SIM card 3 and the second NM card 5.

For example, the third gold finger 523 and the tenth gold finger 5210 of the second NM card 5 may be electrically connected to a high-voltage resistant circuit or a protection switch, to prevent a circuit from being burnt when the card interface 52 of the second NM card 5 is short-circuited. The high-voltage resistant circuit or the protection switch is located in a package 511 of the second NM card 5. In some other embodiments, a high-impedance protection circuit may be provided in the electronic device, to prevent a circuit of the second NM card 5 from being burnt. For example, this can be implemented by adding a protection circuit in an interface controller of the electronic device.

It may be understood that, when the fourth gold finger 524 of the second NM card 5 is configured to transmit a detection signal (C/D), the interface controller 201 is adaptively adjusted. The interface controller 201 is further configured to connect a detection interface (C/D) of the second memory card controller 2022 and the fourth spring plate 11d when the second NM card 5 is inserted into the electronic device 100.

In some other embodiments, when the second gold finger 522 of the second NM card 5 is suspended, and the fourth gold finger 524 is configured to transmit a clock signal (for example, CLK-), the interface controller 201 is adaptively adjusted, and the interface controller 201 is further configured to connect the clock interface (for example, CLK-) of the second memory card controller 2022 and the fourth spring plate 11d when the second NM card 5 is inserted into the electronic device 100.

In some other embodiments, the programming voltage/input signal (VPP) may not be supported, to reduce the design difficulty of the processor 20. In this case, the SIM card controller 203 may not include the programming voltage/input interface (VPP), the interface controller 201 may not include the second switch 2012, and a clock interface (for example, CLK+) of the second memory card controller 2022 is electrically connected to the fifth spring plate 11e of the card connector 11 through the interface controller 201. For other solution content, refer to the foregoing embodiments. Details are not described herein again.

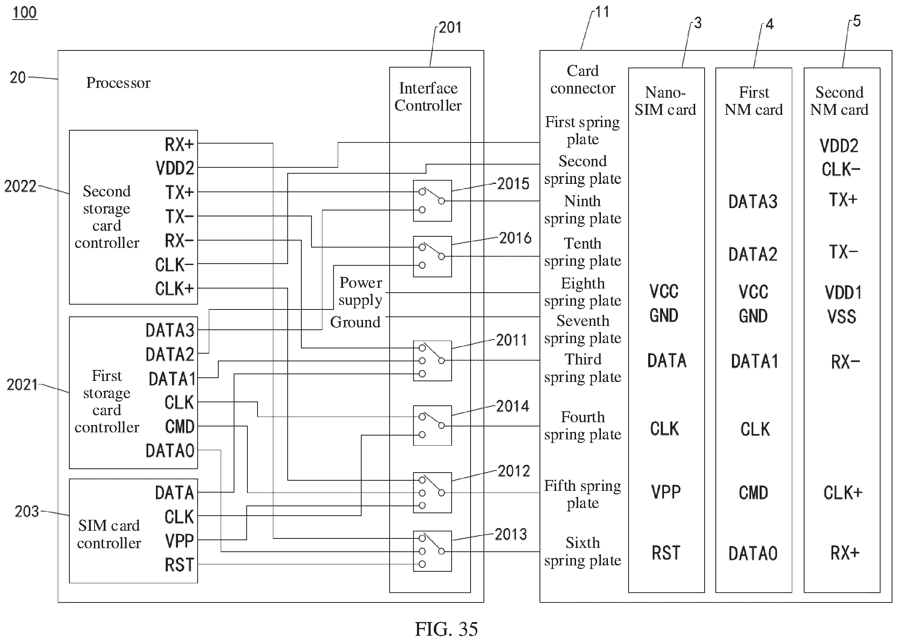

FIG. 35 is a schematic of a partial circuit of the electronic device 100 shown in FIG. 1 in some other embodiments.

In some embodiments, a card holder assembly 10 of the electronic device 100 is compatible with a nano-SIM card 3, a first NM card 4, and a second NM card 5, and a signal arrangement of a card interface 52 of the second NM card 5 is shown in FIG. 33. A processor 20 of the electronic device 100 includes an interface controller 201, a SIM card controller 203, a first memory card controller 2021, and a second memory card controller 2022. The SIM card controller 203, the first memory card controller 2021, and the second memory card controller 2022 are electrically connected to the interface controller 201. The interface controller 201 is electrically connected to a first spring plate 11a to a tenth spring plate 11j of a card connector 11 of the card holder assembly 10.

For the SIM card controller 203 and the second memory card controller 2022, refer to related descriptions in the embodiment corresponding to FIG. 34. Details are not described herein again. The first memory card controller 2021 includes four data interfaces, a clock interface, and a command and response interface. The four data interfaces are configured to transmit data signals (DATA 0, DATA 1, DATA 2, and DATA 3), the clock interface is configured to transmit a clock signal (CLK), and the command and response interface is configured to transmit a command and response signal (CMD). In FIG. 35 and related descriptions of subsequent accompanying drawings and content of embodiments, a plurality of interfaces of the first memory card controller 2021 are marked and illustrated by using signals transmitted through the plurality of interfaces. After a power interface and a ground interface are split, the power interface and the ground interface may alternatively be integrated into the first memory card controller 2021.

For example, the interface controller 201 is configured to: connect the SIM card controller 203 and the card connector 11, or connect the first memory card controller 2021 and the card connector 11, or connect the second memory card controller 2022 and the card connector 11. The interface controller 201 may include a plurality of switches and a conducting wire.

In some embodiments, the interface controller 201 includes a first switch 2011, a second switch 2012, a third switch 2013, a fourth switch 2014, a fifth switch 2015, and a sixth switch 2016.

The first switch 2011 is connected to a data interface (for example, RX-) of the second memory card controller 2022, a data interface (for example, DATA 1) of the first memory card controller 2021, and a data interface (DATA) of the SIM card controller 203, the first switch 2011 is further connected to a third spring plate 11c of the card connector 11, and the first switch 2011 is configured to: connect the third spring plate 11c and the data interface (for example, RX-) of the second memory card controller 2022, or connect the third spring plate 11c and the data interface (for example, DATA 1) of the first memory card controller 2021, or connect the third spring plate 11c and the data interface (DATA) of the SIM card controller 203.

The second switch 2012 is connected to a clock interface (CLK+) of the second memory card controller 2022, a command and response interface (CMD) of the first memory card controller 2021, and a programming voltage/input interface (VPP) of the SIM card controller 203, the second switch 2012 is further connected to a fifth spring plate 11e of the card connector 11, and the second switch 2012 is configured to connect the fifth spring plate 11e and a clock interface (CLK+) of the second memory card controller 2022, or connect the fifth spring plate 11e and a command and response interface (CMD) of the first memory card controller 2021, or connect the fifth spring plate 11e and a programming voltage/input interface (VPP) of the SIM card controller 203.

The third switch 2013 is connected to another data interface (for example, RX+) of the second memory card controller 2022, another data interface (for example, DATA 0) of the first memory card controller 2021, and a reset interface (RST) of the SIM card controller 203, the third switch 2013 is further connected to a sixth spring plate 11f of the card connector 11, and the third switch 2013 is configured to: connect the sixth spring plate 11f and the data interface (for example, RX+) of the second memory card controller 2022, or connect the sixth spring plate 11f and the data interface (for example, DATA0) of the first memory card controller 2021, or connect the sixth spring plate 11f and the reset interface (RST) of the SIM card controller 203.

The fourth switch 2014 is connected to the clock interface (CLK) of the first memory card controller 2021 and the clock interface (CLK) of the SIM card controller 203, the fourth switch 2014 is further connected to a fourth spring plate 11d of the card connector 11, and the fourth switch 2014 is configured to: connect the third spring plate 11c and the clock interface (CLK) of the first memory card controller 2021, or connect the fourth spring plate 11d and the clock interface (CLK) of the SIM card controller 203.

The fifth switch 2015 is connected to another data interface (for example, TX+) of the second memory card controller 2022 and another data interface (for example, DATA 3) of the first memory card controller 2021, the fifth switch 2015 is further connected to a ninth spring plate 11i of the card connector 11, and the fifth switch 2015 is configured to: connect the ninth spring plate 11i and the data interface (for example, TX+) of the second memory card controller 2022, or connect the ninth spring plate 11i and the data interface (for example, DATA 3) of the first memory card controller 2021.

The sixth switch 2016 is connected to another data interface (for example, TX-) of the second memory card controller 2022 and another data interface (for example, DATA 2) of the first memory card controller 2021, the sixth switch 2016 is further connected to the tenth spring plate 11j of the card connector 11, and the sixth switch 2016 is configured to: connect the tenth spring plate 11j and the data interface (for example, TX-) of the second memory card controller 2022, or connect the tenth spring plate 11j and the data interface (for example, DATA 2) of the first memory card controller 2021.

The second power interface (VDD 2) of the second memory card controller 2022 is electrically connected to a first spring plate 11a of the card connector 11 by using the interface controller 201. Another clock interface (for example, CLK-) of the second memory card controller 2022 is electrically connected to the second spring plate 11b of the card connector 11 by using the interface controller 201. The power interface of the processor 20 is electrically connected to an eighth spring plate 11h of the card connector 11 by using the interface controller 201. The ground interface of the processor 20 is electrically connected to a seventh spring plate 11g of the card connector 11 by using the interface controller 201. Between the second power interface (VDD 2) of the second memory card controller 2022 and the first spring plate 11a, between the clock interface (for example, CLK-) of the second memory card controller 2022 and the second spring plate 11b, between the power interface of the processor 20 and the eighth spring plate 11h, and between the ground interface and the seventh spring plate 11g, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector 11, the interface controller 201 connects the SIM card controller 203 and the card connector 11, the SIM card controller 203 transmits the data signal (DATA), the clock signal (CLK), the transmission programming voltage/input signal (VPP), and the reset signal (RST) to the nano-SIM card 3 through the third spring plate 11c and the sixth spring plate 11f of the card connector 11, the processor 20 of the electronic device 100 transmits the power signal (VCC) and the ground signal (GND) to the nano-SIM card 3 through the eighth spring plate 11h and the seventh spring plate 11g of the card connector 11, and the nano-SIM card 3 communicates with the electronic device 100.

When the first NM card 4 is inserted into the card holder assembly 10 of the electronic device 100 and the first NM card 4 is electrically connected to the card connector 11, the interface controller 201 connects the first memory card controller 2021 and the card connector 11, the first memory card controller 2021 transmits the data signals (DATA 0, DATA 1, DATA 2, and DATA 3), the clock signal (CLK), and the command and response signal (CMD) to the first NM card 4 through the third spring plate 11c to the sixth spring plate 11f, the ninth spring plate 11i, and the tenth spring plate 11j of the card connector 11, the processor 20 of the electronic device 100 transmits the power signal (VCC) and the ground signal (GND) to the first NM card 4 through the eighth spring plate 11h and the seventh spring plate 11g of the card connector 11, and the first NM card 4 communicates with the electronic device 100.

When the second NM card 5 is inserted into the card holder assembly 10 of the electronic device 100 and the second NM card 5 is electrically connected to the card connector 11, the interface controller 201 connects the second memory card controller 2022 and the card connector 11, the second memory card controller 2022 transmits the data signals (RX+, RX-, TX+, and TX-), clock signals (CLK+ and CLK-), and the second power signal (VDD 2) to the second NM card 5 through the first spring plate 11a to the third spring plate 11c, the fifth spring plate 11e, the sixth spring plate 11f, the ninth spring plate 11i, and the tenth spring plate 11j of the card connector 11, the processor 20 of the electronic device 100 transmits the first power signal (VDD 1) and the ground signal (VSS) to the second NM card 5 through the eighth spring plate 11h and the seventh spring plate 11g of the card connector 11, and the second NM card 5 communicates with the electronic device 100. Therefore, the electronic device 100 is compatible with the nano-SIM card 3 and the second NM card 5.

It may be understood that, when the fourth gold finger 524 of the second NM card 5 is configured to transmit a detection signal (C/D), the interface controller 201 is adaptively adjusted. The interface controller 201 is further configured to connect a detection interface (C/D) of the second memory card controller 2022 and the fourth spring plate 11d when the second NM card 5 is inserted into the electronic device 100.

In some other embodiments, when the second gold finger 522 of the second NM card 5 is suspended, and the fourth gold finger 524 is configured to transmit a clock signal (for example, CLK-), the interface controller 201 is adaptively adjusted, and the interface controller 201 is further configured to connect the clock interface (for example, CLK-) of the second memory card controller 2022 and the fourth spring plate 11d when the second NM card 5 is inserted into the electronic device 100.

In some other embodiments, the programming voltage/input signal (VPP) may not be supported, to reduce the design difficulty of the processor 20. In this case, the SIM card controller 203 may not include the programming voltage/input interface (VPP). The second switch 2012 is connected to a clock interface (CLK+) of the second memory card controller 2022 and the command and response interface (CMD) of the first memory card controller 2021. The second switch 2012 is further connected to the fifth spring plate 11e of the card connector 11. For other solution content, refer to the foregoing embodiments. Details are not described herein again.

The following uses an example to describe a second signal arrangement manner of a second NM card 5 for which a PCIe interface protocol is used.

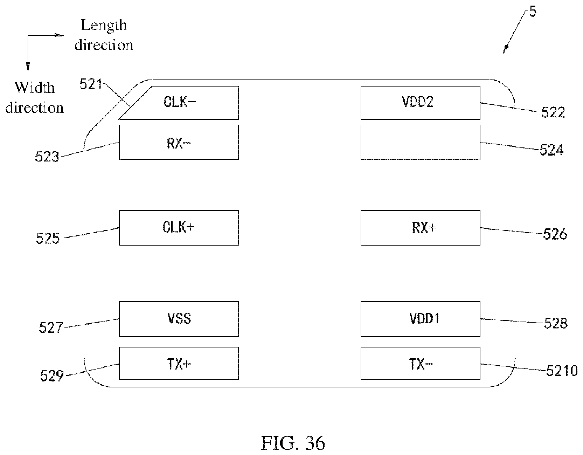

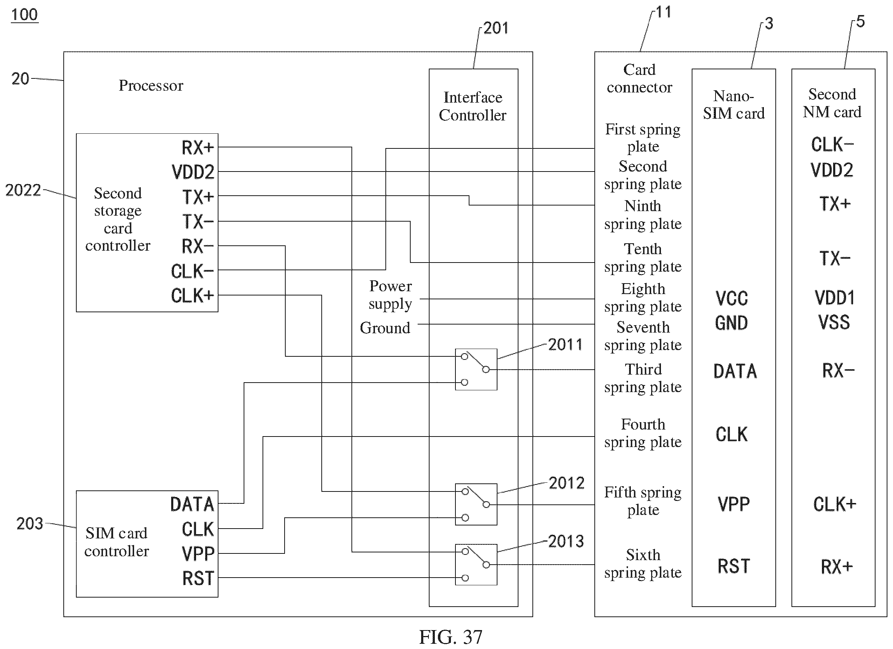

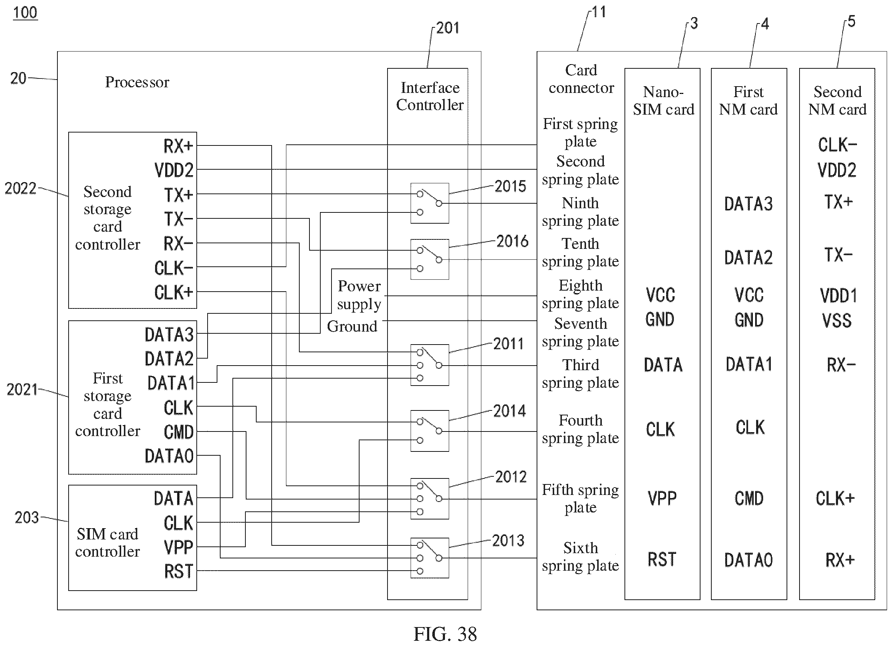

Refer to FIG. 36 to FIG. 38 together. FIG. 36 is a diagram of the second NM card 5 shown in FIG. 17 in some other embodiments. FIG. 37 is a schematic of a partial circuit of the electronic device 100 shown in FIG. 1 in some other embodiments. FIG. 38 is a schematic of a partial circuit of the electronic device 100 shown in FIG. 1 in some other embodiments.

A main difference between the second NM card 5 shown in FIG. 36 and the second NM card 5 shown in FIG. 33 lies in that a first gold finger 521 of the second NM card 5 is configured to transmit a clock signal (for example, CLK-), and a second gold finger 522 is configured to transmit a second power signal (VDD 2). In other words, signals transmitted through the first gold finger 521 and the second gold finger 522 of the second NM card 5 shown in FIG. 36 and signals transmitted through the first gold finger 521 and the second gold finger 522 of the second NM card 5 shown in FIG. 33 may be exchanged. Clock signals transmitted through the first gold finger 521 and the fifth gold finger 525 can be exchanged. For other solution content of the second NM card 5 shown in FIG. 36, refer to related descriptions of the second NM card 5 shown in FIG. 33. Details are not described herein again.

In the second NM card 5 shown in FIG. 36, when a fourth gold finger 524 adjacent to the second gold finger 522 is suspended, because the fourth gold finger 524 does not perform signal transmission, a case in which the fourth gold finger 524 is short-circuited due to the second gold finger 522, and consequently, a circuit of the second NM card 5 is burnt does not occur, to improve reliability of the second NM card 5. In addition, the fourth gold finger 524 of the second NM card 5 does not need to be set to be electrically connected to a high-voltage resistant circuit or a protection switch, and costs of the second NM card 5 are low. In some other embodiments, the first gold finger 521 may be suspended, and the fourth gold finger 524 is configured to transmit a clock signal (for example, CLK-).

A main difference between the electronic device 100 shown in FIG. 37 and the electronic device 100 shown in FIG. 34 lies in that a second power interface (VDD 2) of a second memory card controller 2022 is electrically connected to a first spring plate 11a of a card connector 11, and a clock interface (for example, CLK-) is electrically connected to a second spring plate 11b of the card connector 11. For other solution content of the electronic device 100 shown in FIG. 37, refer to related descriptions of the electronic device 100 shown in FIG. 34. Details are not described herein again.

A main difference between the electronic device 100 shown in FIG. 38 and the electronic device 100 shown in FIG. 35 lies in that a second power interface (VDD 2) of a second memory card controller 2022 is electrically connected to a first spring plate 11a of a card connector 11, and a clock interface (for example, CLK-) is electrically connected to a second spring plate 11b of the card connector 11. For other solution content of the electronic device 100 shown in FIG. 38, refer to related descriptions of the electronic device 100 shown in FIG. 35. Details are not described herein again.

The following uses an example to describe a third signal arrangement manner of a second NM card 5 for which a PCIe interface protocol is used.

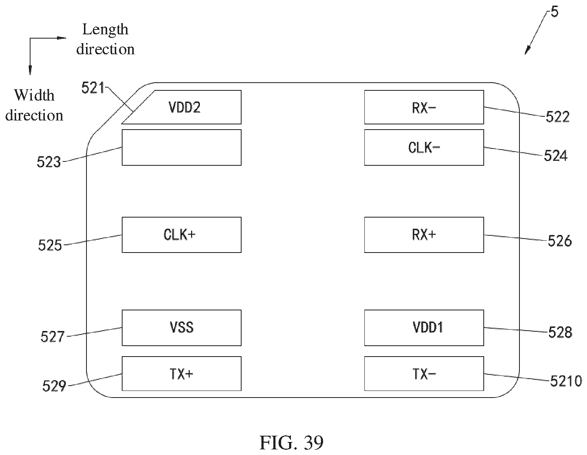

FIG. 39 is a diagram of the second NM card 5 shown in FIG. 17 in some other embodiments.

For example, a second gold finger 522, a sixth gold finger 526, a ninth gold finger 529, and a tenth gold finger 5210 of the second NM card 5 are configured to transmit data signals. An example in which the second gold finger 522 is configured to transmit a data signal (RX-), the sixth gold finger 526 is configured to transmit a data signal (RX+), the ninth gold finger 529 is configured to transmit a data signal (TX+), and the tenth gold finger 5210 is configured to transmit a data signal (TX-) is used for description in the following embodiments. In some other embodiments, the data signals transmitted through the second gold finger 522, the sixth gold finger 526, the ninth gold finger 529, and the tenth gold finger 5210 can be exchanged. For example, the data signals transmitted through the second gold finger 522 and the sixth gold finger 526 are exchanged, and the data signals transmitted through the ninth gold finger 529 and the tenth gold finger 5210 are exchanged. Details are not described herein in another embodiment.

A fourth gold finger 524 and a fifth gold finger 525 are configured to transmit clock signals. An example in which the fourth gold finger 524 is configured to transmit a clock signal (CLK-) and the fifth gold finger 525 is configured to transmit a clock signal (CLK+) is used for description in the following embodiments. In some other embodiments, the clock signals transmitted through the fourth gold finger 524 and the fifth gold finger 525 can be exchanged.

A first gold finger 521 is configured to transmit a second power signal (VDD 2), a seventh gold finger 527 is configured to transmit a ground signal (VSS), and an eighth gold finger 528 is configured to transmit a first power signal (VDD 1). A third gold finger 523 is suspended.

Table 7 is Table 5 of a correspondence between a plurality of spring plates of a card connector 11 and each of a plurality of gold fingers of a nano-SIM card 3, a plurality of gold fingers of a first NM card 4, a plurality of gold fingers of a second NM card 5, and transmission signals thereof. When the second NM card 5 is connected to the card connector 11, a first spring plate 11a to a tenth spring plate 11j of the card connector 11 abut against and are electrically connected to the first gold finger 521 to the tenth gold finger 5210 of the second NM card 5 in a one-to-one correspondence, and locations of a third gold finger 523 to an eighth gold finger 528 of the second NM card 5 correspond to locations of a first gold finger 321 to a sixth gold finger 326 of the nano-SIM card 3 in a one-to-one correspondence. In some embodiments, locations of a third gold finger 523 to a tenth gold finger 5210 of the second NM card 5 correspond to locations of a first gold finger 421 to an eighth gold finger 428 of the first NM card 4 in a one-to-one correspondence.

**Table 7**

| Card connector 11 | Nano-SIM card 3 | | First NM card 4 | | Second NM card 5 | |
|---|---|---|---|---|---|---|
| First spring plate 11a | | | | | First gold finger 521 | VDD 2 |
| Second spring plate 11b | | | | | Second gold finger 522 | RX- |
| Third spring plate 11c | First gold finger 321 | DATA | First gold finger 421 | DATA 1 | Third gold finger 523 | |
| Fourth spring plate 11d | Second gold finger 322 | CLK | Second gold finger 422 | CLK | Fourth gold finger 524 | CLK- |
| Fifth spring plate 11e | Third gold finger 323 | VPP | Third gold finger 423 | CMD | Fifth gold finger 525 | CLK+ |
| Sixth spring plate 11f | Fourth gold finger 324 | RST | Fourth gold finger 424 | DATA 0 | Sixth gold finger 526 | RX+ |
| Seventh spring plate 11g | Fifth gold finger 325 | GND | Fifth gold finger 425 | GND | Seventh gold finger 527 | VSS |
| Eighth spring plate 11h | Sixth gold finger 326 | VCC | Sixth gold finger 426 | VCC | Eighth gold finger 528 | VDD 1 |
| Ninth spring plate 11i | | | Seventh gold finger 427 | DATA 3 | Ninth gold finger 529 | TX+ |
| Tenth spring plate 11j | | | Eighth gold finger 428 | DATA 2 | Tenth gold finger 5210 | TX- |

In this embodiment, the second NM card 5 arranges, on the first gold finger 521, a second power signal (VDD 2) required for a PCIe protocol. Because a location of the first gold finger 521 of the second NM card 5 corresponds to none of locations of all the gold fingers of the nano-SIM card 3 and the first NM card 4, the first gold finger 521 of the second NM card 5 does not need to share a same spring plate of the card connector 11 with the nano-SIM card 3 and the first NM card 4, to prevent the second power signal (VDD 2) from sharing a same spring plate with data signals of the nano-SIM card 3 and the first NM card 4, and reduce a risk that the nano-SIM card 3 and the first NM card 4 are burnt by the second power signal (VDD 2) when the nano-SIM card 3 and the first NM card 4 are inserted into an electronic device 100 and are connected to the card connector 11. Reliability of compatibility of the electronic device 100 with the nano-SIM card 3, the first NM card 4, and the second NM card 5 is high. In addition, a high-voltage resistant design that is used to prevent a circuit from being burnt by the second power signal (VDD 2) does not need to be deployed for the first NM card 4 and the nano-SIM card 3 either, to reduce costs.

One high-speed data signal (for example, RX-) of the second NM card 5 is arranged on the second gold finger 522. Because a location of the second gold finger 522 of the second NM card 5 corresponds to none of locations of all the gold fingers of the nano-SIM card 3 and the first NM card 4, the second spring plate 11b is connected to a high-speed data interface of a processor 20 of the electronic device 100 and does not need to be connected to a low-speed data interface. Regardless of whether an information card inserted into the electronic device 100 is the second NM card 5, the nano-SIM card 3, or the first NM card 4, the processor 20 does not need to switch an interface electrically connected to the second spring plate 11b, to reduce difficulty in switching between the high-speed data interface and the low-speed data interface, simplify a circuit of the processor 20, and reduce design difficulty and costs.

In addition, because a location of the seventh gold finger 527 of the second NM card 5 corresponds to a location of the fifth gold finger 325 of the nano-SIM card 3, corresponds to a location of the fifth gold finger 425 of the first NM card 4, and abuts against and is electrically connected to the seventh spring plate 11g of the card connector 11 when the second NM card 5, the nano-SIM card 3, and the first NM card 4 are inserted into the electronic device 100, and the seventh gold finger 527 of the second NM card 5, the fifth gold finger 325 of the nano-SIM card 3, and the fifth gold finger 425 of the first NM card 4 are all configured to transmit ground signals (which are respectively VSS/GND/GND), the processor 20 of the electronic device 100 may be electrically connected to the seventh spring plate 11g of the card connector 11 through a same ground interface. Regardless of whether the information inserted into the electronic device 100 is the second NM card 5, the nano-SIM card 3, or the first NM card 4, the processor 20 does not need to switch an interface electrically connected to the seventh spring plate 11g, to simplify a circuit of the processor 20, and reduce design difficulty and costs.

Because a location of the eighth gold finger 528 of the second NM card 5 corresponds to a location of the sixth gold finger 326 of the nano-SIM card 3, corresponds to a location of the sixth gold finger 426 of the first NM card 4, and abuts against and is electrically connected to the eighth spring plate 11h of the card connector 11 when the second NM card 5, the nano-SIM card 3, and the first NM card 4 are inserted into the electronic device 100, the eighth gold finger 528 of the second NM card 5, the sixth gold finger 326 of the nano-SIM card 3, and the sixth gold finger 426 of the first NM card 4 are all configured to transmit power signals (which are respectively VDD 1/VCC/VCC), the processor 20 of the electronic device 100 may be electrically connected to the eighth spring plate 11h of the card connector 11 through a same power interface. Regardless of whether the information inserted into the electronic device 100 is the second NM card 5, the nano-SIM card 3, or the first NM card 4, the processor 20 does not need to switch an interface electrically connected to the eighth spring plate 11h, to simplify a circuit of the processor 20, and reduce design difficulty and costs.

A location of the fourth gold finger 524 of the second NM card 5 corresponds to a location of the second gold finger 322 of the nano-SIM card 3, corresponds to a location of the second gold finger 422 of the first NM card 4, and abuts against and is electrically connected to the fourth spring plate 11d of the card connector 11 when the second NM card 5, the nano-SIM card 3, and the first NM card 4 are inserted into the electronic device 100, the fourth gold finger 524 of the second NM card 5 is configured to transmit a clock signal (for example, CLK-), the second gold finger 322 of the nano-SIM card 3 is configured to transmit a clock signal (CLK), the second gold finger 422 of the first NM card 4 is configured to transmit a clock signal (CLK), and the second NM card 5, the nano-SIM card 3, and the first NM card 4 may share the fourth spring plate 11d in a time-division manner. The processor 20 may provide clock signals of different frequencies through the fourth spring plate 11d, without a need to switch a data interface signal, to simplify the circuit of the processor 20, and reduce design complexity and costs. In some scenarios, when the first NM card 4, the second NM card 5, and the nano-SIM card 3 can have clock signals of a same frequency, the processor 20 may provide a same clock signal for the three types of cards, and no longer needs to perform switching, to simplify design difficulty of the processor 20. For example, there is a unified clock frequency of 20 MHz.

A location of the fifth gold finger 525 of the second NM card 5 corresponds to a location of the third gold finger 323 of the nano-SIM card 3, corresponds to a location of the third gold finger 423 of the first NM card 4, and abuts against and is electrically connected to the fifth spring plate 11e of the card connector 11 when the second NM card 5, the nano-SIM card 3, and the first NM card 4 are inserted into the electronic device 100, the fifth gold finger 525 of the second NM card 5 is configured to transmit another clock signal (for example, CLK+), the third gold finger 323 of the nano-SIM card 3 is configured to transmit a programming voltage/input signal (VPP), the first gold finger 421 of the first NM card 4 is configured to transmit a command and response signal (CMD), and the second NM card 5, the nano-SIM card 3, and the first NM card 4 may share the fifth spring plate 11e in a time-division manner.

A location of the sixth gold finger 526 of the second NM card 5 corresponds to a location of the fourth gold finger 324 of the nano-SIM card 3, corresponds to a location of the fourth gold finger 424 of the first NM card 4, and abuts against and is electrically connected to the sixth spring plate 11f of the card connector 11 when the second NM card 5, the nano-SIM card 3, and the first NM card 4 are inserted into the electronic device 100, the sixth gold finger 526 of the second NM card 5 is configured to transmit another data signal (for example, RX+), the fourth gold finger 324 of the nano-SIM card 3 is configured to transmit a reset signal (RST), the fourth gold finger 424 of the first NM card 4 is configured to transmit a data signal (for example, DATA 0), and the second NM card 5, the nano-SIM card 3, and the first NM card 4 may share the sixth spring plate 11f in a time-division manner.

A location of the ninth gold finger 529 of the second NM card 5 corresponds to a location of the seventh gold finger 427 of the first NM card 4, and abuts against and is electrically connected to the ninth spring plate 11i of the card connector 11 when the second NM card 5 and the first NM card 4 are inserted into the electronic device 100, the ninth gold finger 529 of the second NM card 5 is configured to transmit a data signal (for example, TX+), the seventh gold finger 427 of the first NM card 4 is configured to transmit a data signal (for example, DATA 3), and the second NM card 5 and the first NM card 4 may share the ninth spring plate 11i in a time-division manner.

A location of the tenth gold finger 5210 of the second NM card 5 corresponds to a location of the eighth gold finger 428 of the first NM card 4, and abuts against and is electrically connected to the tenth spring plate 11j of the card connector 11 when the second NM card 5 and the first NM card 4 are inserted into the electronic device 100, the tenth gold finger 5210 of the second NM card 5 is configured to transmit a data signal (for example, TX-), the eighth gold finger 428 of the first NM card 4 is configured to transmit a data signal (for example, DATA 2), and the second NM card 5 and the first NM card 4 may share the tenth spring plate 11j in a time-division manner.

When the electronic device 100 is compatible with the nano-SIM card 3 and the second NM card 5, and is incompatible with the first NM card 4, the ninth spring plate 11i and the tenth spring plate 11j of the card connector 11 may alternatively be exclusive spring plates of the second NM card 5, and the ninth spring plate 11i and the tenth spring plate 11j are both connected to a high-speed data interface. Regardless of whether the information card inserted into the electronic device 100 is the second NM card 5 or the nano-SIM card 3, the processor 20 does not need to switch an interface electrically connected to the ninth spring plate 11i and the tenth spring plate 11j, to simplify a circuit of the processor 20, and reduce design difficulty and costs.

Because the third gold finger 523 adjacent to the first gold finger 521 may be suspended and does not perform signal transmission, a case in which the third gold finger 523 is short-circuited due to the first gold finger 521, and consequently, a circuit of the second NM card 5 is burnt does not occur, to improve reliability of the second NM card 5. In addition, the third gold finger 523 of the second NM card 5 does not need to be set to be electrically connected to a high-voltage resistant circuit or a protection switch, and costs of the second NM card 5 are low.

For example, the tenth gold finger 5210 may be electrically connected to a high-voltage resistant circuit or a protection switch, to prevent a circuit from being burnt when the card interface 52 of the second NM card 5 is short-circuited. In some other embodiments, the third gold finger 523 may alternatively be configured to transmit a detection signal (C/D). In this case, the third gold finger 523 may also be electrically connected to the voltage-tolerant circuit or the protection switch, to prevent a circuit from being burnt when a card interface 52 of the second NM card 5 is short-circuited. The high-voltage resistant circuit or the protection switch is located in a package 511 of the second NM card 5. In some other embodiments, a high-impedance protection circuit may be provided in the electronic device, to prevent a circuit of the second NM card 5 from being burnt. For example, this can be implemented by adding a protection circuit in an interface controller of the electronic device.

In some other embodiments, the third gold finger 523 of the second NM card 5 may alternatively be configured to transmit a clock signal (for example, CLK-), and the fourth gold finger 524 is set to be suspended or is configured to transmit a detection signal (C/D). In this case, the third gold finger 523 may be electrically connected to the high-voltage resistant circuit or the protection switch, to avoid a case in which the third gold finger 523 is short-circuited due to a spring plate, and consequently, the second NM card 5 is burnt, and improve reliability of the second NM card 5. In some other embodiments, a high-impedance protection circuit may be provided in the electronic device, to prevent a circuit of the second NM card 5 from being burnt. For example, this can be implemented by adding a protection circuit in an interface controller of the electronic device.

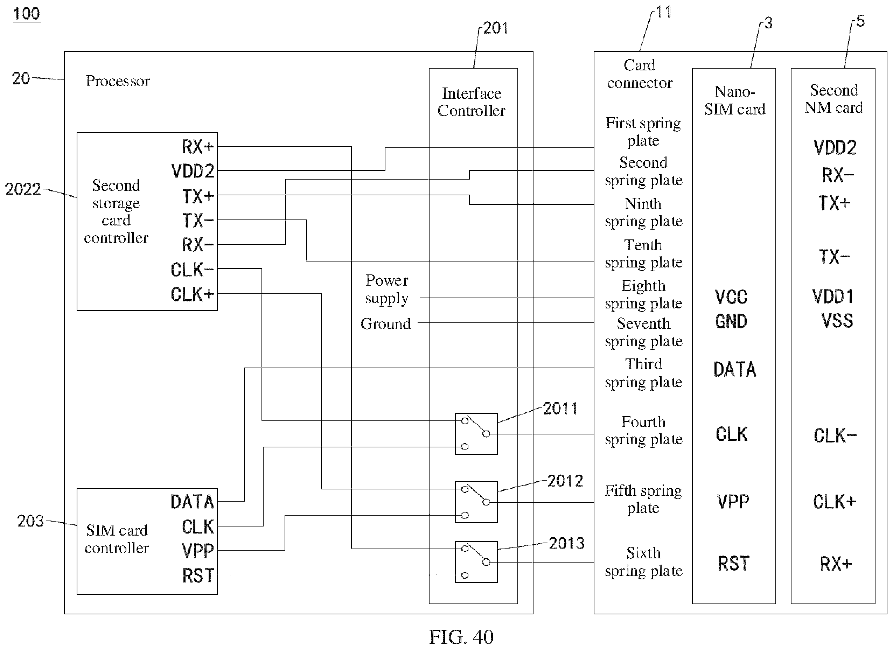

FIG. 40 is a schematic of a partial circuit of the electronic device 100 shown in FIG. 1 in some other embodiments.

In some embodiments, a card holder assembly 10 of the electronic device 100 is compatible with a nano-SIM card 3 and a second NM card 5, and a signal arrangement of a card interface 52 of the second NM card 5 is shown in FIG. 39. A processor 20 of the electronic device 100 includes an interface controller 201, a SIM card controller 203, and a second memory card controller 2022. The SIM card controller 203 and the second memory card controller 2022 are electrically connected to the interface controller 201. The interface controller 201 is electrically connected to a first spring plate 11a to a tenth spring plate 11j of a card connector 11 of the card holder assembly 10.

The SIM card controller 203 includes a data interface, a clock interface, a programming voltage/input interface, and a reset interface. The data interface is configured to transmit a data signal (DATA), the clock interface is configured to transmit a clock signal (CLK), the programming voltage/input interface is configured to transmit a programming voltage/input signal (VPP), and the reset interface is configured to transmit a reset signal (RST). In FIG. 40 and related descriptions of subsequent accompanying drawings and content of embodiments, a plurality of interfaces of the SIM card controller 203 are marked and illustrated by using signals transmitted through the plurality of interfaces.

The second memory card controller 2022 includes four data interfaces, two clock interfaces, and a second power interface. The four data interfaces are configured to transmit data signals (RX+, RX-, TX+, and TX-), the two clock interfaces are configured to transmit clock signals (CLK+ and CLK-), and the second power interface is configured to transmit a second power signal (VDD 2). In FIG. 40 and related descriptions of subsequent accompanying drawings and content of embodiments, a plurality of interfaces of the second memory card controller 2022 are marked and illustrated by using signals transmitted through the plurality of interfaces. In some other embodiments, the second power interface may alternatively be independent of the second memory card controller 2022. This is not strictly limited in embodiments of this application.

The processor 20 further includes a power interface and a ground interface, the power interface is configured to transmit a power signal (VCC) or a first power signal (VDD 1), and the ground interface is configured to transmit a ground signal (GND) or a ground signal (VSS). The power interface and the ground interface may be independent of the SIM card controller 203 and the second memory card controller 2022, or may be separately split and integrated into the SIM card controller 203 and the second memory card controller 2022. This is not strictly limited in embodiments of this application. In FIG. 40 and subsequent accompanying drawings, that the power interface and the ground interface are independent of the SIM card controller 203 and the second memory card controller 2022 is used as an example for illustration, and the power interface and the ground interface are respectively identified as a power supply and a ground.

For example, the interface controller 201 is configured to: connect the SIM card controller 203 and the card connector 11, or connect the second memory card controller 2022 and the card connector 11. The interface controller 201 may include a plurality of switches and a conducting wire.

In some embodiments, the interface controller 201 includes a first switch 2011, a second switch 2012, and a third switch 2013.

The first switch 2011 is connected to a clock interface (for example, CLK-) of the second memory card controller 2022 and the clock interface (CLK) of the SIM card controller 203, the first switch 2011 is further connected to a fourth spring plate 11d of the card connector 11, and the first switch 2011 is configured to: connect the fourth spring plate 11d and the clock interface (for example, CLK-) of the second memory card controller 2022, or connect the fourth spring plate 11d and the clock interface (CLK) of the SIM card controller 203.

The second switch 2012 is connected to another clock interface (for example, CLK+) of the second memory card controller 2022 and the programming voltage/input interface (VPP) of the SIM card controller 203, the second switch 2012 is further connected to a fifth spring plate 11e of the card connector 11, and the second switch 2012 is configured to: connect the fifth spring plate 11e and the clock interface (for example, CLK+) of the second memory card controller 2022, or connect the fifth spring plate 11e and the programming voltage/input interface (VPP) of the SIM card controller 203.

The third switch 2013 is connected to a data interface (for example, RX+) of the second memory card controller 2022 and the reset interface (RST) of the SIM card controller 203, the third switch 2013 is further connected to a sixth spring plate 11f of the card connector 11, and the third switch 2013 is configured to: connect the sixth spring plate 11f and the data interface (for example, RX+) of the second memory card controller 2022, or connect the sixth spring plate 11f and the reset interface (RST) of the SIM card controller 203.

The second power interface (VDD 2) of the second memory card controller 2022 is electrically connected to a first spring plate 11a of the card connector 11 by using the interface controller 201. Another data interface (for example, RX-) of the second memory card controller 2022 is electrically connected to a second spring plate 11b of the card connector 11 by using the interface controller 201. Another data interface (for example, TX+) of the second memory card controller 2022 is electrically connected to a ninth spring plate 11i of the card connector 11 by using the interface controller 201. Another data interface (for example, TX-) of the second memory card controller 2022 is electrically connected to the tenth spring plate 11j of the card connector 11 by using the interface controller 201. The power interface of the processor 20 is electrically connected to an eighth spring plate 11h of the card connector 11 by using the interface controller 201. The ground interface of the processor 20 is electrically connected to a seventh spring plate 11g of the card connector 11 by using the interface controller 201. The data interface (DATA) of the SIM card controller 203 is electrically connected to a third spring plate 11c of the card connector 11 by using the interface controller 201.

Between the second power interface (VDD 2) of the second memory card controller 2022 and the first spring plate 11a, between the clock interface (for example, CLK-) of the second memory card controller 2022 and the second spring plate 11b, between the data interface (DATA) of the SIM card controller 203 and the third spring plate 11c, between a data interface (for example, TX+) of the second memory card controller 2022 and the ninth spring plate 11i, between a data interface (for example, TX-) of the second memory card controller 2022 and the tenth spring plate 11j, between the power interface of the processor 20 and the eighth spring plate 11h, and between the ground interface and the seventh spring plate 11g, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector 11, the interface controller 201 connects the SIM card controller 203 and the card connector 11, the SIM card controller 203 transmits the data signal (DATA), the clock signal (CLK), the transmission programming voltage/input signal (VPP), and the reset signal (RST) to the nano-SIM card 3 through the third spring plate 11c and the sixth spring plate 11f of the card connector 11, the processor 20 of the electronic device 100 transmits the power signal (VCC) and the ground signal (GND) to the nano-SIM card 3 through the eighth spring plate 11h and the seventh spring plate 11g of the card connector 11, and the nano-SIM card 3 communicates with the electronic device 100.

When the second NM card 5 is inserted into the card holder assembly 10 of the electronic device 100 and the second NM card 5 is electrically connected to the card connector 11, the interface controller 201 connects the second memory card controller 2022 and the card connector 11, the second memory card controller 2022 transmits the data signals (RX+, RX-, TX+, and TX-), the clock signals (CLK+ and CLK-), and the second power signal (VDD 2) to the second NM card 5 through the first spring plate 11a, the second spring plate 11b, the third spring plate 11c to the sixth spring plate 11f, the ninth spring plate 11i, and the tenth spring plate 11j of the card connector 11, the processor 20 of the electronic device 100 transmits the first power signal (VDD 1) and the ground signal (VSS) to the second NM card 5 through the eighth spring plate 11h and the seventh spring plate 11g of the card connector 11, and the second NM card 5 communicates with the electronic device 100. Therefore, the electronic device 100 is compatible with the nano-SIM card 3 and the second NM card 5.

It may be understood that, when the third gold finger 523 of the second NM card 5 is configured to transmit a detection signal (C/D), the interface controller 201 is adaptively adjusted. The interface controller 201 is further configured to connect a detection interface (C/D) of the second memory card controller 2022 and the third spring plate 11c when the second NM card 5 is inserted into the electronic device 100.

In some other embodiments, when the third gold finger 523 of the second NM card 5 is configured to transmit a clock signal (for example, CLK-), and the fourth gold finger 524 is suspended, the interface controller 201 is adaptively adjusted, and the interface controller 201 is further configured to connect the clock interface (for example, CLK-) of the second memory card controller 2022 and the third spring plate 11c when the second NM card 5 is inserted into the electronic device 100.

In some other embodiments, the programming voltage/input signal (VPP) may not be supported, to reduce the design difficulty of the processor 20. In this case, the SIM card controller 203 may not include the programming voltage/input interface (VPP), the interface controller 201 may not include the second switch 2012, and another clock interface (for example, CLK+) of the second memory card controller 2022 is electrically connected to the fifth spring plate 11e of the card connector 11 through the interface controller 201. For other solution content, refer to the foregoing embodiments. Details are not described herein again.

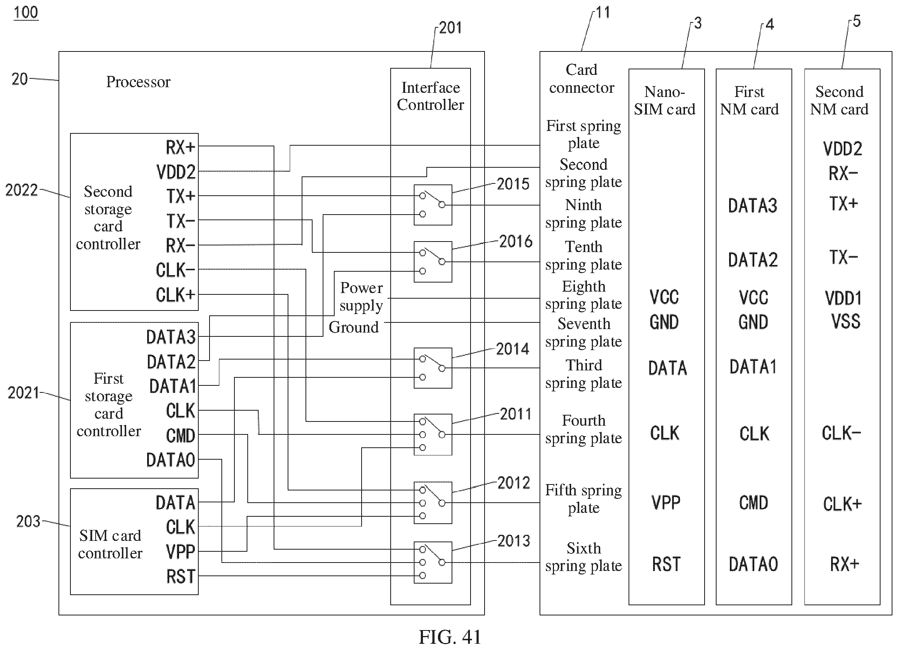

FIG. 41 is a schematic of a partial circuit of the electronic device 100 shown in FIG. 1 in some other embodiments.

In some embodiments, a card holder assembly 10 of the electronic device 100 is compatible with a nano-SIM card 3, a first NM card 4, and a second NM card 5, and a signal arrangement of a card interface 52 of the second NM card 5 is shown in FIG. 39. A processor 20 of the electronic device 100 includes an interface controller 201, a SIM card controller 203, a first memory card controller 2021, and a second memory card controller 2022. The SIM card controller 203, the first memory card controller 2021, and the second memory card controller 2022 are electrically connected to the interface controller 201. The interface controller 201 is electrically connected to a first spring plate 11a to a tenth spring plate 11j of a card connector 11 of the card holder assembly 10.

For the SIM card controller 203 and the second memory card controller 2022, refer to related descriptions in the embodiment corresponding to FIG. 40. Details are not described herein again. The first memory card controller 2021 includes four data interfaces, a clock interface, and a command and response interface. The four data interfaces are configured to transmit data signals (DATA 0, DATA 1, DATA 2, and DATA 3), the clock interface is configured to transmit a clock signal (CLK), and the command and response interface is configured to transmit a command and response signal (CMD). In FIG. 41 and related descriptions of subsequent accompanying drawings and content of embodiments, a plurality of interfaces of the first memory card controller 2021 are marked and illustrated by using signals transmitted through the plurality of interfaces. After a power interface and a ground interface are split, the power interface and the ground interface may alternatively be integrated into the first memory card controller 2021.

For example, the interface controller 201 is configured to: connect the SIM card controller 203 and the card connector 11, or connect the first memory card controller 2021 and the card connector 11, or connect the second memory card controller 2022 and the card connector 11. The interface controller 201 may include a plurality of switches and a conducting wire.

In some embodiments, the interface controller 201 includes a first switch 2011, a second switch 2012, a third switch 2013, a fourth switch 2014, a fifth switch 2015, and a sixth switch 2016.

The first switch 2011 is connected to the clock interface (CLK) of the first memory card controller 2021, a clock interface (CLK) of the SIM card controller 203, and a clock interface (for example, CLK-) of the second memory card controller 2022. The fourth switch 2014 is further connected to a fourth spring plate 11d of the card connector 11. The fourth switch 2014 is configured to: connect a third spring plate 11c and the clock interface (CLK) of the first memory card controller 2021, or connect the fourth spring plate 11d and the clock interface (CLK) of the SIM card controller 203, or connect the fourth spring plate 11d and the clock interface (for example, CLK-) of the second memory card controller 2022.

The second switch 2012 is connected to another clock interface (CLK+) of the second memory card controller 2022, the command and response interface (CMD) of the first memory card controller 2021, and a programming voltage/input interface (VPP) of the SIM card controller 203, the second switch 2012 is further connected to a fifth spring plate 11e of the card connector 11, and the second switch 2012 is configured to connect the fifth spring plate 11e and the clock interface (CLK+) of the second memory card controller 2022, or connect the fifth spring plate 11e and the command and response interface (CMD) of the first memory card controller 2021, or connect the fifth spring plate 11e and a programming voltage/input interface (VPP) of the SIM card controller 203.

The third switch 2013 is connected to a data interface (for example, RX+) of the second memory card controller 2022, another data interface (for example, DATA 0) of the first memory card controller 2021, and a reset interface (RST) of the SIM card controller 203, the third switch 2013 is further connected to a sixth spring plate 11f of the card connector 11, and the third switch 2013 is configured to: connect the sixth spring plate 11f and the data interface (for example, RX+) of the second memory card controller 2022, or connect the sixth spring plate 11f and the data interface (for example, DATA 0) of the first memory card controller 2021, or connect the sixth spring plate 11f and the reset interface (RST) of the SIM card controller 203.

The fourth switch 2014 is connected to a data interface (for example, DATA 1) of the first memory card controller 2021 and a data interface (DATA) of the SIM card controller 203, the first switch 2011 is further connected to a third spring plate 11c of the card connector 11, and the first switch 2011 is configured to connect the third spring plate 11c and the data interface (for example, DATA 1) of the first memory card controller 2021, or connect the third spring plate 11c and the data interface (DATA) of the SIM card controller 203.

The fifth switch 2015 is connected to another data interface (for example, TX+) of the second memory card controller 2022 and another data interface (for example, DATA 3) of the first memory card controller 2021, the fifth switch 2015 is further connected to a ninth spring plate 11i of the card connector 11, and the fifth switch 2015 is configured to: connect the ninth spring plate 11i and the data interface (for example, TX+) of the second memory card controller 2022, or connect the ninth spring plate 11i and the data interface (for example, DATA 3) of the first memory card controller 2021.

The sixth switch 2016 is connected to another data interface (for example, TX-) of the second memory card controller 2022 and another data interface (for example, DATA 2) of the first memory card controller 2021, the sixth switch 2016 is further connected to the tenth spring plate 11j of the card connector 11, and the sixth switch 2016 is configured to: connect the tenth spring plate 11j and the data interface (for example, TX-) of the second memory card controller 2022, or connect the tenth spring plate 11j and the data interface (for example, DATA 2) of the first memory card controller 2021.

The second power interface (VDD 2) of the second memory card controller 2022 is electrically connected to a first spring plate 11a of the card connector 11 by using the interface controller 201. Another data interface (for example, RX-) of the second memory card controller 2022 is electrically connected to a second spring plate 11b of the card connector 11 by using the interface controller 201. The power interface of the processor 20 is electrically connected to an eighth spring plate 11h of the card connector 11 by using the interface controller 201. The ground interface of the processor 20 is electrically connected to a seventh spring plate 11g of the card connector 11 by using the interface controller 201. Between the second power interface (VDD 2) of the second memory card controller 2022 and the first spring plate 11a, between the data interface (for example, RX-) of the second memory card controller 2022 and the second spring plate 11b, between the power interface of the processor 20 and the eighth spring plate 11h, and between the ground interface and the seventh spring plate 11g, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector 11, the interface controller 201 connects the SIM card controller 203 and the card connector 11, the SIM card controller 203 transmits the data signal (DATA), the clock signal (CLK), the transmission programming voltage/input signal (VPP), and the reset signal (RST) to the nano-SIM card 3 through the third spring plate 11c and the sixth spring plate 11f of the card connector 11, the processor 20 of the electronic device 100 transmits the power signal (VCC) and the ground signal (GND) to the nano-SIM card 3 through the eighth spring plate 11h and the seventh spring plate 11g of the card connector 11, and the nano-SIM card 3 communicates with the electronic device 100.

When the first NM card 4 is inserted into the card holder assembly 10 of the electronic device 100 and the first NM card 4 is electrically connected to the card connector 11, the interface controller 201 connects the first memory card controller 2021 and the card connector 11, the first memory card controller 2021 transmits the data signals (DATA 0, DATA 1, DATA 2, and DATA 3), the clock signal (CLK), and the command and response signal (CMD) to the first NM card 4 through the third spring plate 11c to the sixth spring plate 11f, the ninth spring plate 11i, and the tenth spring plate 11j of the card connector 11, the processor 20 of the electronic device 100 transmits the power signal (VCC) and the ground signal (GND) to the first NM card 4 through the eighth spring plate 11h and the seventh spring plate 11g of the card connector 11, and the first NM card 4 communicates with the electronic device 100.

When the second NM card 5 is inserted into the card holder assembly 10 of the electronic device 100 and the second NM card 5 is electrically connected to the card connector 11, the interface controller 201 connects the second memory card controller 2022 and the card connector 11, the second memory card controller 2022 transmits the data signals (RX+, RX-, TX+, and TX-), clock signals (CLK+ and CLK-), and the second power signal (VDD 2) to the second NM card 5 through the first spring plate 11a to the third spring plate 11c, the fifth spring plate 11e, the sixth spring plate 11f, the ninth spring plate 11i, and the tenth spring plate 11j of the card connector 11, the processor 20 of the electronic device 100 transmits the first power signal (VDD 1) and the ground signal (VSS) to the second NM card 5 through the eighth spring plate 11h and the seventh spring plate 11g of the card connector 11, and the second NM card 5 communicates with the electronic device 100. Therefore, the electronic device 100 is compatible with the nano-SIM card 3 and the second NM card 5.

It may be understood that, when the third gold finger 523 of the second NM card 5 is configured to transmit a detection signal (C/D), the interface controller 201 is adaptively adjusted. The interface controller 201 is further configured to connect a detection interface (C/D) of the second memory card controller 2022 and the third spring plate 11c when the second NM card 5 is inserted into the electronic device 100.

In some other embodiments, when the third gold finger 523 of the second NM card 5 is configured to transmit a clock signal (for example, CLK-), and the fourth gold finger 524 is suspended, the interface controller 201 is adaptively adjusted, and the interface controller 201 is further configured to connect the clock interface (for example, CLK-) of the second memory card controller 2022 and the third spring plate 11c when the second NM card 5 is inserted into the electronic device 100.

In some other embodiments, the programming voltage/input signal (VPP) may not be supported, to reduce the design difficulty of the processor 20. In this case, the SIM card controller 203 may not include the programming voltage/input interface (VPP). The second switch 2012 is connected to a clock interface (CLK+) of the second memory card controller 2022 and the command and response interface (CMD) of the first memory card controller 2021. The second switch 2012 is further connected to the fifth spring plate 11e of the card connector 11. For other solution content, refer to the foregoing embodiments. Details are not described herein again.

The following uses an example to describe a fourth signal arrangement manner of a second NM card 5 for which a PCIe interface protocol is used.

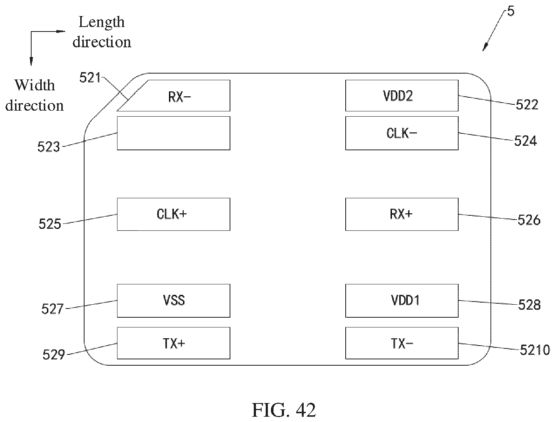

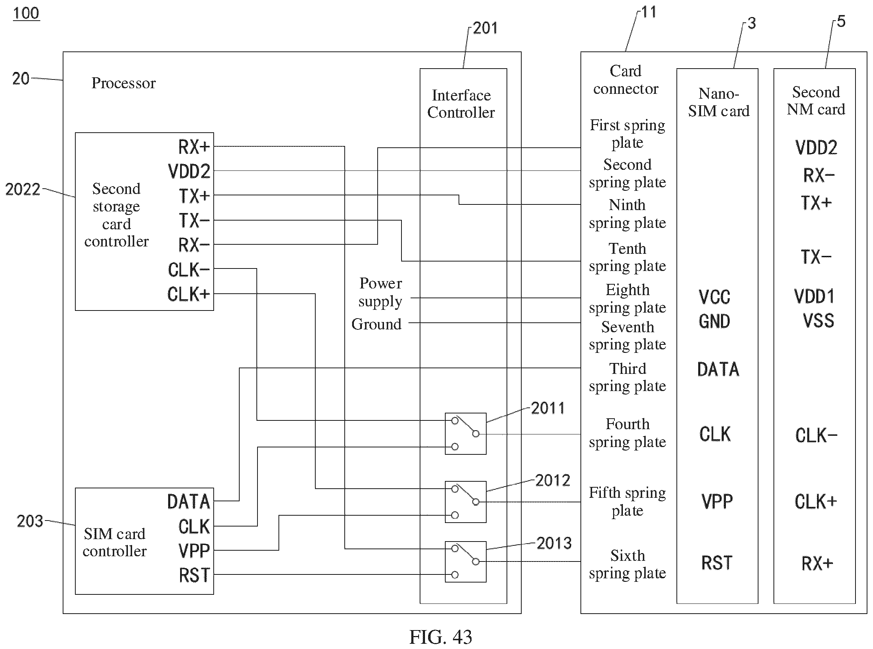

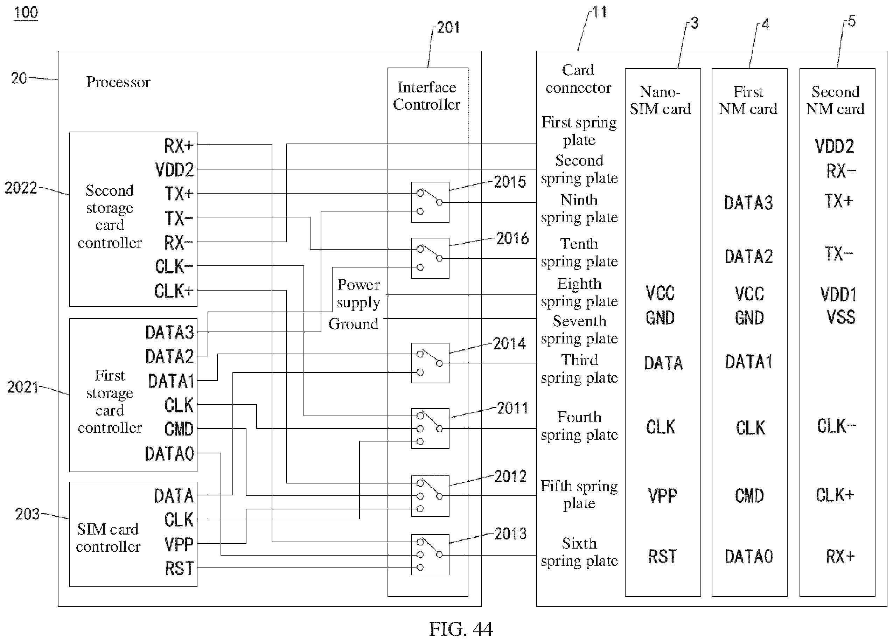

Refer to FIG. 42 to FIG. 44 together. FIG. 42 is a diagram of the second NM card 5 shown in FIG. 17 in some other embodiments. FIG. 43 is a schematic of a partial circuit of the electronic device 100 shown in FIG. 1 in some other embodiments. FIG. 44 is a schematic of a partial circuit of the electronic device 100 shown in FIG. 1 in some other embodiments.

A main difference between the second NM card 5 shown in FIG. 42 and the second NM card 5 shown in FIG. 39 lies in that a first gold finger 521 of the second NM card 5 is configured to transmit a data signal (for example, RX-), and a second gold finger 522 is configured to transmit a second power signal (VDD 2). In other words, signals transmitted through the first gold finger 521 and the second gold finger 522 of the second NM card 5 shown in FIG. 42 and signals transmitted through the first gold finger 521 and the second gold finger 522 of the second NM card 5 shown in FIG. 39 may be exchanged. Data signals transmitted through the first gold finger 521, a sixth gold finger 526, a ninth gold finger 529, and a tenth gold finger 5210 can be exchanged. For other solution content of the second NM card 5 shown in FIG. 42, refer to related descriptions of the second NM card 5 shown in FIG. 39. Details are not described herein again.

A main difference between the electronic device 100 shown in FIG. 43 and the electronic device 100 shown in FIG. 40 lies in that one data interface (for example, RX-) is electrically connected to a first spring plate 11a of a card connector 11, and a second power interface (VDD 2) of a second memory card controller 2022 is electrically connected to a second spring plate 11b of the card connector 11. For other solution content of the electronic device 100 shown in FIG. 43, refer to related descriptions of the electronic device 100 shown in FIG. 40. Details are not described herein again.

A main difference between the electronic device 100 shown in FIG. 44 and the electronic device 100 shown in FIG. 41 lies in that a data interface (for example, RX-) is electrically connected to the first spring plate 11a of the card connector 11, and the second power interface (VDD 2) of the second memory card controller 2022 is electrically connected to the second spring plate 11b of the card connector 11. For other solution content of the electronic device 100 shown in FIG. 44, refer to related descriptions of the electronic device 100 shown in FIG. 41. Details are not described herein again.

In some other embodiments, an SD interface protocol may alternatively be used for the second NM card 5. A difference between the second NM card 5 for which the SD interface protocol is used and a second NM card 5 for which a PCIe interface protocol is used lies in that data signals transmitted through the second NM card 5 is DO+, DO-, D1+, and D1-. For other solution content of the second NM card 5 for which the SD interface protocol is used, refer to related descriptions of the second NM card 5 for which the PCIe interface protocol is used. Details are not described herein again. In addition, an electronic device 100 that is compatible with the second NM card 5 for which the PCIe interface protocol is used can also support the second NM card 5 for which the SD interface protocol is used. A data interface of the second memory card controller 2022 adaptively changes.

This application further provides a second NM card including at least eight gold fingers, and a UFS protocol may be used for the second NM card. For related descriptions of the UFS protocol, refer to the foregoing embodiments. Details are not described herein again. A structure of a card interface of the second NM card may be the same as or similar to a structure of a card interface 42 of a first NM card 4, and the second NM card may be connected to a card connector (for example, the card connector 11 shown in FIG. 5) into which the first NM card 4 can be inserted. The following provides an example for description.

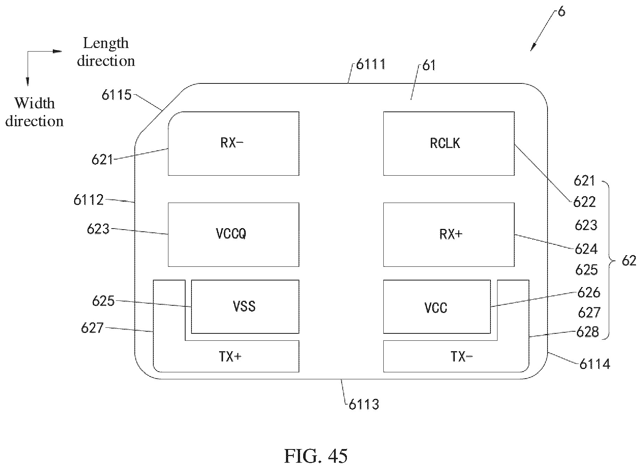

FIG. 45 is a diagram of a structure of a second NM card in another embodiment according to an embodiment of this application.

A second NM card 6 in this embodiment may include most technical features of the second NM card 5 shown in FIG. 17 and other accompanying drawings. The following mainly describes a difference between the second NM card 6 and the second NM card 5.

In some embodiments, a card body 61 of the second NM card 6 includes a first edge 6111, a second edge 6112, a third edge 6113, and a fourth edge 6114. The first edge 6111 and the third edge 6113 are disposed opposite to each other and extend in a length direction of the second NM card 6, and the second edge 6112 and the fourth edge 6114 are disposed opposite to each other and extend in a width direction of the second NM card 6. A spacing between the second edge 6112 and the fourth edge 6114 is greater than a spacing between the first edge 6111 and the third edge 6113. In other words, the first edge 6111 and the third edge 6113 are long edges, and the second edge 6112 and the fourth edge 6114 are short edges. The first edge 6111 and the third edge 6113 may be disposed in parallel or approximately in parallel, and the second edge 6112 and the fourth edge 6114 may be disposed in parallel or approximately in parallel.

A corner of the card body 61 of the second NM card 6 is a beveled edge, and the beveled edge is disposed between the first edge 6111 and the second edge 6112. The beveled edge forms a cut edge 6115, an obtuse angle is formed between the cut edge 6115 and the first edge 6111, and an obtuse angle is formed between the cut edge 6115 and the second edge 6112. An arc transition structure or a chamfered transition structure may be disposed between adjacent edges (including the first edge 6111, the second edge 6112, the third edge 6113, the fourth edge 6114, and the cut edge 6115) of the card body 61. In some other embodiments, the card body 61 of the second NM card 6 may not be provided with the beveled edge. This is not strictly limited in this application.

For example, a card interface 62 of the second NM card 6 includes at least eight gold fingers, for example, includes a first gold finger 621 to an eighth gold finger 628. The first gold finger 621 to the eighth gold finger 628 are arranged in an array, the first gold finger 621 to the eighth gold finger 628 are arranged in a first column of gold fingers and a second column of gold fingers in the length direction of the second NM card 6, the first column of gold fingers includes the first gold finger 621, a third gold finger 623, a fifth gold finger 625, and a seventh gold finger 627 that are arranged in the width direction of the second NM card 6, and the second column of gold fingers includes a second gold finger 622, a fourth gold finger 624, a sixth gold finger 626, and the eighth gold finger 628 that are arranged in the width direction of the second NM card 6. The four gold fingers of the first column of gold fingers (621, 623, 625, and 627) are disposed in a one-to-one correspondence with the four gold fingers of the second column of gold fingers (622, 624, 626, and 628), and every two are arranged in a row. In other words, the gold fingers are arranged in a first row of gold fingers (621 and 622), a second row of gold fingers (623 and 624), a third row of gold fingers (625 and 626), and a fourth row of gold fingers (627 and 628). That is, the first gold finger 621 to the eighth gold finger 628 are arranged in two columns and four rows.

The first column of gold fingers (621, 623, 625, and 627) is located between the second edge 6112 and the second column of gold fingers (622, 624, 626, and 628). In other words, the first column of gold fingers (621, 623, 625, and 627) is arranged close to the second edge 6112, and the second column of gold fingers (622, 624, 626, and 628) is arranged close to the fourth edge 6114.

The first gold finger 621 is located between the first edge 6111 and the third gold finger 623, and the second gold finger 622 is located between the first edge 6111 and the fourth gold finger 614. In other words, the first row of gold fingers (621 and 622) is arranged close to the first edge 6111, and the fourth row of gold fingers (627 and 628) is arranged close to the third edge 6113. In this case, the first gold finger 621 is closer to the cut edge 6115 of the card body 61 than the other gold fingers.

A center spacing between the first row of gold fingers (621 and 622) and the second row of gold fingers (623 and 624) is greater than a center spacing between the third row of gold fingers (625 and 626) and the fourth row of gold fingers (627 and 628), and a center spacing between the second row of gold fingers (623 and 624) and the third row of gold fingers (625 and 626) is greater than the center spacing between the third row of gold fingers (625 and 626) and the fourth row of gold fingers (627 and 628).

For example, the center spacing between the first row of gold fingers (621 and 622) and the second row of gold fingers (623 and 624) and the center spacing between the second row of gold fingers (623 and 624) and the third row of gold fingers (625 and 626) may fall within a range of 1.5 mm to 2.8 mm, and the center spacing between the third row of gold fingers (625 and 626) and the fourth row of gold fingers (627 and 628) may fall within a range of 1.0 mm to 1.7 mm. A dimension of the card body 61 of the second NM card 6 may be the same as a dimension of a card body 31 of a nano-SIM card 3.

In the first gold finger 621 to the eighth gold finger 628 of the second NM card 6, four gold fingers are configured to transmit data signals (RX+, RX-, TX+, and TX-), one gold finger is configured to transmit a reference clock signal (RCLK), one gold finger is configured to transmit a first power signal (VCC), one gold finger is configured to transmit a ground signal (VSS), and one gold finger is configured to transmit a second power signal (VCCQ). In this case, the second NM card 6 can support a UFS protocol, to implement basic performance of a high-speed card. For other solution content of the second NM card 6 in this embodiment, refer to related descriptions of the second NM card 5 shown in FIG. 17 and other accompanying drawings. Details are not described herein again.

In this embodiment, a gold finger arrangement structure of the second NM card 6 is the same as or similar to a gold finger arrangement structure of the first NM card 4. Therefore, the second NM card 6 can implement a structural connection and an electrical connection with the card connector that is compatible with the first NM card 4, so that cabling changes in a circuit of the electronic device 100 can be reduced, and change difficulty and costs can be reduced.

For example, the first gold finger 621, the fourth gold finger 624, the seventh gold finger 627, and the eighth gold finger 628 of the second NM card 6 are configured to transmit the data signals (RX+, RX-, TX+, and TX-). An example in which the first gold finger 621 is configured to transmit the data signal (RX-), the fourth gold finger 624 is configured to transmit the data signal (RX+), the seventh gold finger 627 is configured to transmit the data signal (TX+), and the eighth gold finger 628 is configured to transmit the data signal (TX-) is used for description in the following embodiments. In some other embodiments, the data signals transmitted through the first gold finger 621, the fourth gold finger 624, the seventh gold finger 627, and the eighth gold finger 628 can be exchanged. For example, the data signals transmitted through the first gold finger 621 and the fourth gold finger 624 are exchanged, and the data signals transmitted through the seventh gold finger 627 and the eighth gold finger 628 are exchanged. Details are not described herein in another embodiment. The second gold finger 622 is configured to transmit the reference clock signal (RCLK), the third gold finger 623 is configured to transmit the second power signal (VCCQ), the fifth gold finger 625 is configured to transmit the ground signal (VSS), and the sixth gold finger 626 is configured to transmit the first power signal (VCC).

In some embodiments, Table 8 is Table 1 of a correspondence between a plurality of spring plates of another card connector and each of a plurality of gold fingers of the nano-SIM card 3, a plurality of gold fingers of the first NM card 4, a plurality of gold fingers of the second NM card 6, and transmission signals thereof. When the second NM card 6 is connected to a card connector that is compatible with the first NM card 4 and that has eight spring plates, the eight spring plates of the card connector abut against and are electrically connected to the first gold finger 621 to the eighth gold finger 628 of the second NM card 6 in a one-to-one correspondence, and locations of the first gold finger 621 to the sixth gold finger 626 of the second NM card 6 correspond to locations of a first gold finger 321 to a sixth gold finger 326 of the nano-SIM card 3 in a one-to-one correspondence. Locations of a first spring plate to an eighth spring plate of the card connector having the eight spring plates may correspond to locations of a third spring plate to a tenth spring plate of the card connector shown in FIG. 5 in a one-to-one correspondence. In some embodiments, locations of the first gold finger 621 to the eighth gold finger 628 of the second NM card 6 correspond to locations of a first gold finger 421 to an eighth gold finger 428 of the first NM card 4 in a one-to-one correspondence.

**Table 8**

| Card connector | Nano-SIM card 3 | | First NM card 4 | | Second NM card 6 | |
|---|---|---|---|---|---|---|
| First spring plate | First gold finger 321 | DATA | First gold finger 421 | DATA 1 | First gold finger 621 | RX- |
| Second spring plate | Second gold finger 322 | CLK | Second gold finger 422 | CLK | Second gold finger 622 | RCLK |
| Third spring plate | Third gold finger 323 | VPP | Third gold finger 423 | CMD | Third gold finger 623 | VCCQ |
| Fourth spring plate | Fourth gold finger 324 | RST | Fourth gold finger 424 | DATA 0 | Fourth gold finger 624 | RX+ |
| Fifth spring plate | Fifth gold finger 325 | GND | Fifth gold finger 425 | GND | Fifth gold finger 625 | VSS |
| Sixth spring plate | Sixth gold finger 326 | VCC | Sixth gold finger 426 | VCC | Sixth gold finger 626 | VCC |
| Seventh spring plate | | | Seventh gold finger 427 | DATA 3 | Seventh gold finger 627 | TX+ |
| Eighth spring plate | | | Eighth gold finger 428 | DATA 2 | Eighth gold finger 628 | TX- |

In this embodiment, because a location of the fifth gold finger 625 of the second NM card 6 corresponds to a location of the fifth gold finger 325 of the nano-SIM card 3, corresponds to a location of the fifth gold finger 425 of the first NM card 4, and abuts against and is electrically connected to the seventh spring plate of the card connector when the second NM card 6 is inserted into the electronic device 100, and the fifth gold finger 325 of the second NM card 6, the fifth gold finger 325 of the nano-SIM card 3, and the fifth gold finger 425 of the first NM card 4 are all configured to transmit ground signals (which are respectively VSS/GND/GND), the processor 20 of the electronic device 100 may be electrically connected to the fifth spring plate of the card connector through a same ground interface. Regardless of whether the information inserted into the electronic device 100 is the second NM card 6, the nano-SIM card 3, or the first NM card 4, the processor 20 does not need to switch an interface electrically connected to the fifth spring plate, to simplify a circuit of the processor 20, and reduce design difficulty and costs.

Because a location of the sixth gold finger 626 of the second NM card 6 corresponds to a location of the sixth gold finger 326 of the nano-SIM card 3, corresponds to a location of the sixth gold finger 426 of the first NM card 4, and abuts against and is electrically connected to the sixth spring plate of the card connector when the second NM card 6 is inserted into the electronic device 100, the sixth gold finger 626 of the second NM card 6, the sixth gold finger 326 of the nano-SIM card 3, and the sixth gold finger 426 of the first NM card 4 are all configured to transmit power signals (which are respectively VCC/VCC/VCC), the processor 20 of the electronic device 100 may be electrically connected to the sixth spring plate of the card connector through a same power interface. Regardless of whether the information inserted into the electronic device 100 is the second NM card 6, the nano-SIM card 3, or the first NM card 4, the processor 20 does not need to switch an interface electrically connected to the sixth spring plate, to simplify a circuit of the processor 20, and reduce design difficulty and costs.

A location of the first gold finger 621 of the second NM card 6 corresponds to a location of the first gold finger 321 of the nano-SIM card 3, corresponds to a location of the first gold finger 421 of the first NM card 4, and abuts against and is electrically connected to the first spring plate of the card connector when the second NM card 6 is inserted into the electronic device 100, the first gold finger 621 of the second NM card 6 is configured to transmit a data signal (for example, RX-), the first gold finger 321 of the nano-SIM card 3 is configured to transmit a data signal (DATA), the first gold finger 421 of the first NM card 4 is configured to transmit a data signal (for example, DATA 1), and the second NM card 6, the nano-SIM card 3, and the first NM card 4 may share the first spring plate in a time-division manner.

A location of the second gold finger 622 of the second NM card 6 corresponds to a location of the second gold finger 322 of the nano-SIM card 3, corresponds to a location of the second gold finger 422 of the first NM card 4, and abuts against and is electrically connected to the second spring plate of the card connector when the second NM card 6 is inserted into the electronic device 100, the second gold finger 622 of the second NM card 6 is configured to transmit a reference clock signal (RCLK), the second gold finger 322 of the nano-SIM card 3 is configured to transmit a clock signal (CLK), the second gold finger 422 of the first NM card 4 is configured to transmit a clock signal (CLK), and the second NM card 6, the nano-SIM card 3, and the first NM card 4 may share the second spring plate in a time-division manner.

A location of the third gold finger 623 of the second NM card 6 corresponds to a location of the third gold finger 323 of the nano-SIM card 3, corresponds to a location of the third gold finger 423 of the first NM card 4, and abuts against and is electrically connected to the third spring plate of the card connector when the second NM card 6 is inserted into the electronic device 100, the third gold finger 623 of the second NM card 6 is configured to transmit a second power signal (VCCQ), the third gold finger 323 of the nano-SIM card 3 is configured to transmit a programming voltage/input signal (VPP), the first gold finger 421 of the first NM card 4 is configured to transmit a command and response signal (CMD), and the second NM card 6, the nano-SIM card 3, and the first NM card 4 may share the third spring plate in a time-division manner.

A location of the seventh gold finger 627 of the second NM card 6 corresponds to a location of the seventh gold finger 427 of the first NM card 4, and abuts against and is electrically connected to the seventh spring plate of the card connector when the second NM card 6 is inserted into the electronic device 100, the seventh gold finger 627 of the second NM card 6 is configured to transmit a data signal (for example, TX+), the seventh gold finger 427 of the first NM card 4 is configured to transmit a data signal (for example, DATA 3), and the second NM card 6 and the first NM card 4 may share the seventh spring plate in a time-division manner.

A location of the eighth gold finger 628 of the second NM card 6 corresponds to a location of the eighth gold finger 428 of the first NM card 4, and abuts against and is electrically connected to the eighth spring plate of the card connector when the second NM card 6 is inserted into the electronic device 100, the eighth gold finger 628 of the second NM card 6 is configured to transmit a data signal (for example, TX-), the eighth gold finger 428 of the first NM card 4 is configured to transmit a data signal (for example, DATA 2), and the second NM card 6 and the first NM card 4 may share the eighth spring plate in a time-division manner.

For example, the eighth gold finger 628 of the second NM card 6 may be electrically connected to a high-voltage resistant circuit or a protection switch, to prevent a circuit from being burnt when the card interface 62 of the second NM card 6 is short-circuited. The high-voltage resistant circuit or the protection switch is located in a package 611 of the second NM card 6. In some other embodiments, a high-impedance protection circuit may be provided in the electronic device, to prevent a circuit of the second NM card 6 from being burnt. For example, this can be implemented by adding a protection circuit in an interface controller of the electronic device.

It may be understood that because the third gold finger 623 of the second NM card 6, the third gold finger 323 of the nano-SIM card 3, and the third gold finger 423 of the first NM card 4 share the third spring plate in a time-division manner, and the third spring plate transmits the second power signal (VCCQ) of the second NM card 6 in some use scenarios, the third gold finger 323 of the nano-SIM card 3 and the third gold finger 423 of the first NM card 4 are electrically connected to a high-voltage resistant circuit or a protection switch, to prevent the circuit from being burnt, and improve reliability of the nano-SIM card 3 and the first NM card 4. In some other embodiments, a high-impedance protection circuit may be provided in the electronic device, to prevent a circuit of the nano-SIM card 3 from being burnt. For example, this can be implemented by adding a protection circuit in an interface controller of the electronic device.

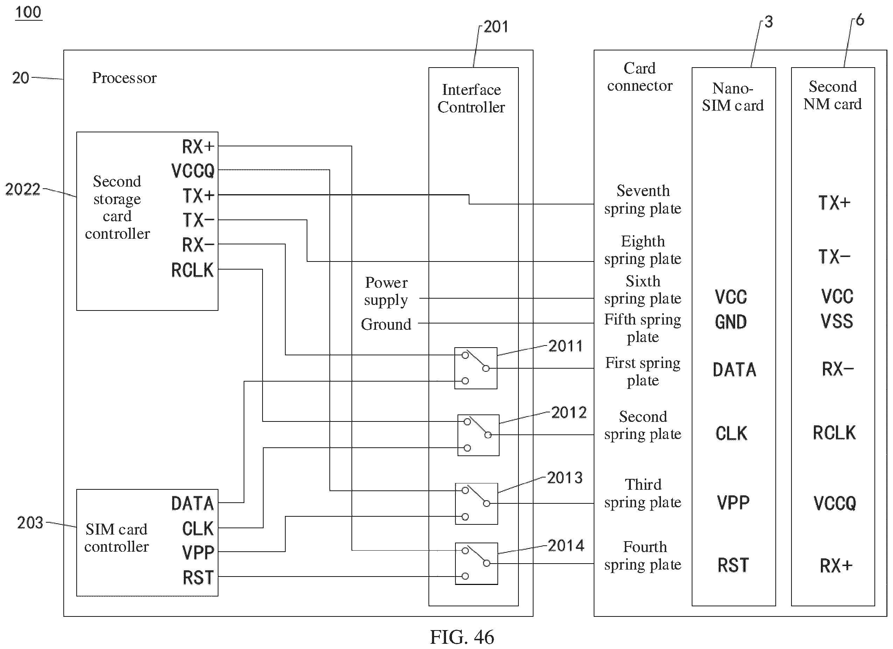

FIG. 46 is a schematic of a partial circuit of an electronic device 100 in some embodiments according to an embodiment of this application. In some embodiments, a card holder assembly 10 of the electronic device 100 is compatible with a nano-SIM card 3 and a second NM card 6, and a signal arrangement of a card interface 62 of the second NM card 6 is shown in FIG. 45. A processor 20 of the electronic device 100 includes an interface controller 201, a SIM card controller 203, and a second memory card controller 2022. The SIM card controller 203 and the second memory card controller 2022 are electrically connected to the interface controller 201. The interface controller 201 is electrically connected to a first spring plate to an eighth spring plate of a card connector of the card holder assembly 10.

The SIM card controller 203 includes a data interface, a clock interface, a programming voltage/input interface, and a reset interface. The data interface is configured to transmit a data signal (DATA), the clock interface is configured to transmit a clock signal (CLK), the programming voltage/input interface is configured to transmit a programming voltage/input signal (VPP), and the reset interface is configured to transmit a reset signal (RST). In FIG. 46 and related descriptions of subsequent accompanying drawings and content of embodiments, a plurality of interfaces of the SIM card controller 203 are marked and illustrated by using signals transmitted through the plurality of interfaces.

The second memory card controller 2022 includes four data interfaces, a reference clock interface, and a second power interface. The four data interfaces are configured to transmit data signals (RX+, RX-, TX+, and TX-), the reference clock interface is configured to transmit a reference clock signal (RCLK), and the second power interface is configured to transmit a second power signal (VCCQ). In FIG. 46 and related descriptions of subsequent accompanying drawings and content of embodiments, a plurality of interfaces of the second memory card controller 2022 are marked and illustrated by using signals transmitted through the plurality of interfaces. In some other embodiments, the second power interface may alternatively be independent of the second memory card controller 2022. This is not strictly limited in embodiments of this application.

The processor 20 further includes a power interface and a ground interface, the power interface is configured to transmit a power signal (VCC) or a first power signal (VCC), and the ground interface is configured to transmit a ground signal (GND) or a ground signal (VSS). The power interface and the ground interface may be independent of the SIM card controller 203 and the second memory card controller 2022, or may be separately split and integrated into the SIM card controller 203 and the second memory card controller 2022. This is not strictly limited in embodiments of this application. In FIG. 46 and subsequent accompanying drawings, that the power interface and the ground interface are independent of the SIM card controller 203 and the second memory card controller 2022 is used as an example for illustration, and the power interface and the ground interface are respectively identified as a power supply and a ground.

For example, the interface controller 201 is configured to: connect the SIM card controller 203 and the card connector, or connect the second memory card controller 2022 and the card connector. The interface controller 201 may include a plurality of switches and a conducting wire.

In some embodiments, the interface controller 201 includes a first switch 2011, a second switch 2012, a third switch 2013, and a fourth switch 2014.

The first switch 2011 is connected to a data interface (for example, RX-) of the second memory card controller 2022 and a data interface (DATA) of the SIM card controller 203, the first switch 2011 is further connected to a first spring plate of the card connector, and the first switch 2011 is configured to connect the first spring plate and the data interface (for example, RX-) of the second memory card controller 2022, or connect the first spring plate and the data interface (DATA) of the SIM card controller 203.

The second switch 2012 is connected to the reference clock interface (RCLK) of the second memory card controller 2022 and the clock interface (CLK) of the SIM card controller 203, the second switch 2012 is further connected to a second spring plate of the card connector, and the second switch 2012 is configured to: connect the second spring plate and the reference clock interface (RCLK) of the second memory card controller 2022, or connect the second spring plate and the clock interface (CLK) of the SIM card controller 203.

The third switch 2013 is connected to the second power interface (VCCQ) of the second memory card controller 2022 and the programming voltage/input interface (VPP) of the SIM card controller 203, the third switch 2013 is further connected to a third spring plate of the card connector, and the third switch 2013 is configured to: connect the third spring plate and the second power interface (VCCQ) of the second memory card controller 2022, or connect the third spring plate and the programming voltage/input interface (VPP) of the SIM card controller 203.

The fourth switch 2014 is connected to another data interface (for example, RX+) of the second memory card controller 2022 and a reset interface (RST) of the SIM card controller 203, the fourth switch 2014 is further connected to a fourth spring plate of the card connector, and the fourth switch 2014 is configured to: connect the fourth spring plate and the data interface (for example, RX+) of the second memory card controller 2022, or connect the fourth spring plate and the reset interface (RST) of the SIM card controller 203.

Another data interface (for example, TX+) of the second memory card controller 2022 is electrically connected to a ninth spring plate of the card connector by using the interface controller 201. Another data interface (for example, TX-) of the second memory card controller 2022 is electrically connected to the tenth spring plate of the card connector by using the interface controller 201. The power interface of the processor 20 is electrically connected to an eighth spring plate of the card connector by using the interface controller 201. The ground interface of the processor 20 is electrically connected to a seventh spring plate of the card connector by using the interface controller 201. Between the data interface (for example, TX+) of the second memory card controller 2022 and the ninth spring plate, between the data interface (for example, TX-) of the second memory card controller 2022 and the tenth spring plate, between the power interface of the processor 20 and the eighth spring plate, and between the ground interface and the seventh spring plate, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector, the interface controller 201 connects the SIM card controller 203 and the card connector, the SIM card controller 203 transmits the data signal (DATA), the clock signal (CLK), the transmission programming voltage/input signal (VPP), and the reset signal (RST) to the nano-SIM card 3 through the first spring plate to the fourth spring plate of the card connector, the processor 20 of the electronic device 100 transmits the power signal (VCC) and the ground signal (GND) to the nano-SIM card 3 through the sixth spring plate and the fifth spring plate of the card connector, and the nano-SIM card 3 communicates with the electronic device 100.

When the second NM card 6 is inserted into the card holder assembly 10 of the electronic device 100 and the second NM card 6 is electrically connected to the card connector, the interface controller 201 connects the second memory card controller 2022 and the card connector, the second memory card controller 2022 transmits the data signals (RX+, RX-, TX+, and TX-), the reference clock signal (RCLK), and the second power signal (VCCQ) to the second NM card 6 through the first spring plate to the fourth spring plate, the seventh spring plate, and the eighth spring plate of the card connector, the processor 20 of the electronic device 100 transmits the first power signal (VCC) and the ground signal (VSS) to the second NM card 6 through the sixth spring plate and the fifth spring plate of the card connector, and the second NM card 6 communicates with the electronic device 100. Therefore, the electronic device 100 is compatible with the nano-SIM card 3 and the second NM card 6.

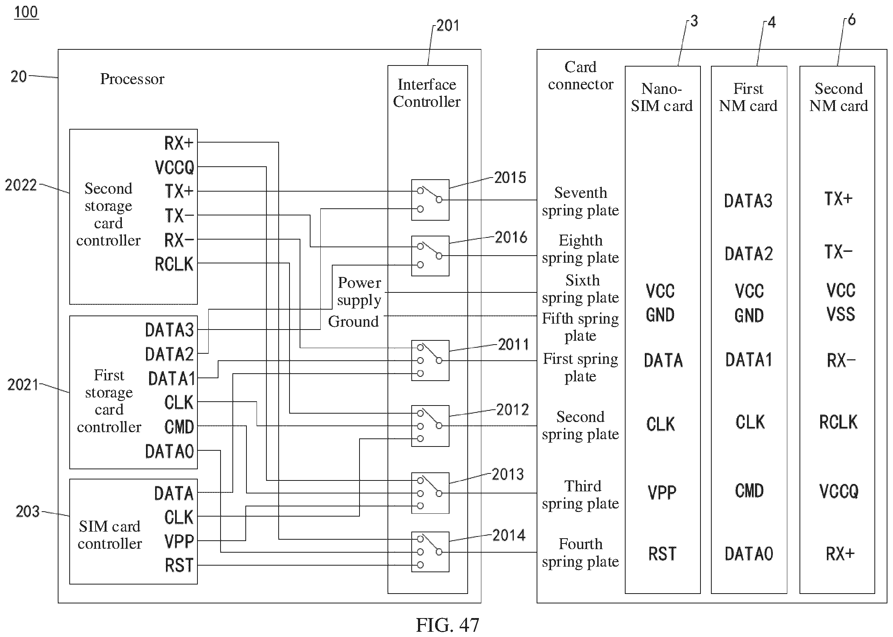

FIG. 47 is a schematic of a partial circuit of an electronic device 100 in some embodiments according to an embodiment of this application.

In some embodiments, a card holder assembly 10 of the electronic device 100 is compatible with a nano-SIM card 3, a first NM card 4, and a second NM card 6, and a signal arrangement of a card interface 62 of the second NM card 6 is shown in FIG. 45. A processor 20 of the electronic device 100 includes an interface controller 201, a SIM card controller 203, and a second memory card controller 2022. The SIM card controller 203 and the second memory card controller 2022 are electrically connected to the interface controller 201. The interface controller 201 is electrically connected to a first spring plate to an eighth spring plate of a card connector of the card holder assembly 10.

For the SIM card controller 203 and the second memory card controller 2022, refer to related descriptions in the embodiment corresponding to FIG. 46. Details are not described herein again. The first memory card controller 2021 includes four data interfaces, a clock interface, and a command and response interface. The four data interfaces are configured to transmit data signals (DATA 0, DATA 1, DATA 2, and DATA 3), the clock interface is configured to transmit a clock signal (CLK), and the command and response interface is configured to transmit a command and response signal (CMD). In FIG. 47 and related descriptions of subsequent accompanying drawings and content of embodiments, a plurality of interfaces of the first memory card controller 2021 are marked and illustrated by using signals transmitted through the plurality of interfaces. After a power interface and a ground interface are split, the power interface and the ground interface may alternatively be integrated into the first memory card controller 2021.

For example, the interface controller 201 is configured to: connect the SIM card controller 203 and the card connector, or connect the first memory card controller 2021 and the card connector, or connect the second memory card controller 2022 and the card connector. The interface controller 201 may include a plurality of switches and a conducting wire.

In some embodiments, the interface controller 201 includes a first switch 2011, a second switch 2012, a third switch 2013, a fourth switch 2014, a fifth switch 2015, and a sixth switch 2016.

The first switch 2011 is connected to a data interface (for example, RX-) of the second memory card controller 2022, a data interface (for example, DATA 1) of the first memory card controller 2021, and a data interface (DATA) of the SIM card controller 203, the first switch 2011 is further connected to a first spring plate of the card connector, and the first switch 2011 is configured to: connect the first spring plate and the data interface (for example, RX-) of the second memory card controller 2022, or connect the first spring plate and the data interface (for example, DATA 1) of the first memory card controller 2021, or connect the first spring plate and the data interface (DATA) of the SIM card controller 203.

The second switch 2012 is connected to a reference clock interface (RCLK) of the second memory card controller 2022, the clock interface (CLK) of the first memory card controller 2021, and a clock interface (CLK) of the SIM card controller 203, the second switch 2012 is further connected to a second spring plate of the card connector, and the second switch 2012 is configured to: connect the second spring plate and the reference clock interface (RCLK) of the second memory card controller 2022, or connect the second spring plate and the clock interface (CLK) of the first memory card controller 2021, or connect the second spring plate and the clock interface (CLK) of the SIM card controller 203.

The third switch 2013 is connected to a second power interface (VCCQ) of the second memory card controller 2022, the command and response interface (CMD) of the first memory card controller 2021, and a programming voltage/input interface (VPP) of the SIM card controller 203, the third switch 2013 is further connected to a third spring plate of the card connector, and the third switch 2013 is configured to: connect the third spring plate and the second power interface (VCCQ) of the second memory card controller 2022, connect the third spring plate and the command and response interface (CMD) of the first memory card controller 2021, or connect the third spring plate and the programming voltage/input interface (VPP) of the SIM card controller 203.

The fourth switch 2014 is connected to another data interface (for example, RX+) of the second memory card controller 2022, another data interface (for example, DATA 0) of the first memory card controller 2021, and a reset interface (RST) of the SIM card controller 203, the fourth switch 2014 is further connected to a fourth spring plate of the card connector, and the fourth switch 2014 is configured to: connect the fourth spring plate and the data interface (for example, RX+) of the second memory card controller 2022, or connect the fourth spring plate and the data interface (for example, DATA 0) of the first memory card controller 2021, or connect the fourth spring plate and the reset interface (RST) of the SIM card controller 203.

The fifth switch 2015 is connected to another data interface (for example, TX+) of the second memory card controller 2022 and another data interface (for example, DATA 3) of the first memory card controller 2021, the fifth switch 2015 is further connected to a seventh spring plate of the card connector, and the fifth switch 2015 is configured to: connect the seventh spring plate and the data interface (for example, TX+) of the second memory card controller 2022, or connect the seventh spring plate and the data interface (for example, DATA 3) of the first memory card controller 2021.

The sixth switch 2016 is connected to another data interface (for example, TX-) of the second memory card controller 2022 and another data interface (for example, DATA 2) of the first memory card controller 2021, the sixth switch 2016 is further connected to the eighth spring plate of the card connector, and the sixth switch 2016 is configured to: connect the eighth spring plate and the data interface (for example, TX-) of the second memory card controller 2022, or connect the eighth spring plate and the data interface (for example, DATA 2) of the first memory card controller 2021.

The power interface of the processor 20 is electrically connected to a sixth spring plate of the card connector by using the interface controller 201. The ground interface of the processor 20 is electrically connected to a fifth spring plate of the card connector by using the interface controller 201. Between the power interface of the processor 20 and the sixth spring plate, and between the ground interface and the fifth spring plate, the interface controller 201 may be connected by setting a conducting wire, to keep a connected state. Switches of the interface controller 201 may alternatively be connected in series, to implement switching between a connected state and a disconnected state by using the switch. This is not strictly limited in embodiments of this application.

In this embodiment, when the nano-SIM card 3 is inserted into the card holder assembly 10 of the electronic device 100 and the nano-SIM card 3 is electrically connected to the card connector, the interface controller 201 connects the SIM card controller 203 and the card connector, the SIM card controller 203 transmits the data signal (DATA), the clock signal (CLK), the transmission programming voltage/input signal (VPP), and the reset signal (RST) to the nano-SIM card 3 through the first spring plate to the fourth spring plate of the card connector, the processor 20 of the electronic device 100 transmits the power signal (VCC) and the ground signal (GND) to the nano-SIM card 3 through the sixth spring plate and the fifth spring plate of the card connector, and the nano-SIM card 3 communicates with the electronic device 100.

When the first NM card 4 is inserted into the card holder assembly 10 of the electronic device 100 and the first NM card 4 is electrically connected to the card connector, the interface controller 201 connects the first memory card controller 2021 and the card connector, the first memory card controller 2021 transmits the data signals (DATA 0, DATA 1, DATA 2, and DATA 3), the clock signal (CLK), and the command and response signal (CMD) to the first NM card 4 through the first spring plate to the fourth spring plate, the seventh spring plate, and the eighth spring plate of the card connector, the processor 20 of the electronic device 100 transmits the power signal (VCC) and the ground signal (GND) to the first NM card 4 through the sixth spring plate and the fifth spring plate of the card connector, and the first NM card 4 communicates with the electronic device 100.

When the second NM card 6 is inserted into the card holder assembly 10 of the electronic device 100 and the second NM card 6 is electrically connected to the card connector, the interface controller 201 connects the second memory card controller 2022 and the card connector, the second memory card controller 2022 transmits the data signals (RX+, RX-, TX+, and TX-), the reference clock signal (RCLK), and the second power signal (VCCQ) to the second NM card 6 through the first spring plate to the fourth spring plate, the seventh spring plate, and the eighth spring plate of the card connector, the processor 20 of the electronic device 100 transmits the first power signal (VCC) and the ground signal (VSS) to the second NM card 6 through the sixth spring plate and the fifth spring plate of the card connector, and the second NM card 6 communicates with the electronic device 100. Therefore, the electronic device 100 is compatible with the nano-SIM card 3 and the second NM card 6.

Based on the descriptions in the foregoing embodiments, in a case of no conflict, in some other embodiments of this application, when the first gold finger, the second gold finger, and the eighth gold finger of the second NM card are used as data interfaces, the first gold finger, the second gold finger, and the eighth gold finger may be electrically connected to a high-voltage resistant circuit or a protection switch, to prevent a circuit from being burnt due to a short circuit of a spring plate when a first spring plate of the card connector outputs a high-voltage data signal of the SIM card controller 203, a second spring plate outputs a high-voltage clock signal of the SIM card controller 203, and a sixth spring plate outputs a high-voltage power signal, to improve reliability of the second NM card. The high-voltage resistant circuit or the protection switch is located in a package of the second NM card.

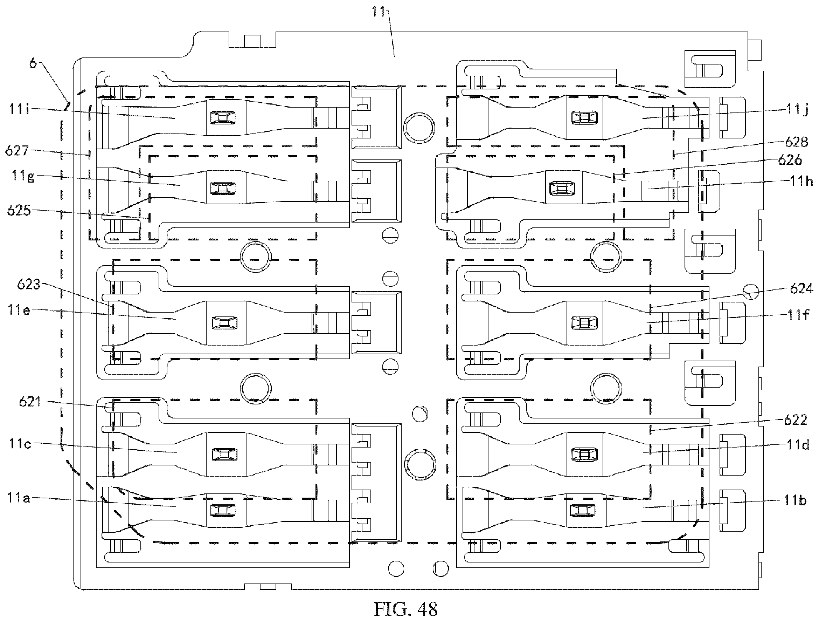

FIG. 48 is a diagram of a connection structure between the second NM card 6 shown in FIG. 45 and the card connector 11 shown in FIG. 5. In some other embodiments, the second NM card 6 may alternatively be inserted into an electronic device 100 having the card connector 11 shown in FIG. 5. When the second NM card 6 is connected to the card connector 11 shown in FIG. 5, 10 spring plates of the card connector 11 abut against the second NM card 6, and a third spring plate 11c to a tenth spring plate 11j of the card connector 11 abut against a first gold finger 621 to an eighth gold finger 628 of the second NM card 6 in a one-to-one correspondence, to be electrically connected to the second NM card 6. A first spring plate 11a of the card connector 11 may abut against the third spring plate 11c and is electrically connected to the first gold finger 621 of the second NM card, and a second spring plate 11b may abut against a fourth spring plate 11d and is electrically connected to a second gold finger 622 of the second NM card 6; or a first row of spring plates (11a and 11b) abuts against a card body 51 of the second NM card 6.

Table 9 is Table 2 of a correspondence between a plurality of spring plates of the card connector 11 shown in FIG. 5 and each of a plurality of gold fingers of a nano-SIM card 3, a plurality of gold fingers of a first NM card 4, a plurality of gold fingers of a second NM card 6, and transmission signals thereof. When the second NM card 6 is connected to the card connector 11, the third spring plate 11c to the tenth spring plate 11j of the card connector 11 abut against and are electrically connected to the first gold finger 621 to the eighth gold finger 628 of the second NM card 6 in a one-to-one correspondence, and locations of the first gold finger 621 to a sixth gold finger 626 of the second NM card 6 correspond to locations of a first gold finger 321 to a sixth gold finger 326 of the nano-SIM card 3 in a one-to-one correspondence. In some embodiments, locations of the first gold finger 621 to the eighth gold finger 628 of the second NM card 6 correspond to locations of a first gold finger 421 to an eighth gold finger 428 of the first NM card 4 in a one-to-one correspondence.

**Table 9**

| Card connector 11 | Nano-SIM card 3 | | First NM card 4 | | Second NM card 6 | |
|---|---|---|---|---|---|---|
| First spring plate 11a | | | | | | |
| Second spring plate 11b | | | | | | |
| Third spring plate 11c | First gold finger 321 | DATA | First gold finger 421 | DATA 1 | First gold finger 621 | RX- |
| Fourth spring plate 11d | Second gold finger 322 | CLK | Second gold finger 422 | CLK | Second gold finger 622 | RCLK |
| Fifth spring plate 11e | Third gold finger 323 | VPP | Third gold finger 423 | CMD | Third gold finger 623 | VCCQ |
| Sixth spring plate 11f | Fourth gold finger 324 | RST | Fourth gold finger 424 | DATA 0 | Fourth gold finger 624 | RX+ |
| Seventh spring plate 11g | Fifth gold finger 325 | GND | Fifth gold finger 425 | GND | Fifth gold finger 625 | VSS |
| Eighth spring plate 11h | Sixth gold finger 326 | VCC | Sixth gold finger 426 | VCC | Sixth gold finger 626 | VCC |
| Ninth spring plate 11i | | | Seventh gold finger 427 | DATA 3 | Seventh gold finger 627 | TX+ |
| Tenth spring plate 11j | | | Eighth gold finger 428 | DATA 2 | Eighth gold finger 628 | TX- |

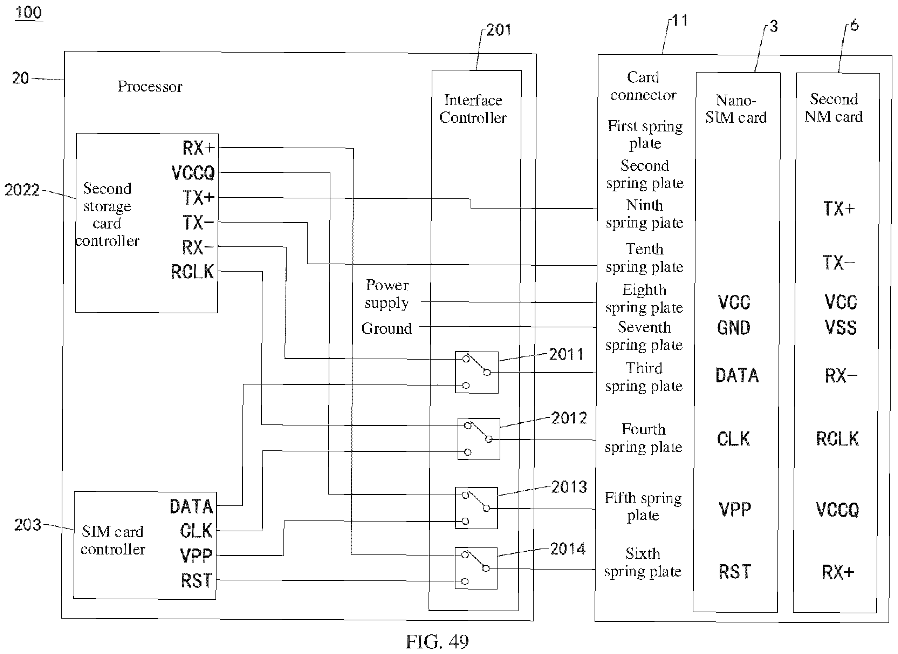

FIG. 49 is a schematic of a partial circuit of the electronic device 100 shown in FIG. 1 in some other embodiments.

In some embodiments, a card holder assembly 10 of the electronic device 100 is compatible with a nano-SIM card 3 and a second NM card 6, and a signal arrangement of a card interface 62 of the second NM card 6 is shown in FIG. 45. A processor 20 of the electronic device 100 includes an interface controller 201, a SIM card controller 203, and a second memory card controller 2022. The SIM card controller 203 and the second memory card controller 2022 are electrically connected to the interface controller 201. The interface controller 201 is electrically connected to a third spring plate 11c to a tenth spring plate 11j of a card connector 11 of the card holder assembly 10.

Most technical features of the embodiment shown in FIG. 46 may be included in this embodiment. A main difference between this embodiment and the embodiment shown in FIG. 46 lies in a connection relationship between the interface controller 201 and the spring plate of the card connector 11. For example, in this embodiment, a first switch 2011 to a fourth switch 2014 are respectively electrically connected to the third spring plate 11c to a sixth spring plate 11f of the card connector 11, a power interface is electrically connected to the eighth spring plate 11h of the card connector 11 by using the interface controller 201, a ground interface is electrically connected to a seventh spring plate 11g of the card connector 11 by using the interface controller 201, and two data interfaces (for example, RX+ and RX-) of the second memory card controller 2022 are respectively electrically connected to a ninth spring plate 11i and the tenth spring plate 11j by using the interface controller 201. For other solution content of the SIM card controller 203, the second memory card controller 2022, the power interface, the ground interface, and the interface controller 201 in this embodiment, refer to related descriptions in the embodiment corresponding to FIG. 46. Details are not described herein again.

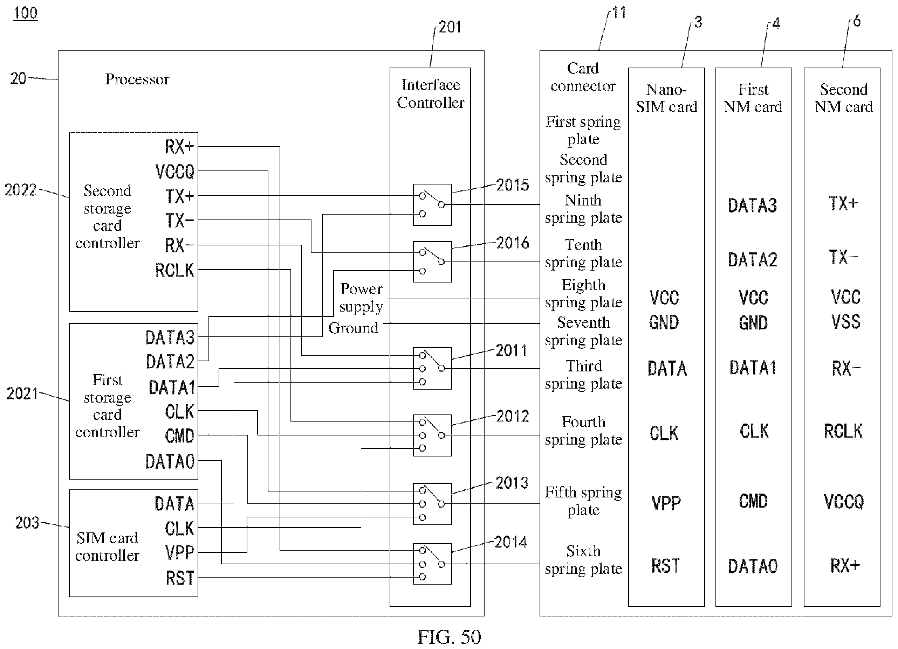

FIG. 50 is a schematic of a partial circuit of the electronic device 100 shown in FIG. 1 in some other embodiments.

In some embodiments, a card holder assembly 10 of the electronic device 100 is compatible with a nano-SIM card 3, a first NM card 4, and a second NM card 6, and a signal arrangement of a card interface 62 of the second NM card 6 is shown in FIG. 45. A processor 20 of the electronic device 100 includes an interface controller 201, a SIM card controller 203, a first memory card controller 2021, and a second memory card controller 2022. The SIM card controller 203, the first memory card controller 2021, and the second memory card controller 2022 are electrically connected to the interface controller 201. The interface controller 201 is electrically connected to a third spring plate 11c to a tenth spring plate 11j of a card connector 11 of the card holder assembly 10.

Most technical features of the embodiment shown in FIG. 47 may be included in this embodiment. A main difference between this embodiment and the embodiment shown in FIG. 46 lies in a connection relationship between the interface controller 201 and the spring plate of the card connector 11. For example, in this embodiment, a first switch 2011 to a fourth switch 2014 are respectively electrically connected to the third spring plate 11c to a sixth spring plate 11f of the card connector 11, a power interface is electrically connected to the eighth spring plate 11h of the card connector 11 by using the interface controller 201, a ground interface is electrically connected to a seventh spring plate 11g of the card connector 11 by using the interface controller 201, and the fifth switch 2015 and the sixth switch 2016 are respectively electrically connected to a ninth spring plate 11i and the tenth spring plate 11j. For other solution content of the SIM card controller 203, the second memory card controller 2022, the power interface, the ground interface, and the interface controller 201 in this embodiment, refer to related descriptions in the embodiment corresponding to FIG. 47. Details are not described herein again.

The electronic device may identify, in an information card identification method, a type of an information card inserted into the electronic device.

In some embodiments, in the information card identification method, whether the information card is a nano-SIM card or a second NM card can be identified. The information card identification method may be applied to an electronic device that is compatible with the nano-SIM card and the second NM card.

An information card identification method includes the following steps.

Step 001: Execute a first initialization procedure.

Step 002: If a first reply instruction is received, determine that an inserted information card is a first card; or if a first reply instruction is not received, determine that an inserted information card is not a first card, and execute a second initialization procedure.

Step 003: If a second reply instruction is received, determine that the inserted information card is a second card; or if a second reply instruction is not received, determine that the inserted information card is not a second card.

In this embodiment, an electronic device executes an initialization procedure of the information card. If a specific reply signal is received, the electronic device can determine whether the information card is an information card corresponding to the initialization procedure; or if no specific reply signal is received, the electronic device determines that the information card is not an information card corresponding to the initialization procedure, and executes a next initialization procedure, to determine whether the information card is an information card corresponding to the next initialization procedure.

In some embodiments, the first initialization procedure may be a SIM card initialization procedure, and the first card is a nano-SIM card; and the second initialization procedure may be a second NM card initialization procedure, and the second card is a second NM card. Alternatively, the first initialization procedure may be a second NM card initialization procedure, and the first card is a second NM card; and the second initialization procedure may be a SIM card initialization procedure, and the second card is a nano-SIM card.

In some embodiments, the SIM card initialization procedure may include: An interface controller is controlled to connect a SIM card controller and a card connector. A third spring plate of the card connector transmits a data signal (DATA), a fourth spring plate transmits a clock signal (CLK), a fifth spring plate transmits a programming voltage/input signal (VPP), a sixth spring plate transmits a reset signal (RST), a seventh spring plate transmits a ground signal (GND), and an eighth spring plate transmits a power signal (VCC).

In some embodiments, the second NM card initialization procedure may include: The interface controller is controlled to connect a second NM card controller and the card connector.

For example, when the information card identification method is applied to an electronic device that is compatible with the second NM card shown in FIG. 24, a first spring plate, the third spring plate, a ninth spring plate, and a tenth spring plate of the card connector transmit data signals (RX+, RX-, TX+, and TX-), a second spring plate transmits a second power signal (VCCQ), the fourth spring plate transmits a reference clock signal (RCLK), the fifth spring plate transmits a detection signal (C/D), the seventh spring plate transmits a ground signal (VSS), and the eighth spring plate transmits a first power signal (VCC). The second NM card controller may send a detection signal (C/D) to the information card through the fifth spring plate of the card connector. If a response signal returned by a correct information card is received, the information card may be identified as the second NM card.

For example, when the information card identification method is applied to an electronic device that is compatible with the second NM card shown in FIG. 27, the first spring plate, the fifth spring plate, the ninth spring plate, and the tenth spring plate of the card connector transmit the data signals (RX+, RX-, TX+, and TX-), the second spring plate transmits the second power signal (VCCQ), the fourth spring plate transmits the reference clock signal (RCLK), the seventh spring plate transmits the ground signal (VSS), and the eighth spring plate transmits the first power signal (VCC). When the third gold finger or the sixth gold finger of the second NM card is configured to transmit the detection signal (C/D), the corresponding third spring plate or sixth spring plate of the card connector is configured to transmit the detection signal (C/D).

For example, when the information card identification method is applied to an electronic device that is compatible with the second NM card shown in FIG. 30, the first spring plate, the fifth spring plate, the ninth spring plate, and the tenth spring plate of the card connector transmit the data signals (RX+, RX-, TX+, and TX-), the second spring plate transmits the second power signal (VCCQ), the sixth spring plate transmits the reference clock signal (RCLK), the seventh spring plate transmits the ground signal (VSS), and the eighth spring plate transmits the first power signal (VCC).

For example, when the information card identification method is applied to an electronic device that is compatible with the second NM card shown in FIG. 33, the third spring plate, the sixth spring plate, the ninth spring plate, and the tenth spring plate of the card connector transmit the data signals (RX+, RX-, TX+, and TX-), the first spring plate transmits the second power signal (VDD 2), the second spring plate and the fifth spring plate transmit clock signals (CLK+ and CLK-), the seventh spring plate transmits the ground signal (VSS), and the eighth spring plate transmits the first power signal (VDD 1).

For example, when the information card identification method is applied to an electronic device that is compatible with the second NM card shown in FIG. 36, the third spring plate, the sixth spring plate, the ninth spring plate, and the tenth spring plate of the card connector transmit the data signals (RX+, RX-, TX+, and TX-), the first spring plate and the fifth spring plate transmit the clock signals (CLK+ and CLK-), the second spring plate transmits the second power signal (VDD 2), the seventh spring plate transmits the ground signal (VSS), and the eighth spring plate transmits the first power signal (VDD 1).

For example, when the information card identification method is applied to an electronic device that is compatible with the second NM card shown in FIG. 39, the second spring plate, the sixth spring plate, the ninth spring plate, and the tenth spring plate of the card connector transmit the data signals (RX+, RX-, TX+, and TX-), the first spring plate transmits the second power signal (VDD 2), the fourth spring plate and the fifth spring plate transmit the clock signals (CLK+ and CLK-), the seventh spring plate transmits the ground signal (VSS), and the eighth spring plate transmits the first power signal (VDD 1).

For example, when the information card identification method is applied to an electronic device that is compatible with the second NM card shown in FIG. 42, the first spring plate, the sixth spring plate, the ninth spring plate, and the tenth spring plate of the card connector transmit the data signals (RX+, RX-, TX+, and TX-), the second spring plate transmits the second power signal (VDD 2), the fourth spring plate and the fifth spring plate transmit the clock signals (CLK+ and CLK-), the seventh spring plate transmits the ground signal (VSS), and the eighth spring plate transmits the first power signal (VDD 1).

For example, when the information card identification method is applied to an electronic device that is compatible with the second NM card shown in FIG. 45 (for example, embodiments corresponding to FIG. 49 and FIG. 50), the third spring plate, the sixth spring plate, the ninth spring plate, and the tenth spring plate of the card connector transmit the data signals (RX+, RX-, TX+, and TX-), the fifth spring plate transmits the second power signal (VCCQ), the fourth spring plate transmits the reference clock signal (RCLK), the seventh spring plate transmits the ground signal (VSS), and the eighth spring plate transmits the first power signal (VCC). When the information card identification method is applied to an electronic device that is compatible with the second NM card shown in FIG. 45 (for example, embodiments corresponding to FIG. 46 and FIG. 47), the first spring plate, the fourth spring plate, the seventh spring plate, and the eighth spring plate of the card connector transmit the data signals (RX+, RX-, TX+, and TX-), the third spring plate transmits the second power signal (VCCQ), the second spring plate transmits the reference clock signal (RCLK), the fifth spring plate transmits the ground signal (VSS), and the sixth spring plate transmits the first power signal (VCC).

In some embodiments, when the information card identification method is applied to an electronic device that is compatible with the second NM card shown in FIG. 45, in the second NM card initialization procedure, the third spring plate of the card connector is controlled not to transmit the second power signal (VCCQ). For example, the third spring plate of the card connector may be controlled not to transmit a signal; or the third spring plate of the card connector is controlled to transmit an identification signal, and the identification signal is used to identify or assist in identifying whether the information card is a second NM card. After the information card is determined as a second NM card, the third spring plate of the card connector is controlled to transmit the second power signal (VCCQ).

In some embodiments, when the information card identification method is applied to an electronic device that is compatible with the second NM card and the nano-SIM card shown in FIG. 45, the first initialization procedure may be a SIM card initialization procedure, and the first card is a nano-SIM card; and the second initialization procedure may be a second NM card initialization procedure, and the second card is a second NM card.

In some embodiments, the information card identification method responds to powering-on of the electronic device or restart of the electronic device. The first initialization procedure may be a SIM card initialization procedure. In this embodiment, when the electronic device is powered on or the electronic device is restarted, in the information card identification method, the SIM card initialization procedure is first performed, to determine whether the information card is a nano-SIM card, so as to first enter a networked state. Certainly, in some other embodiments, when the information card identification method responds to powering-on of the electronic device or restart of the electronic device, in the information card identification method, a non-nano-SIM card initialization procedure may be first executed. This is not strictly limited in embodiments of this application.

In some embodiments, in the information card identification method, the first initiation procedure is executed in response to that it is detected that a state of a card tray is switched from a detached state to an inserted state, in other words, when it is detected that the state of the card tray is switched from the detached state to the inserted state. As shown in FIG. 3, the electronic device may detect, by using an insertion detection spring plate in a card holder assembly, whether the state of the card tray is the detached state or the inserted state.

In some other embodiments, in the information card identification method, whether the information card is a nano-SIM card, a first NM card, or a second NM card can be identified. The information card identification method may be applied to an electronic device that is compatible with the nano-SIM card, the first NM card, and the second NM card.

An information card identification method includes the following steps.

Step 001: Execute a first initialization procedure.

Step 002: If a first reply instruction is received, determine that an inserted information card is a first card; or if a first reply instruction is not received, determine that an inserted information card is not a first card, and execute a second initialization procedure.

Step 003: If a second reply instruction is received, determine that the inserted information card is a second card; or if a second reply instruction is not received, determine that the inserted information card is not a second card, and execute a third initialization procedure.

Step 004: If a third reply instruction is received, determine that the inserted information card is a third card; or if the third reply instruction is not received, determine that the inserted information card is not a third card.

A main difference between the information card identification method in this embodiment and the information card identification method in the foregoing embodiment lies in that, in step 003, when it is determined that the inserted information card is not the second card, in the information card identification method, the third initialization procedure continues to be executed, to determine whether the information card is the third card.

In some embodiments, in the first initialization procedure, the second initialization procedure, and the third initialization procedure, one is a SIM card initialization procedure, another is a first NM card initialization procedure, and the other is a second NM card initialization procedure. Correspondingly, in the first card, the second card, and the third card, one is a nano-SIM card, another is a first NM card, and the other is a second NM card.

In some embodiments, for the SIM card initialization procedure and the second NM card initialization procedure, refer to related descriptions of the information card identification method in the foregoing embodiments. In some embodiments, the first NM card initialization procedure may include: The interface controller is controlled to connect a first NM card controller and the card connector. A third spring plate, a sixth spring plate, a ninth spring plate, and a tenth spring plate of the card connector transmit data signals (DATA 0, DATA 1, DATA 2, and DATA 3), a fourth spring plate transmits a clock signal (CLK), a fifth spring plate transmits a command and response signal (CMD), a seventh spring plate transmits a ground signal (GND), and an eighth spring plate transmits a first power signal (VCC).

In some embodiments, when the information card identification method is applied to an electronic device that is compatible with the second NM card, the first NM card, and the nano-SIM card shown in FIG. 45, the third initialization procedure may be a second NM card initialization procedure, and the third card is a second NM card. The first initialization procedure may be a SIM card initialization procedure or a first NM card initialization procedure.

For other content of the information card identification method in this embodiment, refer to related descriptions of the information card identification method in the foregoing embodiments. Details are not described herein again.

The foregoing embodiments are merely used to describe the technical solutions of this application, but are not intended to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A memory card (5), comprising a card body (51) and a card interface (52), wherein the card interface (52) is fastened to the card body (51) and is exposed on a side of the card body (51), and a dimension of the card body (51) of the memory card (5) is the same as a dimension of a card body (31) of a nano-SIM card (3);
the card body (51) of the memory card (5) comprises a first edge (5111), a second edge (5112), a third edge (5113), and a fourth edge (5114), the first edge (5111) and the third edge (5113) are disposed opposite to each other and extend in a length direction of the memory card (5), the second edge (5112) and the fourth edge (5114) are disposed opposite to each other and extend in a width direction of the memory card (5), a spacing between the second edge (5112) and the fourth edge (5114) is greater than a spacing between the first edge (5111) and the third edge (5113), a corner of the card body (51) of the memory card (5) is a beveled edge, and the beveled edge is disposed between the first edge (5111) and the second edge (5112);
the card interface (52) comprises 10 gold fingers arranged in an array, the 10 gold fingers are arranged in a first column of gold fingers and a second column of gold fingers in the length direction of the memory card (5), the first column of gold fingers is located between the second edge (5112) and the second column of gold fingers, the first column of gold fingers comprises a first gold finger (521), a third gold finger (523), a fifth gold finger (525), a seventh gold finger (527), and a ninth gold finger (529) that are sequentially arranged in the width direction of the memory card (5), and the second column of gold fingers comprises a second gold finger (522), a fourth gold finger (524), a sixth gold finger (526), an eighth gold finger (528), and a tenth gold finger (5210) that are sequentially arranged in the width direction of the memory card (5); and
the first gold finger (521) is located between the first edge (5111) and the third gold finger (523), and the second gold finger (522) is located between the first edge (5111) and the fourth gold finger (524).

2. The memory card (5) according to claim 1, wherein the 10 gold fingers are arranged in a first row of gold fingers (521 and 522) to a fifth row of gold fingers (529 and 5210) in the width direction of the memory card (5);
a center spacing between a second row of gold fingers (523 and 524) and a third row of gold fingers (525 and 526) is greater than a center spacing between the first row of gold fingers (521 and 522) and the second row of gold fingers (523 and 524), and is greater than a center spacing between a fourth row of gold fingers (527 and 528) and the fifth row of gold fingers (529 and 5210); and
a center spacing between the third row of gold fingers (525 and 526) and the fourth row of gold fingers (527 and 528) is greater than the center spacing between the first row of gold fingers (521 and 522) and the second row of gold fingers (523 and 524), and is greater than the center spacing between the fourth row of gold fingers (527 and 528) and the fifth row of gold fingers (529 and 5210).

3. The memory card (5) according to claim 2, wherein the center spacing between the second row of gold fingers (523 and 524) and the third row of gold fingers (525 and 526) falls within a range of 1.5 mm to 2.8 mm, the center spacing between the third row of gold fingers (525 and 526) and the fourth row of gold fingers (527 and 528) falls within the range of 1.5 mm to 2.8 mm, and the center spacing between the first row of gold fingers (521 and 522) and the second row of gold fingers (523 and 524) falls within a range of 1.0 mm to 1.7 mm, and the center spacing between the fourth row of gold fingers (527 and 528) and the fifth row of gold fingers (529 and 5210) falls within the range of 1.0 mm to 1.7 mm.

4. The memory card (5) according to any one of claims 1 to 3, wherein
a location of the third gold finger (523) corresponds to a location of a first gold finger (321) of the nano-SIM card (3);
a location of the fourth gold finger (524) corresponds to a location of a second gold finger (322) of the nano-SIM card (3);
a location of the fifth gold finger (525) corresponds to a location of a third gold finger (323) of the nano-SIM card (3);
a location of the sixth gold finger (526) corresponds to a location of a fourth gold finger (324) of the nano-SIM card (3);
a location of the seventh gold finger (527) corresponds to a location of a fifth gold finger (325) of the nano-SIM card (3); and
a location of the eighth gold finger (528) corresponds to a location of a sixth gold finger (326) of the nano-SIM card (3).

5. The memory card (5) according to claim 4, wherein the memory card (5) and the nano-SIM card (3) are able to be installed in a same card holder assembly (10), and a card connector (11) of the card holder assembly (10) comprises a first spring plate (11a) to a tenth spring plate (11j) that are arranged in an array;
when the memory card (5) is installed in the card holder assembly (10), the third gold finger (523) is electrically connected to a third spring plate (11c) of the card connector (11), the fourth gold finger (524) is electrically connected to a fourth spring plate (11d) of the card connector (11), the fifth gold finger (525) is electrically connected to a fifth spring plate (11e) of the card connector (11), the sixth gold finger (526) is electrically connected to a sixth spring plate (11f) of the card connector (11), the seventh gold finger (527) is electrically connected to a seventh spring plate (11g) of the card connector (11), and the eighth gold finger (528) is electrically connected to an eighth spring plate (11h) of the card connector (11); and
when the nano-SIM card (3) is installed in the card holder assembly (10), the first gold finger (321) of the nano-SIM card (3) is electrically connected to the third spring plate (11c) of the card connector (11), the second gold finger (322) of the nano-SIM card (3) is electrically connected to the fourth spring plate (11d) of the card connector (11), the third gold finger (323) of the nano-SIM card (3) is electrically connected to the fifth spring plate (11e) of the card connector (11), the fourth gold finger (324) of the nano-SIM card (3) is electrically connected to the sixth spring plate (11f) of the card connector (11), the fifth gold finger (325) of the nano-SIM card (3) is electrically connected to the seventh spring plate (11g) of the card connector (11), and the sixth gold finger (326) of the nano-SIM card (3) is electrically connected to the eighth spring plate (11h) of the card connector (11).

6. The memory card (5) according to any one of claims 1 to 5, wherein the memory card (5) supports a UFS interface protocol; and
the first gold finger (521), the third gold finger (523), the ninth gold finger (529), and the tenth gold finger (5210) are configured to transmit data signals, the second gold finger (522) is configured to transmit a second power signal, the fourth gold finger (524) is configured to transmit a reference clock signal, the seventh gold finger (527) is configured to transmit a ground signal, and the eighth gold finger (528) is configured to transmit a first power signal.

7. The memory card (5) according to claim 6, wherein the fifth gold finger (525) and the sixth gold finger (526) are suspended; or at least one gold finger in the fifth gold finger (525) or the sixth gold finger (526) is configured to transmit a detection signal.

8. The memory card (5) according to any one of claims 1 to 5, wherein the memory card (5) supports a UFS interface protocol; and
the first gold finger (521), the fifth gold finger (525), the ninth gold finger (529), and the tenth gold finger (5210) are configured to transmit data signals, the second gold finger (522) is configured to transmit a second power signal, the fourth gold finger (524) is configured to transmit a reference clock signal, the seventh gold finger (527) is configured to transmit a ground signal, and the eighth gold finger (528) is configured to transmit a first power signal.

9. The memory card (5) according to claim 8, wherein the third gold finger (523) and the sixth gold finger (526) are suspended; or at least one gold finger in the third gold finger (523) or the sixth gold finger (526) is configured to transmit a detection signal.

10. The memory card (5) according to any one of claims 1 to 5, wherein the memory card (5) supports a UFS interface protocol; and
the first gold finger (521), the fifth gold finger (525), the ninth gold finger (529), and the tenth gold finger (5210) are configured to transmit data signals, the second gold finger (522) is configured to transmit a second power signal, the sixth gold finger (526) is configured to transmit a reference clock signal, the seventh gold finger (527) is configured to transmit a ground signal, and the eighth gold finger (528) is configured to transmit a first power signal.

11. The memory card (5) according to claim 10, wherein the third gold finger (523) and the fourth gold finger (524) are suspended; or at least one gold finger in the third gold finger (523) or the fourth gold finger (524) is configured to transmit a detection signal.

12. The memory card (5) according to any one of claims 6 to 11, wherein the memory card (5) is further provided with a high-voltage resistant circuit or a protection switch, and the high-voltage resistant circuit or the protection switch is electrically connected to the fourth gold finger (524) and the tenth gold finger (5210).

13. The memory card (5) according to any one of claims 1 to 5, wherein the memory card (5) supports a PCIe interface protocol or an SD interface protocol;
the third gold finger (523), the sixth gold finger (526), the ninth gold finger (529), and the tenth gold finger (5210) are configured to transmit data signals, the first gold finger (521) is configured to transmit a second power signal, the seventh gold finger (527) is configured to transmit a ground signal, and the eighth gold finger (528) is configured to transmit a first power signal; and
the fifth gold finger (525) is configured to transmit a clock signal, and one of the second gold finger (522) and the fourth gold finger (524) is configured to transmit a clock signal.

14. The memory card (5) according to claim 13, wherein the other one of the second gold finger (522) and the fourth gold finger (524) is suspended or is configured to transmit a detection signal.

15. The memory card (5) according to claim 13 or 14, wherein the memory card (5) is further provided with a high-voltage resistant circuit or a protection switch, and the high-voltage resistant circuit or the protection switch is electrically connected to the third gold finger (523) and the tenth gold finger (5210).

16. The memory card (5) according to any one of claims 1 to 5, wherein the memory card (5) supports a PCIe interface protocol or an SD interface protocol;
the third gold finger (523), the sixth gold finger (526), the ninth gold finger (529), and the tenth gold finger (5210) are configured to transmit data signals, the second gold finger (522) is configured to transmit a second power signal, the seventh gold finger (527) is configured to transmit a ground signal, and the eighth gold finger (528) is configured to transmit a first power signal; and
the fifth gold finger (525) is configured to transmit a clock signal, and one of the first gold finger (521) and the fourth gold finger (524) is configured to transmit a clock signal.

17. The memory card (5) according to claim 16, wherein the other one of the first gold finger (521) and the fourth gold finger (524) is suspended or is configured to transmit a detection signal.

18. The memory card (5) according to any one of claims 1 to 5, wherein the memory card (5) supports a PCIe interface protocol or an SD interface protocol;
the sixth gold finger (526), the ninth gold finger (529), and the tenth gold finger (5210) are configured to transmit data signals, one of the first gold finger (521) and the second gold finger (522) is configured to transmit a second power signal, and the other one is configured to transmit a data signal;
the seventh gold finger (527) is configured to transmit a ground signal, and the eighth gold finger (528) is configured to transmit a first power signal; and
the fifth gold finger (525) is configured to transmit a clock signal, and one of the third gold finger (523) and the fourth gold finger (524) is configured to transmit a clock signal.

19. The memory card (5) according to claim 18, wherein the other one of the third gold finger (523) and the fourth gold finger (524) is suspended or configured to transmit a detection signal.

20. A memory card (6), comprising a card body (61) and a card interface (62), wherein the card interface (62) is fastened to the card body (61) and is exposed on a side of the card body (61), and a dimension of the card body (61) is the same as a dimension of a card body (31) of a nano-SIM card (3);
the card body (61) of the memory card (6) comprises a first edge (6111), a second edge (6112), a third edge (6113), and a fourth edge (6114), the first edge (6111) and the third edge (6113) are disposed opposite to each other and extend in a length direction of the memory card (6), the second edge (6112) and the fourth edge (6114) are disposed opposite to each other and extend in a width direction of the memory card (6), and a spacing between the second edge (6112) and the fourth edge (6114) is greater than a spacing between the first edge (6111) and the third edge (6113);
a corner of the card body (61) of the memory card (6) is a beveled edge, and the beveled edge is disposed between the first edge (6111) and the second edge (6112);
the card interface (62) comprises eight gold fingers arranged in an array, the eight gold fingers are arranged in a first column of gold fingers and a second column of gold fingers in the length direction of the memory card (6), the first column of gold fingers is located between the second edge (6112) and the second column of gold fingers, the first column of gold fingers comprises a first gold finger (621), a third gold finger (623), a fifth gold finger (625), and a seventh gold finger (627) that are arranged in the width direction of the memory card (6), the second column of gold fingers comprises a second gold finger (622), a fourth gold finger (624), a sixth gold finger (626), and an eighth gold finger (628) that are arranged in the width direction of the memory card (6), the first gold finger (621) is located between the first edge (6111) and the third gold finger (623), and the second gold finger (622) is located between the first edge (6111) and the fourth gold finger (624);
locations of the first gold finger (621) to the sixth gold finger (626) correspond to locations of six gold fingers of the nano-SIM card (3) in a one-to-one correspondence;
the memory card (6) supports a UFS interface protocol; and
the first gold finger (621), the fourth gold finger (624), the seventh gold finger (627), and the eighth gold finger (628) are configured to transmit data signals, the second gold finger (622) is configured to transmit a reference clock signal, the third gold finger (623) is configured to transmit a second power signal, the fifth gold finger (625) is configured to transmit a ground signal, and the sixth gold finger (626) is configured to transmit a first power signal.

21. The memory card (5/6) according to any one of claims 1 to 20, wherein the spacing between the first edge (5111/6111) and the third edge (5113/6113) is 8.8 millimeters, and the spacing between the second edge (5112/6112) and the fourth edge (5114/6114) is 12.3 millimeters.
